# EUROPEAN PATENT APPLICATION

(11) **EP 4 503 559 A1**
(43) Date of publication of application: **05.02.2025**
(21) Application number: 22933972.6
(22) Date of filing: 28.03.2022
(51) Int. Cl.: H04L 45/74

(54) **WIRELESS COMMUNICATION METHODS AND DEVICE**

(71) Applicant: GUANGDONG OPPO MOBILE TELECOMMUNICATIONS CORP., LTD., Dongguan, Guangdong 523860 (CN)
(72) Inventor: ZHU, Hui, Dongguan, Guangdong 523860 (CN); LUO, Chaoming, Dongguan, Guangdong 523860 (CN); HUANG, Lei, 049483 Singapore (SG); DU, Xiaoxin, Dongguan, Guangdong 523860 (CN); YANG, Huimin, Dongguan, Guangdong 523860 (CN); ZHANG, Xuan, Dongguan, Guangdong 523860 (CN)
(74) Representative: RGTH
(86) International application number: PCT/CN2022/083492
(87) International publication number: WO 2023/184115

(57) **Abstract**

Provided in the embodiments of the present application are wireless communication methods, and a device. In a wireless local area network, an STA autonomously updates an OTA MAC address at any time. The STA can actively update the OTA MAC at any time, and a method for protecting an SA and/or a DA is provided, so that the privacy of the STA MAC address can be better protected. During STA access authentication, an AP and the STA derive from shared secret information (such as PTK, etc.) a secret value as an initial vector by using the same rule, and then during a communication process, the STA can autonomously update the OTA MAC address at any time by using the initial vector. Thus, without a need to notify the AP by means of the overhead of other frames, the AP can identify the OTA MAC address and determine same to be identifiable.

## Description

### TECHNICAL FIELD

Embodiments of the present application relate to the field of communication, and more specifically, to a method and device for wireless communication.

### BACKGROUND

A station (STA) carries its own Media Access Control (MAC) address in a frame transmitted to an access point (AP), as an identity identification of the STA itself. However, since MAC addresses of devices are globally unique and unchanged permanently, a network attacker tracks a user easily by tracking the MAC address of the STA, causing a large amount of privacy information of the user to be exposed to the network.

### SUMMARY

The embodiments of the present application provide a method and device for wireless communication, and a STA can actively update an OTA (over-the-air) MAC address at any time, thereby better protecting the privacy of the MAC address of the STA.

In a first aspect, a method for wireless communication is provided, and the method includes:
generating, by a first station (STA), a first over-the-air (OTA) media access control (MAC) address according to a first secret value and a current OTA MAC address, where the first OTA MAC address does not belong to M OTA MAC addresses indicated by a first access point (AP), the M OTA MAC addresses are OTA MAC addresses that conflict with an OTA MAC address in an OTA MAC address list maintained by the first AP, and the first secret value is derived based on secret information shared between the first STA and the first AP, M is an integer, and M≥0;
transmitting, by the first STA, a first frame to the first AP by using the first OTA MAC address, where the first frame is a management frame or a control frame, or the first frame is a data frame.

In a second aspect, a method for wireless communication is provided, and the method includes:
receiving, by a first AP, a first frame transmitted by a STA using a first OTA MAC address;
finding, by the first AP, the first OTA MAC address in n OTA MAC addresses of the first STA included in an OTA MAC address list maintained by the first AP; where the OTA MAC address list includes at least one OTA MAC address of at least one STA associated with the first AP, and the at least one STA includes the first STA, and n is a positive integer;
in a case where the first AP has found the first OTA MAC address in the OTA MAC address list, continuing to process, by the first AP, the first frame; otherwise, discarding the first frame.

In a third aspect, a method for wireless communication is provided, and the method includes:
receiving, by a second AP, a fourth frame transmitted by a first AP;
where a TA in the fourth frame is a MAC address of the first AP, an RA in the fourth frame is a MAC address of the second AP, values of an Address3 field and an Address4 field of the fourth frame are all zeros, or the values of the Address3 field and the Address4 field of the fourth frame are all random numbers;
where first m₁ octets of 2m₁ octets just before the end of the frame body of the fourth frame carry a permanent MAC address of a second STA, and last m₁ octets of the 2m₁ octets just before the end of the frame body of the fourth frame carry a permanent MAC address of a first STA, and m₁ is a positive integer.

In a fourth aspect, a method for wireless communication is provided, and the method includes:
receiving, by a second AP, a sixth frame transmitted by a first AP;
where a TA in the sixth frame is a MAC address of the first AP, an RA in the sixth frame is a MAC address of the second AP, values of an Address3 field and an Address4 field of the sixth frame are all zeros, or the values of the Address3 field and the Address4 field of the sixth frame are all random numbers;
where the header of the frame body of the sixth frame includes an Address Element field, a control field in the Address Element field includes an SA Present field and a DA Present field, a value of the SA Present field is used to indicate that there is an SA field for indicating an SA in the Address Element field, a value of the DA Present field is used to indicate that there is a DA field for indicating a DA in the Address Element field, the SA is a permanent MAC address of a first STA, and the DA is a permanent MAC address of a second STA.

In a fifth aspect, a STA is provided for performing the method in the above-mentioned first aspect.

Specifically, the STA includes a functional module for performing the method in the above-mentioned first aspect.

In a sixth aspect, an AP is provided for performing the method in the above-mentioned second aspect.

Specifically, the AP includes a functional module for performing the method in the above-mentioned second aspect.

In a seventh aspect, an AP is provided for performing the method in the above-mentioned third aspect.

Specifically, the AP includes a functional module for performing the method in the above-mentioned third aspect.

In an eighth aspect, an AP is provided for performing the method in the above-mentioned fourth aspect.

Specifically, the AP includes a functional module for performing the method in the above-mentioned fourth aspect.

In a ninth aspect, a STA is provided, the STA includes a processor and a memory; the memory is configured to store a computer program, and the processor is configured to invoke and execute the computer program stored in the memory, to cause the STA to perform the method in the above-mentioned first aspect.

In a tenth aspect, an AP is provided, the AP includes a processor and a memory; the memory is configured to store a computer program, and the processor is configured to invoke and execute the computer program stored in the memory, to cause the AP to perform the method in the above-mentioned second aspect.

In an eleventh aspect, an AP is provided, the AP includes a processor and a memory; the memory is configured to store a computer program, and the processor is configured to invoke and execute the computer program stored in the memory, to cause the AP to perform the method in the above-mentioned third aspect.

In a twelfth aspect, a AP is provided, the AP includes a processor and a memory; the memory is configured to store a computer program, and the processor is configured to invoke and execute the computer program stored in the memory, to cause the AP to perform the method in the above-mentioned fourth aspect.

In a thirteenth aspect, an apparatus is provided for implementing the method in any one of the first aspect to the fourth aspect mentioned above.

Specifically, the apparatus includes: a processor, configured to invoke and execute a computer program from a memory, to cause a device equipped with the apparatus to perform the method in any one of the first aspect to the fourth aspect mentioned above.

In a fourteenth aspect, a computer readable storage medium is provided for storing a computer program, the computer program causes a computer to perform the method in any one of the first aspect to the fourth aspect mentioned above.

In a fifteenth aspect, a computer program product is provided, the computer program product includes computer program instructions, and the computer program instructions cause a computer to perform the method in any one of the first aspect to the fourth aspect mentioned above.

In a sixteenth aspect, a computer program is provided, and the computer program, when being executed on a computer, causes a computer to perform the method in any one of the first aspect to the fourth aspect mentioned above.

Through the technical solution of the above-mentioned first aspect, the first STA generates a first OTA MAC address according to a first secret value and a current OTA MAC address; where the first OTA MAC address does not belong to M OTA MAC addresses indicated by a first AP, the M OTA MAC addresses are OTA MAC addresses that conflict with an OTA MAC address in an OTA MAC address list maintained by the first AP, and the first secret value is derived based on secret information shared between the first STA and the first AP, M is an integer, and M≥0; and the first STA transmits a first frame to the first AP by using the first OTA MAC address, where the first frame is a management frame or a control frame, or the first frame is a data frame. That is, the first STA can actively update the OTA MAC address at any time, thereby better protecting the privacy of the MAC address of the first STA, and the OTA MAC address list maintained by the first AP includes the OTA MAC address that the first STA is allowed to use currently and the OTA MAC address that the first STA is allowed to use in a future period of time, and then, the first AP can identify the OTA MAC address updated by the first STA based on the OTA MAC address list, and can efficiently complete an identity identifying process after the OTA MAC address is changed.

Through the technical solution of the above-mentioned second aspect, the first AP receives the first frame transmitted by the first STA using the first OTA MAC address; and the first AP finds the first OTA MAC address in n OTA MAC addresses of the first STA included in the OTA MAC address list maintained by the first AP; where the OTA MAC address list includes at least one OTA MAC address of at least one STA associated with the first AP, and the at least one STA includes the first STA, and n is a positive integer; in a case where the first AP has found the first OTA MAC address in the OTA MAC address list, the first AP continues to process the first frame; otherwise, the first AP discards the first frame. That is, the first STA can actively update the OTA MAC address at any time, thereby better protecting the privacy of the MAC address of the first STA, and the OTA MAC address list maintained by the first AP includes the OTA MAC address that the first STA is allowed to use currently and the OTA MAC address that the first STA is allowed to use in a future period of time, and then, the first AP can identify the OTA MAC address updated by the first STA based on the OTA MAC address list, and can efficiently complete an identity identifying process after the OTA MAC address is changed.

Through the technical solution of the above-mentioned third aspect, a second AP receives a fourth frame transmitted by the first AP; where a TA in the fourth frame is a MAC address of the first AP, an RA in the fourth frame is a MAC address of the second AP, values of an Address3 field and an Address4 field of the fourth frame are all zeros, or the values of the Address3 field and the Address4 field of the fourth frame are all random numbers; where first m₁ octets of 2m₁ octets just before the end of the frame body of the fourth frame carry a permanent MAC address of a second STA, and last m₁ octets of the 2m₁ octets just before the end of the frame body of the fourth frame carry a permanent MAC address of a first STA, and m₁ is a positive integer. That is, the first AP may insert the permanent MAC address of a target STA (the second STA) into the first m₁ octets of the 2m₁ octets just before the end of the frame body of the frame transmitted by the first AP, and insert the permanent MAC address of a source STA (the first STA) into the last m₁ octets of the 2m₁ octets just before the end of the frame body, thereby protecting the privacy of the permanent MAC addresses.

Through the technical solution of the above-mentioned fourth aspect, the second AP receives a sixth frame transmitted by the first AP; where a TA in the sixth frame is the MAC address of the first AP, an RA in the sixth frame is the MAC address of the second AP, values of an Address3 field and an Address4 field of the sixth frame are all zeros, or the values of the Address3 field and the Address4 field of the sixth frame are all random numbers; where the header of the frame body of the sixth frame includes an Address Element field, a control field in the Address Element field includes an SA Present field and a DA Present field, a value of the SA Present field is used to indicate that there is an SA field for indicating an SA in the Address Element field, a value of the DA Present field is used to indicate that there is a DA field for indicating a DA in the Address Element field, the SA is the permanent MAC address of the first STA, and the DA is the permanent MAC address of the second STA. That is, the first AP may insert the permanent MAC address of the source STA (the first STA) and the permanent MAC address of the target STA (the second STA) into the Address Element field included in the header of the frame body of the frame transmitted by the first AP, thereby protecting the privacy of the permanent MAC addresses.

### BRIEF DESCRIPTION OF THE DRAWINGS

FIG. 1 is a schematic diagram of a communication system architecture applied in the embodiments of the present application.
FIG. 2 is a schematic flowchart of a method for wireless communication provided according to the embodiments of the present application.
FIG. 3 is a schematic flowchart of generating an OTA MAC address provided according to the embodiments of the present application.
FIG. 4 is a schematic flowchart of updating an OTA MAC address provided according to the embodiments of the present application.
FIG. 5 is a schematic diagram of a first management frame provided according to the embodiments of the present application.
FIG. 6 is a schematic flowchart of an access phase of a first STA accessing a first AP provided according to the embodiments of the present application.
FIG. 7 is a schematic flowchart of another access phase of a first STA accessing a first AP provided according to the embodiments of the present application.
FIG. 8 is a schematic diagram of a first frame provided according to the embodiments of the present application.
FIG. 9 is a schematic diagram of another first frame provided according to the embodiments of the present application.
FIG. 10 is a schematic diagram of interaction of a management frame or a control frame between a first STA and a first AP provided according to the embodiments of the present application.
FIG. 11 is a schematic flowchart of another method for wireless communication provided according to the embodiments of the present application.
FIG. 12 to FIG. 15 are schematic flowcharts of transmitting a data frame from STA1 to STA2 provided according to the embodiments of the present application, respectively.
FIG. 16 is a schematic flowchart of yet another method for wireless communication provided according to the embodiments of the present application.
FIG. 17 is a schematic flowchart of yet another method for wireless communication provided according to the embodiments of the present application.
FIG. 18 is a schematic block diagram of a STA provided according to the embodiments of the present application.
FIG. 19 is a schematic block diagram of an AP provided according to the embodiments of the present application.
FIG. 20 is a schematic block diagram of another AP provided according to the embodiments of the present application.
FIG. 21 is a schematic block diagram of yet another AP provided according to the embodiments of the present application.
FIG. 22 is a schematic block diagram of a communication device provided according to the embodiments of the present application.
FIG. 23 is a schematic block diagram of an apparatus provided according to the embodiments of the present application.
FIG. 24 is a schematic block diagram of a communication system provided according to the embodiments of the present application.
FIG. 25 is a schematic block diagram of another communication system provided according to the embodiments of the present application.

### DETAILED DESCRIPTION

The technical solutions in the embodiments of the present application will be described in conjunction with the drawings in the embodiments of the present application, and apparently, the described embodiments are a part of the embodiments of the present application, but not all the embodiments. For the embodiments in the present application, all other embodiments obtained by the ordinary skilled in the art without paying any creative effort belong to the protection scope of the present application.

The technical solutions of the embodiments of the present application may be applied to various communication systems, such as: wireless local area networks (Wireless Local Area Networks, WLAN), wireless fidelity (Wireless Fidelity, WiFi) or other communication systems, etc.

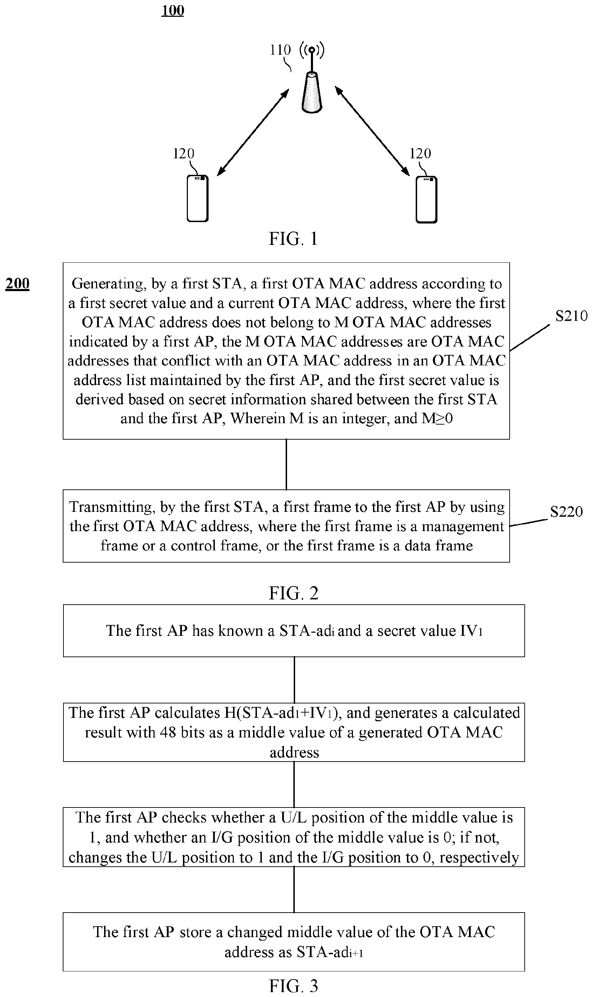

Exemplarily, a communication system 100 applied in the embodiments of the present application is shown in FIG. 1. The communication system 100 may include an access point (AP) 110, and stations (STAs) 120 that access the network via the AP 110.

In some scenarios, the AP may be also referred to as an AP STA, that is, in a certain sense, the AP is also a kind of STA. In some scenarios, the STA is also referred to as a non-AP STA.

In some embodiments, the STA may include the AP STA and the non-AP STA.

The communication in the communication system 100 may be a communication between an AP and a STA, communication between STAs, or communication between a STA and another STA (i.e., peer STA), where the peer STA may refer to a device in a peer communication with the STA, for example, the peer STA may be an AP or a non-AP STA.

The AP is equivalent to a bridge connecting the wired network and the wireless network, and a main function of the AP is to connect various wireless network clients together and then access the wireless network to the Ethernet. The AP device may be a terminal device with a WiFi chip (such as a mobile phone) or a network device (such as a router).

It should be understood that the role of the STA in the communication system is not absolute. For example, in some scenarios, when a mobile phone is connected to a router, the mobile phone is the STA, and when the mobile phone is used as a hotspot for other mobile phones, the mobile phone acts as the AP.

The AP and the STA may be devices applied in the Vehicle to Everything; IoT nodes, sensors, etc, in the Internet of Things (IoT); smart cameras, smart remote controls, smart water meters and electricity meters, etc, in smart homes; and sensors, etc, in smart cities.

In some embodiments, the STA may support an 802.11be standard. The STA may also support various WLAN standards of the current and future 802.11 family, such as 802.11ax, 802.11ac, 802.11n, 802.11g, 802.11b and 802.11a, etc.

In some embodiments, the AP may be a device supporting the 802.11be standard. The AP may also be a device supporting various WLAN standards of the current and future 802.11 family, such as 802.11ax, 802.11ac, 802.11n, 802.11g, 802.11b, and 802.11a, etc.

In some embodiments, the AP 110 and/or the STAs 120 may be deployed on the land, including indoors or outdoors, may be handheld, wearable, or in-vehicle; may also be deployed on the water (such as a ship); and may also be deployed in the air (for example, on an airplane, balloon, or satellite, etc.).

In the embodiments of the present application, the STA 120 may be a mobile phone, a pad, a computer with a wireless transceiver function, a virtual reality (VR) device, an augmented reality (AR) device, a wireless device in the industrial control, a set-top box, a wireless device in the self-driving, an in-vehicle communication device, a wireless device in the remote medical, a wireless device in a smart grid, a wireless device in the transportation safety, a wireless device in a smart city or a wireless device in a smart home, an in-vehicle communication device, a wireless communication chip/application specific integrated circuit (ASIC)/system on chip (SoC), or the like, which support the WLAN/WiFi technology.

As an example but not a limitation, in the embodiments of the present application, the STA 120 may also be a wearable device. The wearable device, which is also referred to as a wearable smart device, is a generic term for a device that can be worn, into which the daily wear is intelligently designed and developed by applying wearable technologies, such as glasses, gloves, watches, clothing, and shoes, etc. The wearable device is a portable device that is worn directly on the body, or integrated into the user's clothing or accessories. The wearable device is not just a hardware device, but also achieves powerful functions through software supporting, data interaction, and cloud interaction. A generalized wearable smart device includes for example, a smart watch or smart glasses, etc., with full functions, large size, and entire or partial functions without relying on a smartphone, as well as, for example, a smart bracelet and smart jewelry for physical sign monitoring, which only focuses on a certain type of application function and needs to be used in conjunction with other devices such as a smartphone.

Frequency bands that the WLAN technology may support may include, but are not limited to: low frequency bands (2.4 GHz, 5 GHz, 6 GHz), high frequency bands (60 GHz).

FIG. 1 exemplarily shows one AP and two STAs. In some embodiments, the communication system 100 may include multiple APs and other number of STAs, which is not limited in the embodiments of the present application.

It should be understood that a device with a communication function in the network/system in the embodiments of the present application may be referred to as a communication device. Taking the communication system 100 shown in FIG. 1 as an example, the communication devices may include an AP 110 and STAs 120 with the communication function. The AP 110 and the STAs 120 may be specific devices described above and will not be repeated here. The communication devices may also include other devices in the communication system 100, such as a network controller, a gateway and other network entities, which are not limited to the embodiments of the present application.

It should be understood that terms herein "system" and "network" are often used interchangeably herein. The term "and/or" herein is only an association relationship to describe associated objects, indicating that there may be three relationships, for example, "A and/or B" may indicate three cases of: A alone, both A and B, and B alone. In addition, the character "/" herein generally indicates that associated objects before and after this character are in an "or" relationship.

It should be understood that the "indication" mentioned in the embodiments of the present application may be a direct indication or an indirect indication, or may represent that there is an association relationship. For example, A indicating B may mean that A directly indicates B, e.g., that B may be obtained by A; or it may mean that A indirectly indicates B, e.g., that A indicates C, and B may be obtained by C; or it may mean that there is an association relationship between A and B.

The terms used in the implementation parts of the present application are only used to explain the specific embodiments of the present application, but are not intended to limit the present application. The terms "first", "second", "third" and "fourth" etc., in the description, claims, and drawings of the present application are used to distinguish different objects, rather than to describe a specific order. In addition, the terms "include/includes/included/including", "comprise/comprises/comprised/comprising" and "have/has/had/having" and any variations thereof, are intended to cover a non-exclusive inclusion.

In the description of the embodiments of the present application, the term "corresponding" may mean a direct or indirect corresponding relationship between the two, or an association relationship between the two, or a relationship of indicating and being indicated, or configuring and being configured, etc.

In the embodiments of the present application, "predefined" or "pre-configured" may be implemented by pre-saving corresponding codes, tables or other manners that may be used for indicating related information, in the device (for example, including the STA and the network device), and the present application does not limit its specific implementation. For example, the predefined may mean defined in a protocol.

In the embodiments of the present application, the "protocol" may refer to a standard protocol in the field of communication, which may include, for example, a WiFi protocol, and related protocols applied in the future WiFi communication system, which is not limited in the present application.

In order to facilitate the understanding of technical solutions of the embodiments of the present application, the technical solutions of the present application are described in detail below through specific embodiments. The following related technologies, as optional solutions, may be randomly combined with the technical solutions of the embodiments of the present application, which all belong to the protection scope of the embodiments of the present application. The embodiments of the present application include at least some of the following contents.

Wireless devices support the multi-band communication, for example, communicate simultaneously on bands of 2.4 GHz, 5 GHz, 6 GHz, and 60 GHz, or communicate simultaneously on different channels on a same band (or different bands), to improve the throughput and/or reliability of the communication between the devices. Such a device is usually referred to as a multi-band device, or a multi-link device (MLD), and sometimes is also referred to as a multi-link entity or a multi-band entity. The multi-link device may be an access point device or a station device. If the multi-link device is an access point device, the multi-link device includes one or more APs; if the multi-link device is a station device, the multi-link device includes one or more non-AP STAs.

In order to facilitate the understanding of the technical solutions of the embodiments of the present application, relevant technical solutions of the present application and existing problems are described below.

Currently, in the wireless local area networks, in order to implement the privacy protection of a media access control (MAC) address, a random MAC address is used in a data frame exchanged between a station (STA) and a wireless access point (AP), to provide the privacy for the wireless transmission. The AP may identify a MAC address used for an over-the-air (OTA) transmission and a permanent MAC address used for a backend communication, and secretly transmit the OTA MAC address and the permanent MAC address to the STA. However, the STA cannot change the OTA MAC address independently, and the fixed permanent MAC address makes it easy to be tracked by an attacker and then associated with a user.

Based on the above problems, the present application proposes a scheme to protect the privacy of the MAC address, where the STA can actively update the OTA MAC address at any time, thereby better protecting the privacy of the MAC address of the STA. Specifically, for a current situation of the insufficient privacy protection technology of the MAC address in the WLAN, a two-layer based MAC mechanism is introduced: an OTA MAC address (dynamically changing, a transmission address (TA)/a receiving address (RA) for the communication) and a permanent MAC address (unchanging, a source address (SA)/a destination address (DA) for authentication and identity identification), and a synchronous random changing mechanism of the MAC address is proposed to ensure the efficient and security of synchronization. The present application aims to ensure that under the premise of ensuring the privacy of the MAC address in the WLAN, the STA updates the OTA MAC address independently, the AP can automatically identify the OTA MAC address updated by the STA, and the permanent MAC address of the STA is placed into a frame body of a data frame (for example, placed at the end of the frame body or immediately following a Counter mode with Cypher Block Chaining Message Authentication Code protocol (CTR with CBC-MAC protocol, CCMP) header or a Galois/Counter Mode protocol (GCMP) header, etc.), thereby avoiding the problem of privacy leakage caused by the fixed permanent MAC address of the STA. A specific value is set in a reserved field of the frame header, to indicate to the AP that the AP needs to decrypt an actual permanent MAC in the frame body of this frame (for example, values of an address (Address3) field in the frame header is set to all zeros, or any bit of the first 4 bits of the fourth octet or any bit of the third octet reserved in the CCMP header or GCMP header is used, to indicate that the AP needs to decrypt the actual permanent MAC in the frame body of this frame, for example, the value of the fourth bit of the fourth octet of the CCMP header or GCMP header may be set to 1, to indicate that the AP needs to decrypt the actual permanent MAC in the frame body of this frame). When the STA associates with the AP, the permanent MAC address is used for security association between the STA and the AP. The STA uses the permanent MAC address to calculate a key and a cypher identifier during the security association, such as a pairwise transient key (PTK), a pairwise master key identifier (PMKID), etc. There is no relation between a pairwise master key security association (PMKSA) and the OTA MAC of the STA, so the STA may have multiple OTA MAC addresses, thereby enabling to update the OTA MAC address of the STA independently at any time.

The technical solutions of the present application are described in detail below through specific embodiments.

FIG. 2 is a schematic flowchart of a method 200 for wireless communication according to the embodiments of the present application. As shown in FIG. 2, the method 200 for wireless communication may include at least a portion of the following contents:
S210, generating, by a first STA, a first OTA media access control (MAC) address according to a first secret value and a current OTA MAC address, where the first OTA MAC address does not belong to M OTA MAC addresses indicated by a first AP, the M OTA MAC addresses are OTA MAC addresses that conflict with an OTA MAC address in an OTA MAC address list maintained by the first AP, and the first secret value is derived based on secret information shared between the first STA and the first AP, M is an integer, and M≥0; and
S220, transmitting, by the first STA, a first frame to the first AP by using the first OTA MAC address, where the first frame is a management frame or a control frame, or the first frame is a data frame.

In some embodiments, the OTA MAC address list maintained by the first AP includes n OTA MAC addresses of the first STA, n is a positive integer, and the n OTA MAC addresses are OTA MAC addresses that the first STA uses currently and OTA MAC addresses that the first STA is allowed to use in a future period of time, where the future period of time is agreed by a protocol, or the future period of time is configured by the first AP. Furthermore, the OTA MAC address list maintained by the first AP includes at least one OTA MAC address of at least one STA associated with the first AP, and the at least one STA includes the first STA. Optionally, numbers of OTA MAC addresses of different STAs of the at least one STA, included in the OTA MAC address list may be the same or different, which are not limited in the embodiments of the present application.

It should be noted that the current OTA MAC address is an OTA MAC address that the first STA is allowed to use currently, and does not belong to the MOTA MAC addresses indicated by the first AP.

In the embodiments of the present application, the first STA generates the first OTA MAC address according to the first secret value and the current OTA MAC address, that is, the first STA can actively update the OTA MAC address at any time, thereby better protecting the privacy of the MAC address of the first STA, and the OTA MAC address list maintained by the first AP includes the OTA MAC addresses that the first STA is allowed to use currently and the OTA MAC addresses that the first STA is allowed to use in the future period of time, and then the first AP can identify the OTA MAC address updated by the first STA based on the OTA MAC address list, and can efficiently complete the identity identification process after the OTA MAC address is changed.

In the embodiments of the present application, the "field" may also be referred to as a "domain/field" or a "subfield".

In the embodiments of the present application, the M OTA MAC addresses may also be understood as conflicting OTA MAC addresses corresponding to the first STA. For example, the M OTA MAC addresses conflict with the OTA MAC address in the OTA MAC address list, or the M OTA MAC addresses conflict with OTA MAC addresses of other STAs in the OTA MAC address list.

In some embodiments, the MOTA MAC addresses may be all OTA MAC addresses that are generated in the process in which the first AP generates the n OTA MAC addresses of the first STA in the OTA MAC address list, and that conflict with other OTA MAC addresses in the OTA MAC address list (i.e., conflicting OTA MAC addresses or illegal OTA MAC addresses).

In some embodiments, the secret information shared between the first STA and the first AP includes, but is not limited to one of:
a PTK, or partial information of the PTK.

In the embodiments of the present application, when the first STA performs access authentication, the first AP and the first STA use the same rule to derive a secret value IV₁ (i.e., a first secret value) as an initial vector from the shared secret information (e.g., the PTK). Specifically, the secret information is not limited to using the PTK, and other secret information may also be used. The method for deriving the secret value is to, for example, use a standard Hash algorithm SHA-256 to hash the PTK, or use a standard Hash algorithm SHA-256 to hash last 128 bits of the PTK. It can be seen that as long as the first AP and the first STA derive from the secret information based on the same rule, the derivation method is not limited to the illustrated methods. The first AP binds the initial vector (i.e., the secret value IV₁) to an identity of the first STA. Optionally, each column of the OTA MAC address list (see Table 1 below) maintained by the first AP is n OTA MAC addresses of one STA. Since a time when the STA updates the OTA MAC address can not be determined, the OTA MAC address list stores OTA MAC addresses used by the STA currently and in the future period of time, i.e., a total of n OTA MAC addresses. After the first AP generates OTA MAC addresses that the first STA may use in the future period of time, the first AP checks the generated OTA MAC addresses. If the generated OTA MAC addresses conflict with other OTA MAC addresses in the OTA MAC address list, the generated OTA MAC addresses are determined to be conflicting OTA MAC addresses, and the first AP informs the first STA about the conflicting OTA MAC addresses, by transmitting a management frame or in a last frame of a four-way handshake (the number of the conflicting OTA MAC addresses may be one or more), and the first AP stores the non-conflicting OTA MAC addresses into the maintained OTA MAC address list, and then uses the last OTA MAC address to generate a sufficient number of OTA MAC addresses and keeps on checking the generated OTA MAC addresses, until n non-conflicting OTA MAC addresses are filled fully.

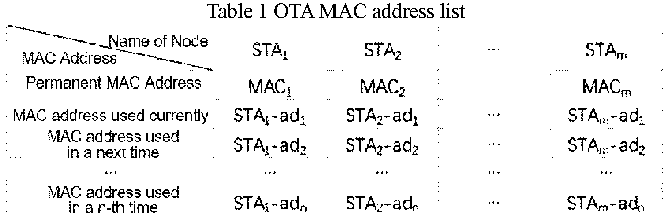

Specifically, as shown in Table 1, a first OTA MAC address stored in each column of the OTA MAC address list is an OTA MAC address currently used by the STA, that is, STA-ad₁. A (i+1)-th OTA MAC address STA-adᵢ₊₁ is obtained by calculating the secret value IV₁ and STA-adᵢ (i.e., IV₁ + STA-adᵢ). A specific calculation method is: for a string "IV₁+ STA-adᵢ" of the initial vector IV₁ and the i-th address in the OTA MAC address list, using any standard Hash algorithm H (such as SHA-1, MD5, etc.) to hash the string, and using any generation function for the calculated result to obtain 48 bits as a new OTA MAC address, and checking whether a U/L bit of the new OTA MAC address is 1 and whether an I/G bit of the new OTA MAC address is 0; if not, changing the U/L bit to 1 and change the I/G bit to 0, respectively, which indicates that the OTA MAC address is a locally administered and unicast address. The above final result is used as the (i+1)-th OTA MAC address STA-adᵢ₊₁, as shown in FIG. 3. Since the attacker cannot know the shared secret value IV₁ between the first AP and the STA, the attacker cannot calculate the subsequent OTA MAC address value.

In some embodiments, the above S210 may specifically include:
generating, by the first STA, a new OTA MAC address according to the first secret value and the current OTA MAC address;
in a case where the new OTA MAC address does not belong to the M OTA MAC addresses, determining, by the first STA, the new OTA MAC address as the first OTA MAC address;
in a case where the new OTA MAC address belongs to the MOTA MAC addresses, generating, by the first STA, a next OTA MAC address according to the new OTA MAC address and the first secret value, until a generated OTA MAC address does not belong to the MOTA MAC addresses, and determining, by the first STA, the generated OTA MAC address that does not belong to the MOTA MAC addresses as the first OTA MAC address.

In some embodiments, after the first AP receives the first frame transmitted by the first STA using the first OTA MAC address, the first AP finds the first OTA MAC address in the n OTA MAC addresses of the first STA included in the OTA MAC address list maintained by the first AP. In a case where the first AP has found the first OTA MAC address in the OTA MAC address list, the first AP continues to process the first frame; otherwise, the first AP discards the first frame. That is, in the case where the first AP has found the first OTA MAC address in the OTA MAC address list, authentication for the first OTA MAC address is successful, and the first SAT is allowed to access the network. In this case, the first AP continues to process the first frame.

In some embodiments, after the first STA uses the first OTA MAC address (i.e., the updated OTA MAC address) for communication, the first AP needs to update the n OTA MAC addresses of the first STA included in the OTA MAC address list. Specifically, the first AP deletes OTA MAC addresses located before the first OTA MAC address among the n OTA MAC addresses of the first STA, from the OTA MAC address list; the first AP generates an OTA MAC address i according to an OTA MAC address of the first STA at the end of the OTA MAC address list and a first secret value; in a case where the OTA MAC address i does not conflict with any OTA MAC address in the OTA MAC address list, the first AP adds the OTA MAC address i into the OTA MAC address list; in a case where the OTA MAC address i conflicts with an OTA MAC address in the OTA MAC address list, the first AP generates a next OTA MAC address according to the OTA MAC address i and the first secret value, until a generated OTA MAC address does not conflict with any OTA MAC address in the OTA MAC address list, and the first AP adds the generated OTA MAC address that does not conflict with any OTA MAC address in the OTA MAC address list into the OTA MAC address list; and the first AP maintains a number of OTA MAC addresses of the first STA in the OTA MAC address list as n.

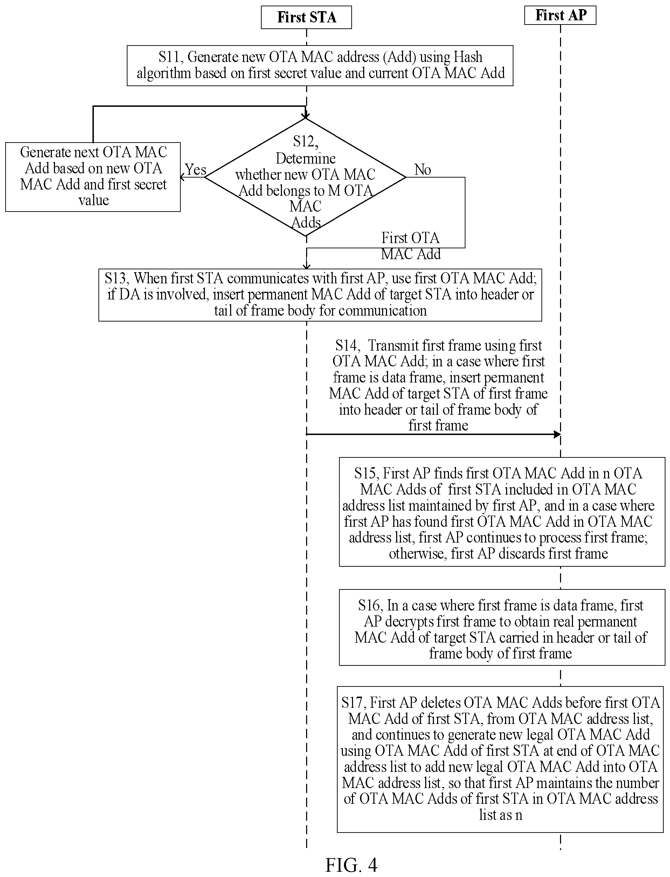

In some embodiments, as shown in FIG. 4, the first STA may update the OTA MAC address through the following S11 to S17.

S11, the first STA generates a new OTA MAC address by using a Hash algorithm based on the first secret value and the current OTA MAC address. Optionally, the first secret value is derived by the first STA and the first AP from the shared secret information (such as the PTK) by using the same rule, and the first secret value may be used as the initial vector.

S12, the first STA determines whether the new OTA MAC address is included in the M OTA MAC addresses (i.e., the conflicting OTA MAC addresses) informed by the first AP; if the new OTA MAC address belongs to the MOTA MAC addresses, the first STA generates a next OTA MAC address according to the new OTA MAC address and the first secret value, until a generated OTA MAC address does not belong to the M OTA MAC addresses, and the first STA determines the generated OTA MAC address that does not belong to the MOTA MAC addresses as the first OTA MAC address; if the new OTA MAC address does not belong to the M OTA MAC addresses, the first STA determines the new OTA MAC address as the first OTA MAC address.

S13, when the first STA communicates with the first AP, the first OTA MAC address is used; if a destination address (DA) is involved, a permanent MAC address of a target STA is inserted into a header or a tail of a frame body for communication.

S14, the first STA transmits a first frame to the first AP by using the first OTA MAC address, where the first frame is a management frame or a control frame, or the first frame is a data frame. Optionally, in a case where the first frame is the data frame, the first STA inserts the permanent MAC address of the target STA of the first frame into a header or a tail of a frame body of the first frame.

S15, the first AP finds the first OTA MAC address in the n OTA MAC addresses of the first STA included in the OTA MAC address list maintained by the first AP. In a case where the first AP has found the first OTA MAC address in the OTA MAC address list, the first AP continues to process the first frame; otherwise, the first AP discards the first frame.

S16, in a case where the first frame is the data frame, the first AP decrypts the first frame to obtain an actual permanent MAC address of the target STA carried in the header or tail of the frame body of the first frame.

S17, the first AP deletes OTA MAC addresses before the first OTA MAC address of the first STA, from the OTA MAC address list, and continues to generate a new non-conflicting OTA MAC address by using the OTA MAC address of the first STA at the end of the OTA MAC address list to adds the new non-conflicting OTA MAC address into the OTA MAC address list, so that the first AP maintains the number of OTA MAC addresses of the first STA in the OTA MAC address list as n.

In some embodiments, the first STA generates a first OTA MAC address that does not belong to the M OTA MAC addresses according to the first secret value and the permanent MAC address of the first STA.

Specifically, the first STA generates an initial OTA MAC address according to the first secret value and a permanent MAC address of the first STA; in a case where the initial OTA MAC address does not belong to the M OTA MAC addresses, the first STA determines the initial OTA MAC address as a first OTA MAC address; in a case where the initial OTA MAC address belongs to the M OTA MAC addresses, the first STA generates a next OTA MAC address according to the initial OTA MAC address and the first secret value, until a generated OTA MAC address does not belong to the M OTA MAC addresses, and the first STA determines the generated OTA MAC address that does not belong to the MOTA MAC addresses as a first OTA MAC address.

In some embodiments, the first STA receives a first management frame or a last frame of the four-way handshake transmitted by the first AP.

Herein, the first management frame or the last frame of the four-way handshake is used to indicate the first STA to enable the OTA MAC address, or the first management frame or the last frame of the four-way handshake is used to indicate that the first STA is allowed to change the OTA MAC address for communication.

In some embodiments, the first management frame or the last frame of the four-way handshake carries the MOTA MAC addresses indicated by the first AP.

In some embodiments, the first management frame or the last frame of the four-way handshake includes an OTA MAC Present field, and the OTA MAC Present field is used to indicate whether there is an OTA MAC address list field in the first management frame or the last frame of the four-way handshake, and the OTA MAC address list field is used to indicate the MOTA MAC addresses.

Specifically, for example, in a case where a value of the OTA MAC Present field indicates that there is the OTA MAC address list field in the first management frame or the last frame of the four-way handshake, M>1; in a case where the value of the OTA MAC presence field indicates that there is no OTA MAC address list field in the first management frame or the last frame of the four-way handshake, M=0. For example, the OTA MAC Present field occupies 1 bit, a value of 1 indicates that there is the OTA MAC address list field in the first management frame or the last frame of the four-way handshake, and a value of 0 indicates that there is no OTA MAC address list field in the first management frame or the last frame of the four-way handshake. As another example, the OTA MAC Present field occupies 1 bit, and a value of 0 indicates that there is the OTA MAC address list field in the first management frame or the last frame of the four-way handshake, and a value of 1 indicates that there is no OTA MAC address list field in the first management frame or the last frame of the four-way handshake. Of course, the OTA MAC Present field may also occupy more bits, which is not limited in the present application.

In some embodiments, the first STA temporarily uses the permanent MAC address of the first STA for communication before the first STA receives the first management frame or the last frame of the four-way handshake.

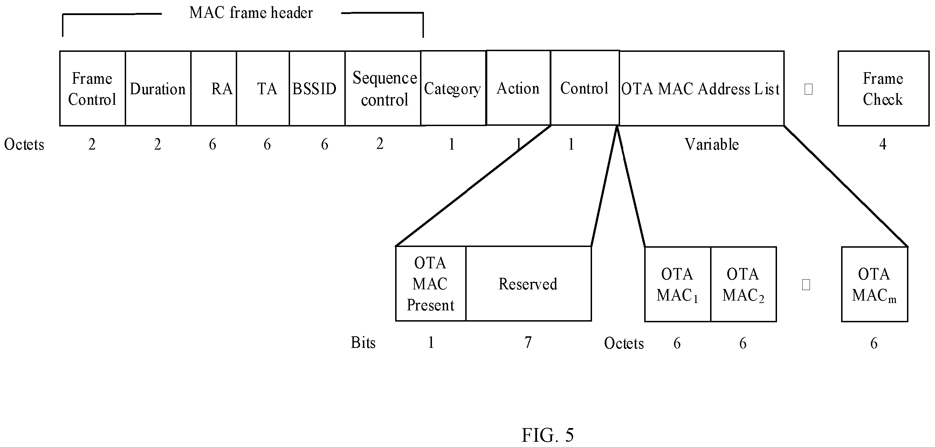

Specifically, for example, a frame structure of the first management frame may be as shown in FIG. 5. Specifically, the first management frame is an Action frame, since values of "30-125" of a Category field in the Action frame are reserved, any value (for example, "30") is selected from the values of "30-125" to indicate the first management frame in this embodiment. A control field of the first management frame includes an OTA MAC Present field, where the OTA MAC Present field occupies 1 bit, and the OTA MAC Present field is set to "1", which indicates that there is an OTA MAC address list field later. If the first STA is currently using the permanent MAC temporarily for communication, receiving this frame means that after the conflicting OTA MAC address is calculated, a next OTA MAC address is non-conflicting, and the first STA can then change to the non-conflicting OTA MAC for communication. If the first STA is currently using the OTA MAC address for communication, receiving this frame means that these OTA MAC addresses indicated by the OTA MAC address list field are conflicting and cannot be used for communication. The OTA MAC Present field is set to "0", which indicates that there is no OTA MAC address list field later, which means that the initial OTA MAC address is non-conflicting. As shown in FIG. 5, the first management frame includes the OTA MAC address list field (optionally), and the OTA MAC address list field may include M OTA MAC fields, and the M OTA MAC fields are respectively used to indicate the MOTA MAC addresses, where each OTA MAC field occupies 6 octets.

In addition, as shown in FIG. 5, a MAC header of the frame structure of the first management frame also includes: a frame control field (occupying 2 octets), a duration field (occupying 2 octets), a receiving address (RA) field (occupying 6 octets), a transmission address (TA) field (occupying 6 octets), a Basic Service Set Identifier (BSSID) field (occupying 6 octets), and a sequence control (Seqct1) field (occupying 2 octets).

In some embodiments, the OTA MAC Present field may also be referred to as a Present OTA MAC field, which is not limited in the present application.

In some embodiments, the first STA receives a second management frame transmitted by the first AP.

Herein, a frame format of the second management frame is the same as a frame format of the first management frame, and the second management frame is used to indicate updating an OTA MAC address indicated by the first AP that conflicts with an OTA MAC address in the OTA MAC address list maintained by the first AP.

Specifically, for example, when the first STA accesses the first AP for the first time, the first STA uses the permanent MAC address for authentication, and then the first AP and the first STA use the same rule to derive the first secret value as the initial vector from the shared secret information (such as a PTK, or the partial information of the PTK). The first STA and the first AP both use the same rule (such as the Hash algorithm, etc.) to calculate an initial OTA MAC address based on the first secret value and the permanent MAC address of the first STA. The first AP then determines whether the generated OTA MAC address conflicts with other OTA MAC addresses in the OTA MAC address list. If so, the first AP continues to use the conflicting OTA MAC address to calculate a next OTA MAC address and repeats the above determination, until generating a non-conflicting OTA MAC address, and adds the non-conflicting OTA MAC address into the OTA MAC address list. At this time, the first AP may use the first management frame shown in FIG. 5 to inform the first STA that the authentication for the OTA MAC address can be performed. If the first STA needs to communicate before receiving the first management frame, the permanent MAC address is temporarily used. After the first STA receives the first management frame, the first STA determines whether the Present OTA MAC bit is "1", and if it is "1", it indicates that there is an OTA MAC address list field of conflicting addresses later, and the first STA determines whether a generated OTA MAC address is in the conflicting OTA MAC address list, if so, the conflicting OTA MAC address is used to generate a next OTA MAC address, and the first STA repeats the determination until a generated OTA MAC address is not in the conflicting list, and in this case, this OTA MAC address not in the conflicting list is a non-conflicting OTA MAC address, and the first STA changes to the non-conflicting OTA MAC for communication; otherwise, it indicates that there is no OTA MAC address list field later, and the initial OTA MAC is the non-conflicting OTA MAC address, and the first STA changes to the initial OTA MAC for communication. Since the first AP has stored the first non-conflicting OTA MAC address about the first STA, the first AP can identify the non-conflicting OTA MAC address and can communicate successfully. Next, the first AP maintains an OTA MAC address list that does not conflict with accessing users, for storing non-conflicting OTA MAC addresses currently and in the future used by STAs associated with the first AP, and the first AP transmits conflicting OTA MAC addresses to the STA via the first management frame, and at the same time, considering compatibility with devices that do not support the OTA MAC addresses, the first AP maintains a list for storing MAC addresses of the first STA that does not support the OTA MAC addresses. Optionally, the devices that do not support the OTA MAC addresses may not be compatible, that is, the non-compatible devices that do not support the OTA MAC addresses are not allowed to associate with the first AP, then the first AP does not need to maintain a list for storing the MAC addresses of the first STA that does not support OTA MAC addresses. Accordingly, in the process described in the present application (for example, S3-5, S4-7, S5-5, S6-7), the AP does not need to check whether the transmission address (TA) of a received frame belongs to a device that does not support the OTA MAC addresses.

Optionally, the first AP may transmit the first management frame to the first STA, in a case of generating a first non-conflicting OTA MAC address of the first STA (i.e., a first OTA MAC address that does not belong to the M OTA MAC addresses, or a first OTA MAC address that does not conflict with other OTA MAC addresses in the OTA MAC address list). Furthermore, after generating a n-th non-conflicting OTA MAC address, that is, after the first AP completes creation for OTA MAC addresses of the first STA, the first AP transmits the second management frame to the first STA.

Optionally, the first AP may also transmit the first management frame to the first STA, in a case of generating an n-th non-conflicting OTA MAC address of the first STA (i.e., an n-th OTA MAC address that does not belong to the M OTA MAC addresses, or a n-th OTA MAC address that does not conflict with other OTA MAC addresses in the OTA MAC address list); where after generating the n-th non-conflicting OTA MAC address, the first AP completes creation for OTA MAC addresses of the first STA.

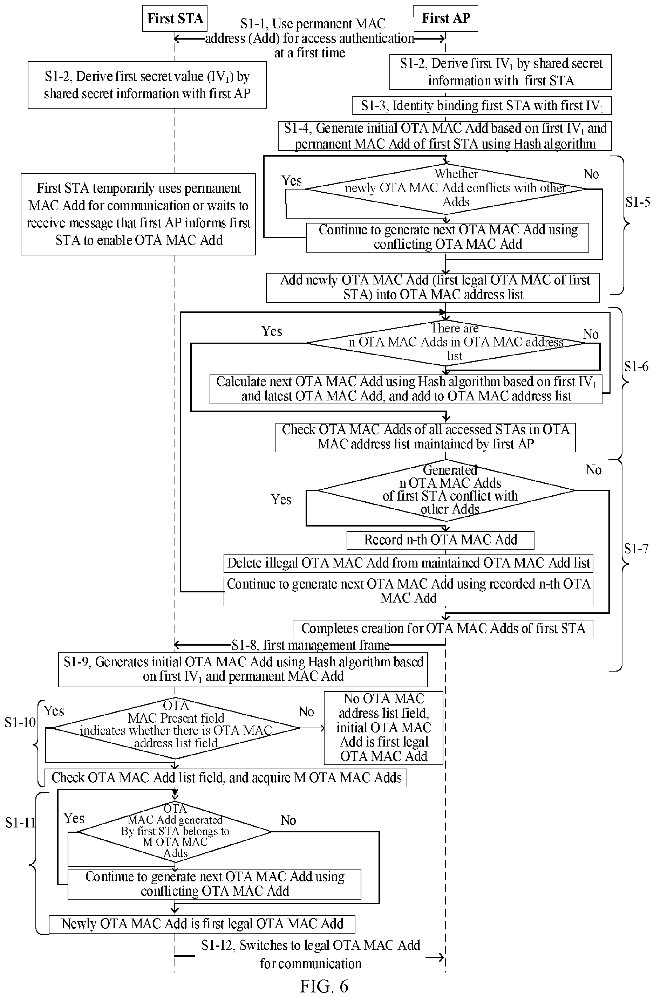

In some embodiments, as shown in FIG. 6, a process of an access phase of the first STA accessing the first AP may be as the following S1-1 to S1-12.

S1-1, when the first STA accesses the first AP for the first time, the first STA uses a permanent MAC address for access authentication.

S1-2, the first STA derives a first secret value (IV₁) by the secret information shared with the first AP, and the first AP derives the first secret value (IV₁) by the secret information shared with the first STA.

S1-3, the first AP performs identity binding for the first STA with the first secret value (IV₁).

S1-4, the first AP generates an initial OTA MAC address of the first STA by using a Hash algorithm based on the first secret value (IV₁) and the permanent MAC address of the first STA.

S1-5, the first AP determines whether a newly generated OTA MAC address of the first STA conflicts with an OTA MAC address in the OTA MAC address list; in a case where the newly generated OTA MAC address conflicts with the OTA MAC address in the OTA MAC address list, the first AP generates a next OTA MAC address according to the conflicting OTA MAC address and the first secret value; in a case where the newly generated OTA MAC address does not conflict with any OTA MAC address in the OTA MAC address list, the first AP adds the newly generated OTA MAC address into the OTA MAC address list; where the newly generated non-conflicting OTA MAC address is a first OTA MAC address of the first STA in the OTA MAC address list.

Specifically, for example, in a case where the initial OTA MAC address does not conflict with any OTA MAC address in the OTA MAC address list, the first AP adds the initial OTA MAC address into the OTA MAC address list, and the initial OTA MAC address is a first OTA MAC address of the first STA in the OTA MAC address list; in a case where the initial OTA MAC address conflicts with an OTA MAC address in the OTA MAC address list, the first AP generates a next OTA MAC address according to the initial OTA MAC address and the first secret value, until a generated OTA MAC address does not conflict with any OTA MAC address in the OTA MAC address list, and the first AP adds the generated OTA MAC address that does not conflict with any OTA MAC address in the OTA MAC address list into the OTA MAC address list, and the newly generated OTA MAC address is a first OTA MAC address of the first STA in the OTA MAC address list.

S1-6, the first AP determines whether there are n OTA MAC addresses of the first STA in the OTA MAC address list maintained by the first AP; in a case where there are n OTA MAC addresses of the first STA in the OTA MAC address list (that is, the number of OTA MAC addresses of the first STA in the OTA MAC address list is n), the first AP checks OTA MAC addresses of all accessed STAs in the maintained OTA MAC address list; in a case where there are not n OTA MAC addresses of the first STA in the OTA MAC address list (that is, the number of OTA MAC addresses of the first STA in the OTA MAC address list is less than n), the first AP calculates a next non-conflicting OTA MAC address used by the first STA, by using the Hash algorithm based on the first secret value and a latest generated non-conflicting OTA MAC address (that is, a latest generated OTA MAC address that does not conflict with any OTA MAC address in the OTA MAC address list), and adds the next non-conflicting OTA MAC address into the OTA MAC address list.

S1-7, the first AP determines whether the generated n OTA MAC addresses of the first STA conflict with other OTA MAC addresses in the OTA MAC address list; in a case where the n OTA MAC addresses of the first STA conflict with other OTA MAC addresses in the OTA MAC address list, the first AP records the n-th OTA MAC address, and deletes the conflicting OTA MAC address from the OTA MAC address list, and continues to generate a next OTA MAC address by using the recorded n-th OTA MAC address, and returns to continue to perform S1-6; in a case where the n OTA MAC addresses of the first STA do not conflict with other OTA MAC addresses in the OTA MAC address list, the first AP completes creation for OTA MAC addresses of the first STA.

S1-8, the first AP transmits a first management frame to the first STA, where the first management frame is used to indicate the first STA to enable the OTA MAC address, or the first management frame is used to indicate that the first STA is allowed to change the OTA MAC address for communication. Optionally, the first management frame carries the MOTA MAC addresses indicated by the first AP. Optionally, before the first STA receives the first management frame, the first STA temporarily uses the permanent MAC address of the first STA for communication.

S1-9, the first STA generates the initial OTA MAC address of the first STA by using the Hash algorithm based on the first secret value (IV₁) and the permanent MAC address of the first STA.

S1-10, the first STA determines whether a value of an OTA MAC Present field in the received first management frame indicates that there is an OTA MAC address list field in the first management frame; in a case where the value of the OTA MAC Present field indicates that there is the OTA MAC address list field in the first management frame, the first STA checks the OTA MAC address list field to acquire the MOTA MAC addresses; in a case where the value of the OTA MAC Present field indicates that there is no OTA MAC address list field in the first management frame, the initial OTA MAC address is the first non-conflicting OTA MAC address.

S1-11, the first STA determines whether a generated OTA MAC address belongs to the M OTA MAC addresses (whether the generated OTA MAC address conflicts with other OTA MAC addresses in the OTA MAC address list); in a case where the newly generated OTA MAC address does not belong to the MOTA MAC addresses, the first STA uses the newly generated OTA MAC address (i.e., the conflicting OTA MAC address) to continue to generate a next OTA MAC address, until a generated OTA MAC address does not belong to the M OTA MAC addresses, and the first STA determines the generated OTA MAC address that does not belong to the MOTA MAC addresses as the first OTA MAC address; in a case where the newly generated OTA MAC address belongs to the M OTA MAC addresses, the newly generated OTA MAC address is the first non-conflicting OTA MAC address.

S1-12, the first STA changes to the non-conflicting OTA MAC address to communicate with the first AP.

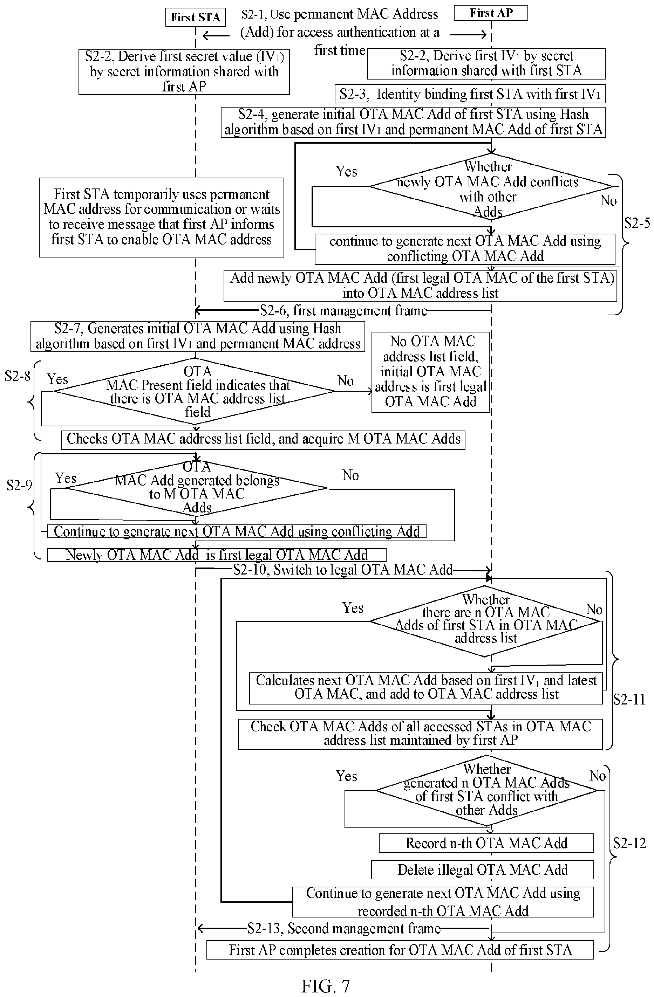

In some embodiments, as shown in FIG. 7, a process of an access phase of the first STA accessing the first AP may be as the following S2-1 to S2-13.

S2-1, when the first STA accesses the first AP for the first time, the first STA uses a permanent MAC address for access authentication.

S2-2, the first STA derives a first secret value (IV₁) by the secret information shared with the first AP, and the first AP derives the first secret value (IV₁) by the secret information shared with the first STA.

S2-3, the first AP performs identity binding for the first STA with the first secret value (IV₁).

S2-4, the first AP generates an initial OTA MAC address of the first STA by using a Hash algorithm based on the first secret value (IV₁) and the permanent MAC address of the first STA.

S2-5, the first AP determines whether a newly generated OTA MAC address of the first STA conflicts with an OTA MAC address in the OTA MAC address list; in a case where the newly generated OTA MAC address conflicts with the OTA MAC address in the OTA MAC address list, the first AP generates a next OTA MAC address according to the conflicting OTA MAC address and the first secret value; in a case where the newly generated OTA MAC address does not conflict with any OTA MAC address in the OTA MAC address list, the first AP adds the newly generated OTA MAC address into the OTA MAC address list; where the newly generated non-conflicting OTA MAC address is a first OTA MAC address of the first STA in the OTA MAC address list.

Specifically, for example, in a case where the initial OTA MAC address does not conflict with any OTA MAC address in the OTA MAC address list, the first AP adds the initial OTA MAC address into the OTA MAC address list, and the initial OTA MAC address is a first OTA MAC address of the first STA in the OTA MAC address list; in a case where the initial OTA MAC address conflicts with an OTA MAC address in the OTA MAC address list, the first AP generates a next OTA MAC address according to the initial OTA MAC address and the first secret value, until a generated OTA MAC address does not conflict with any OTA MAC address in the OTA MAC address list, and the first AP adds the generated OTA MAC address that does not conflict with any OTA MAC address in the OTA MAC address list into the OTA MAC address list, and the newly generated OTA MAC address is a first OTA MAC address of the first STA in the OTA MAC address list.

S2-6, the first AP transmits a first management frame to the first STA, where the first management frame is used to indicate the first STA to enable the OTA MAC address, or the first management frame is used to indicate that the first STA is allowed to change the OTA MAC address for communication. Optionally, the first management frame carries the MOTA MAC addresses indicated by the first AP. Optionally, before the first STA receives the first management frame, the first STA temporarily uses the permanent MAC address of the first STA for communication.

S2-7, the first STA generates the initial OTA MAC address of the first STA by using the Hash algorithm based on the first secret value (IV₁) and the permanent MAC address of the first STA.

S2-8, the first STA determines whether a value of an OTA MAC Present field in the received first management frame indicates that there is an OTA MAC address list field in the first management frame; in a case where the value of the OTA MAC Present field indicates that there is the OTA MAC address list field in the first management frame, the first STA checks the OTA MAC address list field to acquire the MOTA MAC addresses; in a case where the value of the OTA MAC Present field indicates that there is no OTA MAC address list field in the first management frame, the initial OTA MAC address is the first non-conflicting OTA MAC address.

S2-9, the first STA determines whether a generated OTA MAC address belongs to the M OTA MAC addresses (whether the generated OTA MAC address conflicts with other OTA MAC addresses in the OTA MAC address list); in a case where the newly generated OTA MAC address does not belong to the MOTA MAC addresses, the first STA uses the newly generated OTA MAC address (i.e., the conflicting OTA MAC address) to continue to generate a next OTA MAC address, until a generated OTA MAC address does not belong to the M OTA MAC addresses, and the first STA determines the generated OTA MAC address that does not belong to the MOTA MAC addresses as the first OTA MAC address; in a case where the newly generated OTA MAC address belongs to the M OTA MAC addresses, the newly generated OTA MAC address is the first non-conflicting OTA MAC address.

S2-10, the first STA changes to the non-conflicting OTA MAC address to communicate with the first AP.

S2-11, the first AP determines whether there are n OTA MAC addresses of the first STA in the OTA MAC address list maintained by the first AP; in a case where there are n OTA MAC addresses of the first STA in the OTA MAC address list (that is, the number of OTA MAC addresses of the first STA in the OTA MAC address list is n), the first AP checks OTA MAC addresses of all accessed STAs in the maintained OTA MAC address list; in a case where there are not n OTA MAC addresses of the first STA in the OTA MAC address list (that is, the number of OTA MAC addresses of the first STA in the OTA MAC address list is less than n), the first AP calculates a next non-conflicting OTA MAC address used by the first STA, by using the Hash algorithm based on the first secret value and a latest generated non-conflicting OTA MAC address (that is, a latest generated OTA MAC address that does not conflict with any OTA MAC address in the OTA MAC address list), and adds the next non-conflicting OTA MAC address into the OTA MAC address list.

S2-12, the first AP determines whether the generated n OTA MAC addresses of the first STA conflict with other OTA MAC addresses in the OTA MAC address list; in a case where the n OTA MAC addresses of the first STA conflict with other OTA MAC addresses in the OTA MAC address list, the first AP records the n-th OTA MAC address, and deletes the conflicting OTA MAC address from the OTA MAC address list, and continues to generate a next OTA MAC address by using the recorded n-th OTA MAC address, and returns to continue to perform S2-11; in a case where the n OTA MAC addresses of the first STA do not conflict with other OTA MAC addresses in the OTA MAC address list, the first AP completes creation for OTA MAC addresses of the first STA.

S2-13, the first AP transmits a second management frame to the first STA; where a frame format of the second management frame is the same as a frame format of the first management frame, and the second management frame is used to indicate updating the OTA MAC addresses indicated by the first AP that conflict with the OTA MAC address in the OTA MAC address list maintained by the first AP.

In some embodiments, in a case where the first frame is a data frame, a receiving address (RA) in the first frame is a MAC address of the first AP, a transmission address (TA) in the first frame is the first OTA MAC address, a value of a To distribution system (To DS) field of the first frame is 1, a value of a From distribution system (From DS) field of the first frame is 0, and values of an Address3 field of the first frame are all zeros, or the values of the Address3 field of the first frame are random numbers. That is, the Address3 field in the first frame is an invalid field.

In some embodiments, in a case where the first frame is a data frame, a header or a tail of a frame body of the first frame carries a permanent MAC address of a second STA; where the second STA is a target STA of the first frame.

In some embodiments, in a case where the tail of the frame body of the first frame carries the permanent MAC address of the second STA, the permanent MAC address of the second STA occupies m₁ octets just before the end of the frame body of the first frame, and m₁ is a positive integer. Correspondingly, the first AP extracts the permanent MAC address of the second STA from the m₁ octets just before the end of the frame body of the first frame; the first AP acquires a permanent MAC address of the first STA according to the first OTA MAC address, and the first AP acquires an OTA MAC address currently used by the second STA from the OTA MAC address list according to the permanent MAC address of the second STA. Optionally, furthermore, the first AP transmits a third frame to the second STA; where a transmission address (TA) in the third frame is the MAC address of the first AP, a receiving address (RA) in the third frame is the OTA MAC address currently used by the second STA, m₁ octets just before the end of the frame body of the third frame carry the permanent MAC address of the first STA, values of an Address3 field of the third frame are all zeros, or the values of the Address3 field of the third frame are random numbers. Herein, the third frame is a data frame.

Optionally, m₁=6. Specifically, after the first AP receives the first frame, when the first AP receives a packet to parse a frame header, if "To DS" = 1, "From DS" = 0, and the values of the Address3 field are all zeros or random numbers, then after the integrity verification and decryption for the first frame are performed, a destination address (DA) is extracted from the frame body of the first frame, that is, the first AP extracts 6 octets just before the end of the frame body, thereby acquiring the permanent MAC address of the second STA.

In some embodiments, the permanent MAC address may be placed at the end of the frame body. Specifically, when the AP or STA receives the packet to parse the frame header, if "To DS" = 1, "From DS" = 0 and the values of Address3 are all zeros, then after the integrity verification and decryption for the frame are performed, the DA is extracted from the frame body, that is, the AP or STA extracts 6 octets just before the end of the frame body; when the AP or STA receives the packet to parse the frame header, if "To DS" = 0, "From DS" = 1 and the values of Address3 are all zeros, then after the integrity verification and decryption for the frame are performed, the SA is extracted from the frame body, that is, the AP or STA extracts 6 octets just before the end of the frame body; when the AP or STA receives the packet to parse the frame header, if "To DS" = 1, "From DS" = 1 and the values of Address3 are all zeros, then after the integrity verification and decryption for the frame are performed, the SA and DA are extracted from the frame body, that is, the AP or STA extracts 12 octets just before the end of the frame body, where the first 6 octets are the DA, and the last 6 octets are the SA.

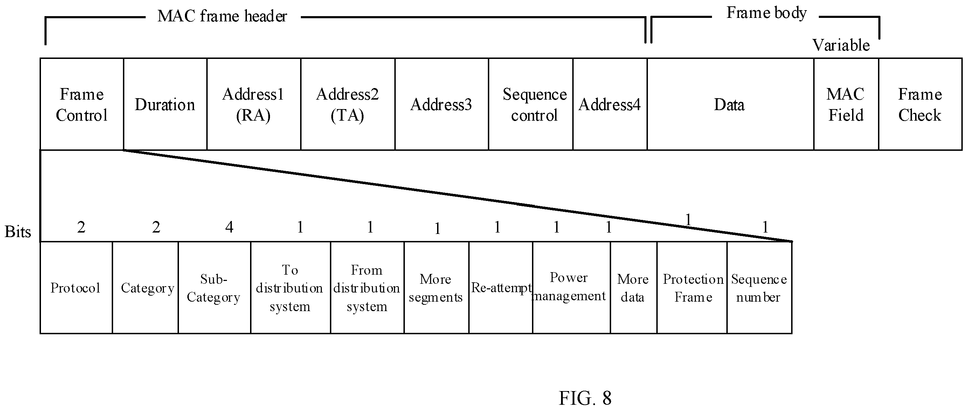

For example, the first frame may be shown in FIG. 8, and the tail of the frame body of the first frame includes a MAC field, and the MAC field is used to indicate the permanent MAC address of the second STA.

In some embodiments, the permanent MAC address of the second STA is inserted into the end of the frame body of the first frame by the first STA before applying encryption and integrity protection.

In some embodiments, in a case where the header of the frame body of the first frame carries the permanent MAC address of the first STA and/or the permanent MAC address of the second STA, the header of the frame body of the first frame includes an Address Element field, and a control field in the Address Element field includes a source address (SA) Present field and a destination address (DA) Present field, where a value of the SA Present field is used to indicate that there is no SA field for indicating an SA in the Address Element field, and a value of the DA Present field is used to indicate that there is a DA field for indicating a DA in the Address Element field, and the DA is the permanent MAC address of the second STA. Correspondingly, the first AP acquires the permanent MAC address of the second STA from the DA field in the Address Element field of the first frame; the first AP acquires a permanent MAC address of the first STA according to the first OTA MAC address, and the first AP acquires an OTA MAC address currently used by the second STA from the OTA MAC address list according to the permanent MAC address of the second STA. Optionally, furthermore, the first AP transmits a fifth frame to the second STA; where a TA in the fifth frame is the MAC address of the first AP, a RA in the fifth frame is the OTA MAC address currently used by the second STA, and values of an Address3 field of the fifth frame are all zeros, or the values of the Address3 field of the fifth frame are random numbers; where a header of a frame body of the fifth frame includes an Address Element field, a control field in the Address Element field includes an SA Present field and a DA Present field, a value of the SA Present field is used to indicate that there is an SA field for indicating an SA in the Address Element field, and a value of the DA Present field is used to indicate that there is no DA field for indicating a DA in the Address Element field, and the SA is the permanent MAC address of the first STA.

In some embodiments, a value of a first bit in a CCMP header or GCMP header of the frame body of the first frame is used to indicate the first AP to extract the permanent MAC address of the second STA from the Address Element field of the header of the frame body of the first frame. For example, the first bit occupies any bit of a third octet of the CCMP header or GCMP header, or the first bit occupies any bit of first four bits of a fourth octet of the CCMP header or GCMP header.

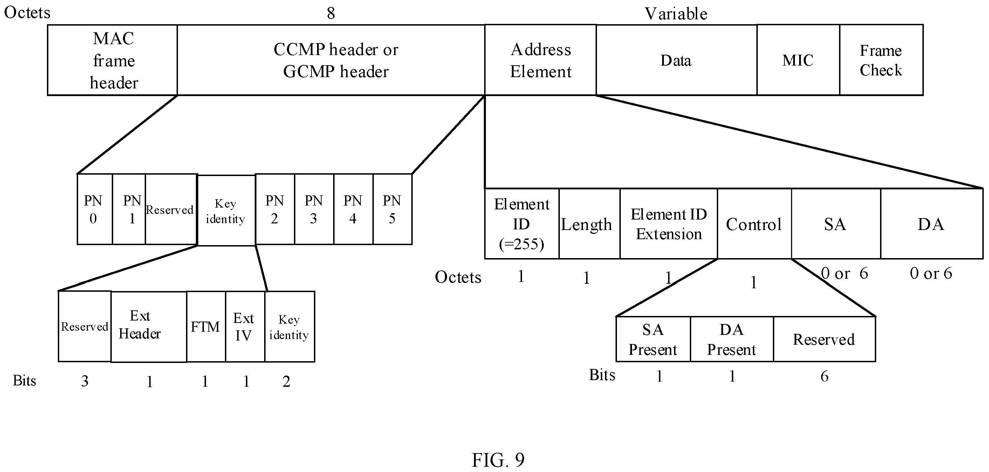

It should be noted that the third octet and the first 4 bits of the fourth octet in the CCMP header or GCMP header are reserved. Therefore, the value of any bit of the third octet of the CCMP header or GCMP header, or any bit of the first 4 bits of the fourth octet (such as a fourth bit in the fourth octet, which is an Ext Header in FIG. 9) of the CCMP header or GCMP header may be set to 1, to indicate the AP or STA to extract the permanent MAC address (SA/DA) from the information element in the header of the frame body.

In some embodiments, the permanent MAC address of the second STA is inserted into the Address Element field of the header of the frame body of the first frame by the first STA before applying encryption and integrity protection.

In some embodiments, the permanent MAC address may be placed in the header of the frame body, and specifically, the third octet and the first four bits of the fourth octet in the CCMP header or GCMP header are reserved, so the value of the fourth bit in the fourth octet of the CCMP header or GCMP header may be set to 1, to indicate the AP or STA to extract the permanent MAC address (SA and/or DA) from the information element in the header of the frame body. When an "Element Identification (ID)" = 255, there is an "Element ID Extension" field (94-255 is reserved and not used) in the Element, here "Element ID" = 255, "Element ID Extension" = 94 may be used to indicate to the AP or STA that a category of the information element is "Address Element"; the AP or STA then checks a first bit and a second bit in "Control", if "SA Present" = 1, "DA Present" = 0, it means that the AP or STA needs to extract the SA from the "Address Element"; if "SA Present" = 0, "DA Present" = 1, it means that the AP or STA needs to extract the SA from the "Address Element"; if "SA Present" = 0, "DA Present" = 1, it means that the AP or STA needs to extract the DA from the "Address Element"; if "SA Present" = 1 and "DA Present" = 1, it means that the AP or STA needs to extract the DA and the SA from the "Address Element".

Specifically, for example, the first frame may be shown in FIG. 9, a key identification field of the CCMP header or GCMP header (CCMP Header/GCMP Header) of the frame body of the first frame includes an extension header (Ext Header) field (i.e., the first bit), the Ext Header field occupies 1 bit, and a value of the Ext Header field is 1 or 0, which is used to indicate the first AP to extract the permanent MAC address of the second STA from the Address Element field of the header of the frame body of the first frame. As shown in FIG. 9, the header of the frame body of the first frame includes the Address Element field, and a control field in the Address Element field includes a source address (SA) Present field and a destination address (DA) Present field.

Specifically, as shown in FIG. 9, the SA Present field occupies 1 bit, and a value of the SA Present field is 1, which indicates that there is no SA field for indicating an SA in the Address Element field, and a value of the SA Present field is 0, which indicates that there is an SA field for indicating an SA in the Address Element field; or a value of the SA Present field is 0, which indicates that there is no SA field for indicating an SA in the Address Element field, and a value of the SA Present field is 1, which indicates that there is an SA field for indicating an SA in the Address Element field. For the first frame, the value of the SA Present field is used to indicate that there is no SA field for indicating an SA in the Address Element field.

Specifically, as shown in FIG. 9, the DA Present field occupies 1 bit, and a value of the DA Present field is 1, which indicates that there is no DA field for indicating a DA in the Address Element field, and a value of the DA e Present field is 0, which indicates that there is a DA field for indicating a DA in the Address Element field; or a value of the DA Present field is 0, which indicates that there is no DA field for indicating a DA in the Address Element field, and a value of the DA e Present field is 1, which indicates that there is a DA field for indicating a DA in the Address Element field. For the first frame, the value of the DA Present field is used to indicate that there is a DA field for indicating a DA in the Address Element field, and the DA is the permanent MAC address of the second STA.

In some embodiments, the SA Present field may also be referred to as a Present SA field, and the DA Present field may also be referred to as a Present DA field, which is not limited in the present application.

In addition, as shown in FIG. 9, the CCMP header or GCMP header (CCMP Header/GCMP Header) of the frame body of the first frame further includes the following fields: a packet number (PN) 0 field, a PN1 field, a reserved field, a PN2 field, a PN3 field, a PN4 field, and a PN5 field. And the key identification field of the CCMP header or GCMP header (CCMP Header/GCMP Header) of the frame body of the first frame also includes: a reserved field, a fine time measurement (FTM) field, an extended initial vector (Ext IV) field and a key identification field. And the first frame also includes: a data field, a message integrity check (MIC) field and a frame check field.

In some embodiments, in a case where the first frame is the management frame or the control frame, values of a To distribution system field and a From distribution system filed in the first frame are both 0, and a transmission address (TA) in the first frame is the first OTA MAC address, and a receiving address (RA) in the first frame is a MAC address of the first AP. Optionally, further, the first STA receives a second frame transmitted by the first AP, where a TA of the second frame is the MAC address of the first AP, and an RA of the second frame is the first OTA MAC address; the first STA acquires a permanent MAC address of the first STA stored locally, replaces the RA of the second frame with the permanent MAC address of the first STA, and delivers the second frame after replacing the RA to an upper layer for processing.

It should be noted that, in a case where the first frame is a management frame or a control frame, the first frame and the second frame may be frames with no associated relationship (i.e., the second frame is not a response to the first frame). Of course, the first frame and the second frame may also be frames with an associated relationship (i.e., the second frame is a response to the first frame).

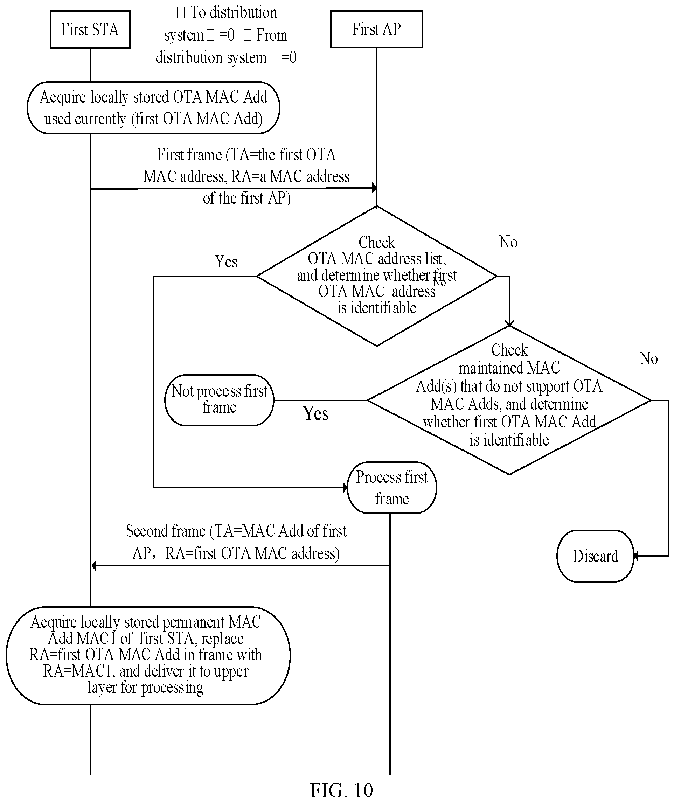

Specifically, as shown in FIG. 10, the first STA obtains a locally stored OTA MAC address used currently, i.e., the first OTA MAC address; and the first STA transmits the first frame to the first AP, where the first frame is a management frame or a control frame, and values of the To distribution system field and the From distribution system field in the first frame are both 0, and the transmission address (TA) in the first frame is the first OTA MAC address, and the receiving address (RA) in the first frame is the MAC address of the first AP. After the first AP receives the first frame, the first AP checks the maintained OTA MAC address list, and determines whether the MAC address of the first AP is identifiable. Specifically, the first AP finds the first OTA MAC address in the n OTA MAC addresses of the first STA included in the OTA MAC address list maintained by the first AP. In a case where the first AP has found the first OTA MAC address in the OTA MAC address list, the first AP continues to process the first frame. In a case where the first AP has not found the first OTA MAC address in the OTA MAC address list, the first AP checks one or more maintained MAC addresses that do not support the OTA MAC addresses, to determine whether the first OTA MAC address is identifiable. In a case where the first AP has found the first OTA MAC address in the one or more OTA MAC addresses, the first AP continues to process the first frame; otherwise, the first AP discards the first frame. After the first AP processes the first frame, the first AP transmits a second frame to the first STA, where a TA of the second frame is the MAC address of the first AP, and an RA of the second frame is the first OTA MAC address; and the first STA acquires the locally stored permanent MAC address of the first STA, and replaces the RA of the second frame with the permanent MAC address of the first STA, and delivers the second frame after replacing the RA to the upper layer for processing.

Therefore, in the embodiments of the present application, a first STA generates a first OTA MAC address according to a first secret value and a current OTA MAC address, where the first OTA MAC address does not belong to MOTA MAC addresses indicated by a first AP, the MOTA MAC addresses are OTA MAC addresses that conflict with an OTA MAC address in an OTA MAC address list maintained by the first AP, and the first secret value is derived based on secret information shared between the first STA and the first AP, M is an integer, and M≥0; the first STA transmits a first frame to the first AP by using the first OTA MAC address, where the first frame is a management frame or a control frame, or the first frame is a data frame. That is, the first STA can actively update the OTA MAC address at any time, thereby better protecting the privacy of the MAC address of the first STA. In addition, the OTA MAC address list maintained by the first AP includes the OTA MAC addresses that the first STA is allowed to use currently and the OTA MAC addresses that the first STA is allowed to use in a future period of time, and thus, the first AP can identify the OTA MAC address updated by the first STA based on the OTA MAC address list, and can efficiently complete an identity identification process after the OTA MAC address is changed.

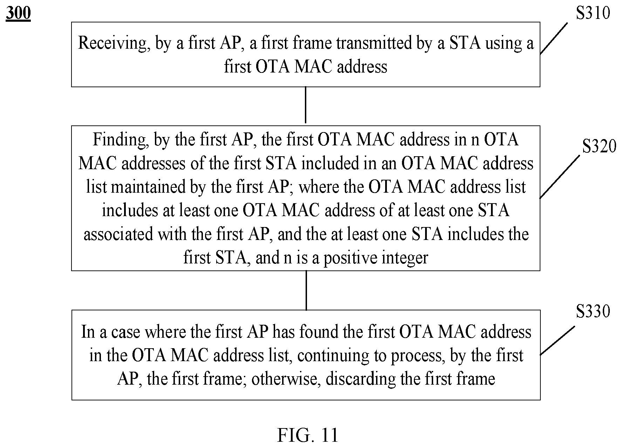

The embodiments of the first STA side of the present application are described in detail above in combination with FIG. 2 to FIG. 10. Embodiments of the first AP side of the present application are described in detail below in combination with FIG. 11 to FIG. 15. It should be understood that the embodiments of the first AP side correspond to the embodiments of the first STA side, and similar descriptions may refer to the embodiments of the first STA side.

FIG. 11 is a schematic flowchart of a method 300 for wireless communication according to the embodiments of the present application. As shown in FIG. 11, the method 300 for wireless communication may include at least a portion of the following contents:
S310, receiving, by a first AP, a first frame transmitted by a first station (STA) using a first OTA MAC address;
S320, finding, by the first AP, the first OTA MAC address in n OTA MAC addresses of the first STA included in an OTA MAC address list maintained by the first AP; where the OTA MAC address list includes at least one OTA MAC address of at least one STA associated with the first AP, and the at least one STA includes the first STA, and n is a positive integer;
S330, in a case where the first AP has found the first OTA MAC address in the OTA MAC address list, continuing to process, by the first AP, the first frame; otherwise, discarding the first frame.

In some embodiments, the OTA MAC address list maintained by the first AP includes n OTA MAC addresses of the first STA, and the n OTA MAC addresses are OTA MAC addresses that the first STA uses currently and OTA MAC addresses that the first STA is allowed to use in a future period of time, where the future period of time is agreed by a protocol, or the future period of time is configured by the first AP.

Optionally, numbers of OTA MAC addresses of different STAs of the at least one STA, included in the OTA MAC address list may be the same or different, which are not limited in the embodiments of the present application.

In some embodiments, the first OTA MAC address is generated by the first STA based on a first secret value and a current OTA MAC address of the first STA. The first OTA MAC address does not belong to M OTA MAC addresses indicated by the first AP. The MOTA MAC addresses are OTA MAC addresses that conflict with an OTA MAC address in the OTA MAC address list maintained by the first AP. The first secret value is derived based on secret information shared between the first STA and the first AP.

Specifically, for example, the first STA generates a new OTA MAC address according to the first secret value and the current OTA MAC address; in a case where the new OTA MAC address does not belong to the MOTA MAC addresses, the first STA determines the new OTA MAC address as the first OTA MAC address; in a case where the new OTA MAC address belongs to the MOTA MAC addresses, the first STA generates a next OTA MAC address according to the new OTA MAC address and the first secret value, until a generated OTA MAC address does not belong to the MOTA MAC addresses, and the first STA determines the generated OTA MAC address that does not belong to the MOTA MAC addresses as the first OTA MAC address.

In the embodiments of the present application, the first STA may generate the first OTA MAC address according to the first secret value and the current OTA MAC address, that is, the first STA can actively update the OTA MAC address at any time, thereby better protecting the privacy of the MAC address of the first STA, and the OTA MAC address list maintained by the first AP includes the OTA MAC addresses that the first STA is allowed to use currently and the OTA MAC addresses that the first STA is allowed to use in the future period of time, and then the first AP can identify the OTA MAC address updated by the first STA based on the OTA MAC address list, and can efficiently complete the identity identification process after the OTA MAC address is changed.

In the embodiments of the present application, the "field" may also be referred to as a "domain/field" or a "subfield".

In the embodiments of the present application, the M OTA MAC addresses may also be understood as conflicting OTA MAC addresses corresponding to the first STA. For example, the M OTA MAC addresses conflict with the OTA MAC address in the OTA MAC address list, or the M OTA MAC addresses conflict with OTA MAC addresses of other STAs in the OTA MAC address list.

In some embodiments, the MOTA MAC addresses may be all OTA MAC addresses that are generated in the process in which the first AP generates the n OTA MAC addresses of the first STA in the OTA MAC address list, and that conflict with other OTA MAC addresses in the OTA MAC address list (i.e., conflicting OTA MAC addresses).

In some embodiments, the secret information shared between the first STA and the first AP includes, but is not limited to one of:
a PTK, or partial information of the PTK.

In the embodiments of the present application, when the first STA performs access authentication, the first AP and the first STA use the same rule to derive a secret value IV₁ (i.e., a first secret value) as an initial vector from the shared secret information (e.g., the PTK). Specifically, the secret information is not limited to using the PTK, and other secret information may also be used. The method for deriving the secret value is to, for example, use a standard Hash algorithm SHA-256 to hash the PTK, or use a standard Hash algorithm SHA-256 to hash last 128 bits of the PTK. It can be seen that as long as the first AP and the first STA derive from the secret information based on the same rule, the derivation method is not limited to the illustrated methods. The first AP binds the initial vector (i.e., the secret value IV₁) to an identity of the first STA. Optionally, each column of the OTA MAC address list (see Table 1 above) maintained by the first AP is n OTA MAC addresses of one STA. Since a time when the STA updates the OTA MAC address can not be determined, the OTA MAC address list stores OTA MAC addresses used by the STA currently and in the future period of time, i.e., a total of n OTA MAC addresses. After the first AP generates OTA MAC addresses that the first STA may use in the future period of time, the first AP checks the generated OTA MAC addresses. If the generated OTA MAC addresses conflict with other OTA MAC addresses in the OTA MAC address list, the generated OTA MAC addresses are determined to be conflicting OTA MAC addresses, and the first AP informs the first STA about the conflicting OTA MAC addresses, by transmitting a management frame or in a last frame of a four-way handshake (the number of the conflicting OTA MAC addresses may be one or more), and the first AP stores the non-conflicting OTA MAC addresses into the maintained OTA MAC address list, and then uses the last OTA MAC address to generate a sufficient number of OTA MAC addresses and keeps on checking the generated OTA MAC addresses, until n non-conflicting OTA MAC addresses are filled fully.

Specifically, as shown in Table 1, a first OTA MAC address stored in each column of the OTA MAC address list is an OTA MAC address currently used by the STA, that is, STA-ad₁. A (i+1)-th OTA MAC address STA-adᵢ₊₁ is obtained by calculating the secret value IV₁ and STA-adᵢ (i.e., IV₁ + STA-adᵢ). A specific calculation method is: for a string "IV₁+ STA-adᵢ" of the initial vector IV₁ and the i-th address in the OTA MAC address list, using any standard Hash algorithm H (such as SHA-1, MD5, etc.) to hash the string, and using any generation function for the calculated result to obtain 48 bits as a new OTA MAC address, and checking whether a U/L bit of the new OTA MAC address is 1 and whether an I/G bit of the new OTA MAC address is 0; if not, changing the U/L bit to 1 and change the I/G bit to 0, respectively, which indicates that the OTA MAC address is a locally administered and unicast address. The above final result is used as the (i+1)-th OTA MAC address STA-adᵢ₊₁, as shown in FIG. 3. Since the attacker cannot know the shared secret value IV₁ between the first AP and the STA, the attacker cannot calculate the subsequent OTA MAC address value.

In the embodiments of the present application, in a case where the first AP has found the first OTA MAC address in the OTA MAC address list, authentication for the first OTA MAC address is successful, and the first SAT is allowed to access the network. In this case, the first AP continues to process the first frame.

In some embodiments, in a case where the first AP has not found the first OTA MAC address in the OTA MAC address list, the first AP checks one or more maintained MAC addresses that do not support OTA MAC addresses, to determine whether the first OTA MAC address is identifiable. In a case where the first AP has found the first OTA MAC address in the one or more MAC addresses, the first AP continues to process the first frame; otherwise, the first AP discards the first frame.

In some embodiments, the first AP deletes OTA MAC addresses located before the first OTA MAC address among the n OTA MAC addresses of the first STA, from the OTA MAC address list; the first AP generates an OTA MAC address i according to an OTA MAC address of the first STA at the end of the OTA MAC address list and a first secret value; in a case where the OTA MAC address i does not conflict with any OTA MAC address in the OTA MAC address list, the first AP adds the OTA MAC address i into the OTA MAC address list; in a case where the OTA MAC address i conflicts with an OTA MAC address in the OTA MAC address list, the first AP generates a next OTA MAC address according to the OTA MAC address i and the first secret value, until a generated OTA MAC address does not conflict with any OTA MAC address in the OTA MAC address list, and the first AP adds the generated OTA MAC address that does not conflict with any OTA MAC address in the OTA MAC address list into the OTA MAC address list; and the first AP maintains a number of OTA MAC addresses of the first STA in the OTA MAC address list as n.

That is, after the first STA uses the first OTA MAC address (i.e., the updated OTA MAC address) for communication, the first AP needs to update the n OTA MAC addresses of the first STA included in the OTA MAC address list.

In some embodiments, the first AP generates an initial OTA MAC address according to a first secret value and a permanent MAC address of the first STA; in a case where the initial OTA MAC address does not conflict with any OTA MAC address in the OTA MAC address list, the first AP adds the initial OTA MAC address into the OTA MAC address list, and the initial OTA MAC address being a first OTA MAC address of the first STA in the OTA MAC address list; and in a case where the initial OTA MAC address conflicts with an OTA MAC address in the OTA MAC address list, the first AP generates a next OTA MAC address according to the initial OTA MAC address and the first secret value, until a generated OTA MAC address does not conflict with any OTA MAC address in the OTA MAC address list, and the first AP adds the generated OTA MAC address that does not conflict with any OTA MAC address in the OTA MAC address list into the OTA MAC address list, and the newly generated OTA MAC address being an first OTA MAC address of the first STA in the OTA MAC address list.

In some embodiments, the first AP generates an OTA MAC address j according to the first secret value and the first OTA MAC address; in a case where the OTA MAC address j does not conflict with any OTA MAC address in the OTA MAC address list, the first AP adds the OTA MAC address j into the OTA MAC address list; in a case where the OTA MAC address j conflicts with an OTA MAC address in the OTA MAC address list, the first AP generates a next OTA MAC address according to the OTA MAC address j and the first secret value, until a generated OTA MAC address does not conflict with any OTA MAC address in the OTA MAC address list, and the first AP adds the generated OTA MAC address that does not conflict with any OTA MAC address in the OTA MAC address list into the OTA MAC address list; and in a case where a number of OTA MAC addresses of the first STA in the OTA MAC address list is n, the first AP completes creation for OTA MAC addresses of the first STA.

In some embodiments, the first AP transmits a first management frame or a last frame of a four-way handshake to the first STA.

Herein, the first management frame or the last frame of the four-way handshake is used to indicate the first STA to enable the OTA MAC address, or the first management frame or the last frame of the four-way handshake is used to indicate that the first STA is allowed to change the OTA MAC address for communication.

In some embodiments, the first management frame or the last frame of the four-way handshake carries the MOTA MAC addresses indicated by the first AP that conflict with an OTA MAC address in the OTA MAC address list maintained by the first AP, where M is an integer, and M≥0.

In some embodiments, the first management frame or the last frame of the four-way handshake includes an OTA MAC Present field, and the OTA MAC Present field is used to indicate whether there is an OTA MAC address list field in the first management frame or the last frame of the four-way handshake, and the OTA MAC address list field is used to indicate the MOTA MAC addresses.

Specifically, for example, in a case where a value of the OTA MAC Present field indicates that there is the OTA MAC address list field in the first management frame or the last frame of the four-way handshake, M>1; in a case where the value of the OTA MAC presence field indicates that there is no OTA MAC address list field in the first management frame or the last frame of the four-way handshake, M=0. For example, the OTA MAC Present field occupies 1 bit, a value of 1 indicates that there is the OTA MAC address list field in the first management frame or the last frame of the four-way handshake, and a value of 0 indicates that there is no OTA MAC address list field in the first management frame or the last frame of the four-way handshake. As another example, the OTA MAC Present field occupies 1 bit, and a value of 0 indicates that there is the OTA MAC address list field in the first management frame or the last frame of the four-way handshake, and a value of 1 indicates that there is no OTA MAC address list field in the first management frame or the last frame of the four-way handshake. Of course, the OTA MAC Present field may also occupy more bits, which is not limited in the present application.

In some embodiments, the first STA temporarily uses the permanent MAC address of the first STA for communication before the first STA receives the first management frame or the last frame of the four-way handshake.

Specifically, for example, a frame structure of the first management frame may be as shown in FIG. 5. Specifically, the first management frame is an Action frame, since values of "30-125" of a Category field in the Action frame are reserved, any value (for example, "30") is selected from the values of "30-125" to indicate the first management frame in this embodiment. A control field of the first management frame includes an OTA MAC Present field, where the OTA MAC Present field occupies 1 bit, and the OTA MAC Present field is set to "1", which indicates that there is an OTA MAC address list field later. If the first STA is currently using the permanent MAC temporarily for communication, receiving this frame means that after the conflicting OTA MAC address is calculated, a next OTA MAC address is non-conflicting, and the first STA can then change to the non-conflicting OTA MAC for communication. If the first STA is currently using the OTA MAC address for communication, receiving this frame means that these OTA MAC addresses indicated by the OTA MAC address list field are conflicting and cannot be used for communication. The OTA MAC Present field is set to "0", which indicates that there is no OTA MAC address list field later, which means that the initial OTA MAC address is non-conflicting. As shown in FIG. 5, the first management frame includes the OTA MAC address list field (optionally), and the OTA MAC address list field may include M OTA MAC fields, and the M OTA MAC fields are respectively used to indicate the MOTA MAC addresses, where each OTA MAC field occupies 6 octets (bytes/octets).

In addition, as shown in FIG. 5, a MAC header of the frame structure of the first management frame also includes: a frame control field (occupying 2 octets), a duration field (occupying 2 octets), a receiving address (RA) field (occupying 6 octets), a transmission address (TA) field (occupying 6 octets), a Basic Service Set Identifier (BSSID) field (occupying 6 octets), and a sequence control (Seqct1) field (occupying 2 octets).

In some embodiments, the first AP transmits a second management frame to the first STA.

Herein, a frame format of the second management frame is the same as a frame format of the first management frame, and the second management frame is used to indicate updating an OTA MAC address indicated by the first AP that conflicts with an OTA MAC address in the OTA MAC address list maintained by the first AP.

Specifically, for example, when the first STA accesses the first AP for the first time, the first STA uses the permanent MAC address for authentication, and then the first AP and the first STA use the same rule to derive the first secret value as the initial vector from the shared secret information (such as a PTK, or the partial information of the PTK). The first STA and the first AP both use the same rule (such as the Hash algorithm, etc.) to calculate an initial OTA MAC address based on the first secret value and the permanent MAC address of the first STA. The first AP then determines whether the generated OTA MAC address conflicts with other OTA MAC addresses in the OTA MAC address list. If so, the first AP continues to use the conflicting OTA MAC address to calculate a next OTA MAC address and repeats the above determination, until generating a non-conflicting OTA MAC address, and adds the non-conflicting OTA MAC address into the OTA MAC address list. At this time, the first AP may use the first management frame shown in FIG. 5 to inform the first STA that the authentication for the OTA MAC address can be performed. If the first STA needs to communicate before receiving the first management frame, the permanent MAC address is temporarily used. After the first STA receives the first management frame, the first STA determines whether the Present OTA MAC bit is "1", and if it is "1", it indicates that there is an OTA MAC address list field of conflicting addresses later, and the first STA determines whether a generated OTA MAC address is in the conflicting OTA MAC address list, if so, the conflicting OTA MAC address is used to generate a next OTA MAC address, and the first STA repeats the determination until a generated OTA MAC address is not in the conflicting list, and in this case, this OTA MAC address not in the conflicting list is non-conflicting, and the first STA changes to the non-conflicting OTA MAC for communication; otherwise, it indicates that there is no OTA MAC address list field later, and the initial OTA MAC is non-conflicting, and the first STA changes to the initial OTA MAC for communication. Since the first AP has stored the first non-conflicting OTA MAC address about the first STA, the first AP can identify the non-conflicting OTA MAC address and can communicate successfully. Next, the first AP maintains an OTA MAC address list that does not conflict with accessing users, for storing non-conflicting OTA MAC addresses currently and in the future used by STAs associated with the first AP, and the first AP transmits conflicting OTA MAC addresses to the STA via the first management frame, and at the same time, considering compatibility with devices that do not support the OTA MAC addresses, the first AP maintains a list for storing MAC addresses of the first STA that does not support the OTA MAC addresses. Optionally, the devices that do not support the OTA MAC addresses may not be compatible, that is, the non-compatible devices that do not support the OTA MAC addresses are not allowed to associate with the first AP, then the first AP does not need to maintain a list for storing the MAC addresses of the first STA that does not support OTA MAC addresses. Accordingly, in the process described in the present application (for example, S3-5, S4-7, S5-5, S6-7), the AP does not need to check whether the transmission address (TA) of a received frame belongs to a device that does not support the OTA MAC addresses.

Optionally, the first AP may transmit the first management frame to the first STA, in a case of generating a first non-conflicting OTA MAC address of the first STA (i.e., a first OTA MAC address that does not belong to the M OTA MAC addresses, or a first OTA MAC address that does not conflict with other OTA MAC addresses in the OTA MAC address list). Furthermore, after generating an n-th non-conflicting OTA MAC address, that is, after the first AP completes creation for OTA MAC addresses of the first STA, the first AP transmits the second management frame to the first STA.

Optionally, the first AP may also transmit the first management frame to the first STA, in a case of generating an n-th non-conflicting OTA MAC address of the first STA (i.e., an n-th OTA MAC address that does not belong to the M OTA MAC addresses, or a n-th OTA MAC address that does not conflict with other OTA MAC addresses in the OTA MAC address list); where after generating the n-th non-conflicting OTA MAC address, the first AP completes creation for OTA MAC addresses of the first STA.

Specifically, for example, assuming that the first OTA MAC address is STA₁-ad₂, the first AP checks the OTA MAC address list maintained by the first AP to determine whether the STA₁-ad₂ is identifiable, where the OTA MAC address list maintained by the first AP may be shown in Table 1 above. The OTA MAC address of the first STA is the first column in Table 1. Since the first AP has stored the STA₁-ad₂ in the OTA MAC address list maintained by the first AP, the first AP determines that the STA₁-ad₂ is identifiable, and the first AP continues to process the received first frame. If the STA₁-ad₂ is not in the OTA MAC address list maintained by the first AP, the first AP checks one or more MAC addresses maintained by the first AP that do not support OTA MACs to determine the identifiability of the transmission address (TA). In a case where the STA₁-ad₂ of the first STA is identifiable, when the first AP receives the first frame transmitted by the first STA, values of "To DS" and "From DS" in the "Frame Control" field of a frame header of the first frame may indicate a category of the transmitted frame and a meaning of an address field in the frame to the first AP. When "To DS" = 0, "From DS" = 0, it means that the first frame the first AP received and transmitted by the first STA is a control frame/management frame; when "To DS" = 1, "From DS" = 0, it means that the first frame the first AP received and transmitted by the first STA is a data frame. The first AP updates the OTA MAC addresses corresponding to the first STA in the OTA MAC address list, calculates and generates STA₁-adₙ₊₁ by "IV₁+STA₁-adₙ", adds the STA₁-adₙ₊₁ to a tail of the OTA MAC addresses corresponding to the first STA in the OTA MAC address list, and deletes STA₁-ad₁. Optionally, the first STA sets a timestamp locally, and before a moment indicated by the timestamp, the first STA stores OTA MAC addresses used in a past period of time. Considering that when the STA₁-ad₂ has not yet arrived at the first AP, there may be packets with the RA address of the STA₁-ad₁ in an internal cache of the first AP, then the first STA can still receive packets with the RA address of the STA₁-ad₁. First, since the STA₁-ad₂ has not yet arrived at the first AP, the OTA MAC address list maintained by the first AP contains the STA₁-ad₁, so the first AP can forward a packet to the first STA. Secondly, since the first STA stores the OTA MAC addresses used in the past period of time within the timestamp, the first STA can further correspond the STA₁-ad₁ with the PTK by corresponding the STA₁-ad₁ with the permanent MAC in the local cache. The first STA can receive a packet with the RA address of the STA₁-ad₁ and use the PTK for decryption.

In some embodiments, the first frame is a data frame, the receiving address (RA) in the first frame is a MAC address of the first AP, a transmission address (TA) in the first frame is the first OTA MAC address, values of an Address3 field of the first frame are all zeros, or the values of the Address3 field of the first frame are random numbers. That is, the Address3 field in the first frame is an invalid field.

In some embodiments, a header or a tail of a frame body of the first frame carries a permanent MAC address of a second STA, where the second STA is a target STA of the first frame.

In some embodiments, in a case where the tail of the frame body of the first frame carries the permanent MAC address of the second STA, the permanent MAC address of the second STA occupies m₁ octets just before the end of the frame body of the first frame, and m₁ is a positive integer.

Optionally, m₁=6. Specifically, after the first AP receives the first frame, when the first AP receives a packet to parse a frame header, if "To DS" = 1, "From DS" = 0, and the values of the Address3 field are all zeros or random numbers, then after the integrity verification and decryption for the first frame are performed, a destination address (DA) is extracted from the frame body of the first frame, that is, the first AP extracts 6 octets just before the end of the frame body, thereby acquiring the permanent MAC address of the second STA.

In some embodiments, the permanent MAC address may be placed at the end of the frame body. Specifically, when the AP or STA receives the packet to parse the frame header, if "To DS" = 1, "From DS" = 0 and the values of Address3 are all zeros, then after the integrity verification and decryption for the frame are performed, the DA is extracted from the frame body, that is, the AP or STA extracts 6 octets just before the end of the frame body; when the AP or STA receives the packet to parse the frame header, if "To DS" = 0, "From DS" = 1 and the values of Address3 are all zeros, then after the integrity verification and decryption for the frame are performed, the SA is extracted from the frame body, that is, the AP or STA extracts 6 octets just before the end of the frame body; when the AP or STA receives the packet to parse the frame header, if "To DS" = 1, "From DS" = 1 and the values of Address3 are all zeros, then after the integrity verification and decryption for the frame are performed, the SA and DA are extracted from the frame body, that is, the AP or STA extracts 12 octets just before the end of the frame body, where the first 6 octets are the DA, and the last 6 octets are the SA.

For example, the first frame may be shown in FIG. 8, and the tail of the frame body of the first frame includes a MAC field, and the MAC field is used to indicate the permanent MAC address of the second STA.

In some embodiments, the permanent MAC address of the second STA is inserted into the end of the frame body of the first frame by the first STA before applying encryption and integrity protection.

In some embodiments, the first AP extracts the permanent MAC address of the second STA from the m₁ octets just before the end of the frame body of the first frame; the first AP acquires a permanent MAC address of the first STA according to the first OTA MAC address, and the first AP acquires an OTA MAC address currently used by the second STA from the OTA MAC address list according to the permanent MAC address of the second STA; and the first AP transmits a third frame to the second STA; where a transmission address (TA) in the third frame is the MAC address of the first AP, a receiving address (RA) in the third frame is the OTA MAC address currently used by the second STA, m₁ octets just before the end of the frame body of the third frame carry the permanent MAC address of the first STA, values of an Address3 field of the third frame are all zeros, or the values of the Address3 field of the third frame are random numbers. That is, the Address3 field in the third frame is an invalid field. Correspondingly, when the second STA receives the third frame transmitted by the first AP, the second STA can know a category of the frame transmitted by the first AP and a meaning of an address field in the frame according to values of "To DS" and "From DS" in the "Frame Control" field of a frame header of the third frame. Specifically, when "To DS"=0 and "From DS"=1, it means that the third frame transmitted by the first AP and received by the second STA is a data frame. Furthermore, the second STA, after applying integrity verification and decryption for the third frame, extracts an SA (i.e., the permanent MAC address MAC1 of the first STA) from the frame body of the third frame. The second STA acquires a locally stored permanent MAC address MAC2 (i.e., the permanent MAC address of the second STA is MAC2), and the second STA sets values of the SA and DA in the frame header of the third frame as MAC1 and MAC2, respectively, and delivers it to an upper layer for processing.

In some embodiments, the first AP extracts the permanent MAC address of the second STA from the m₁ octets just before the end of the frame body of the first frame, and the first AP acquires permanent MAC address of the first STA according to the first OTA MAC address; the first AP transmits a fourth frame to a second AP; where a TA in the fourth frame is the MAC address of the first AP, a RA in the fourth frame is a MAC address of the second AP, and values of an Address3 field and an Address4 field of the fourth frame are all zeros, or the values of the Address3 field and the Address4 field of the fourth frame are all random numbers; where first m₁ octets of 2m₁ octets just before the end of the frame body of the fourth frame carry the permanent MAC address of the second STA, and last m₁ octets of the 2m₁ octets just before the end of the frame body of the fourth frame carry the permanent MAC address of the first STA. Correspondingly, the second AP receives the fourth frame transmitted by the first AP; the second AP extracts the permanent MAC address of the first STA and the permanent MAC address of the second STA from the 2m₁ octets just before the end of the frame body of the fourth frame; the second AP acquires an over-the-air (OTA) MAC address currently used by the second STA from an OTA MAC address list maintained by the second AP according to the permanent MAC address of the second STA; and the second AP transmits a seventh frame to the second STA; where a transmission address (TA) in the seventh frame is the MAC address of the second AP, a receiving address (RA) in the seventh frame is the OTA MAC address currently used by the second STA, m₁ octets just before the end of the frame body of the seventh frame carry the permanent MAC address of the first STA, values of an Address3 field of the seventh frame are all zeros, or the values of the Address3 field of the seventh frame are random numbers. Furthermore, the second STA after applying integrity verification and decryption for the seventh frame, extracts an SA (i.e., the permanent MAC address MAC1 of the first STA) from the frame body of the seventh frame. The second STA acquires a locally stored permanent MAC address MAC2 (i.e., the permanent MAC address of the second STA is MAC2), and the second STA sets values of the SA and DA in the frame header of the seventh frame as MAC1 and MAC2, respectively, and delivers it to an upper layer for processing.

It should be noted that after the first AP inserts the permanent MAC address of the first STA and the permanent MAC address of the second STA into the tail of the frame body of the fourth frame, the first AP performs the encryption and integrity protection on the fourth frame, and a key used for the encryption is a secret value shared between all APs in an Extended Service Set (ESS). And the second AP decrypts the fourth frame based on the secret value shared between all APs in the ESS.

In some embodiments, in a case where the header of the frame body of the first frame carries the permanent MAC address of the second STA, the header of the frame body of the first frame includes an Address Element field, and a control field in the Address Element field includes an SA Present field and a destination address (DA) Present field, where a value of the SA Present field is used to indicate that there is no SA field for indicating an SA in the Address Element field, and a value of the DA Present field is used to indicate that there is a DA field for indicating a DA in the Address Element field, and the DA is the permanent MAC address of the second STA.

In some embodiments, a value of a first bit in a CCMP header or GCMP header of the frame body of the first frame is used to indicate the first AP to extract the permanent MAC address of the second STA from the Address Element field of the header of the frame body of the first frame.

In some embodiments, the permanent MAC address of the second STA is inserted into the address element field of the header of the frame body of the first frame by the first STA before applying encryption and integrity protection.

It should be noted that the third octet and the first 4 bits of the fourth octet in the CCMP header or GCMP header are reserved. Therefore, the value of any bit of the third octet of the CCMP header or GCMP header, or any bit of the first 4 bits of the fourth octet (such as a fourth bit in the fourth octet, which is an Ext Header in FIG. 9) of the CCMP header or GCMP header may be set to 1, to indicate the AP or STA to extract the permanent MAC address (SA/DA) from the information element in the header of the frame body.

In some embodiments, the permanent MAC address may be placed in the header of the frame body, and specifically, the third octet and the first four bits of the fourth octet in the CCMP header or GCMP header are reserved, so the value of the fourth bit in the fourth octet of the CCMP header or GCMP header may be set to 1, to indicate the AP or STA to extract the permanent MAC address (SA and/or DA) from the information element in the header of the frame body. When an "Element Identification (ID)" = 255, there is an "Element ID Extension" field (94-255 is reserved and not used) in the Element, here "Element ID" = 255, "Element ID Extension" = 94 may be used to indicate to the AP or STA that a category of the information element is "Address Element"; the AP or STA then checks a first bit and a second bit in "Control", if "SA Present" = 1, "DA Present" = 0, it means that the AP or STA needs to extract the SA from the "Address Element"; if "SA Present" = 0, "DA Present" = 1, it means that the AP or STA needs to extract the SA from the "Address Element"; if "SA Present" = 0, "DA Present" = 1, it means that the AP or STA needs to extract the DA from the "Address Element"; if "SA Present" = 1 and "DA Present" = 1, it means that the AP or STA needs to extract the DA and the SA from the "Address Element".

Specifically, for example, the first frame may be shown in FIG. 9, a key identification field of the CCMP header or GCMP header (CCMP Header/GCMP Header) of the frame body of the first frame includes an Ext Header field (i.e., the first bit), the Ext Header field occupies 1 bit, and a value of the Ext Header field is 1 or 0, which is used to indicate the first AP to extract the permanent MAC address of the second STA from the Address Element field of the header of the frame body of the first frame. As shown in FIG. 9, the header of the frame body of the first frame includes the Address Element field, and a control field in the Address Element field includes a source address (SA) Present field and a destination address (DA) Present field.

Specifically, as shown in FIG. 9, the SA Present field occupies 1 bit, and a value of the SA Present field is 1, which indicates that there is no SA field for indicating an SA in the Address Element field, and a value of the SA Present field is 0, which indicates that there is an SA field for indicating an SA in the Address Element field; or a value of the SA Present field is 0, which indicates that there is no SA field for indicating an SA in the Address Element field, and a value of the SA Present field is 1, which indicates that there is an SA field for indicating an SA in the Address Element field. For the first frame, the value of the SA Present field is used to indicate that there is no SA field for indicating an SA in the Address Element field.

Specifically, as shown in FIG. 9, the DA Present field occupies 1 bit, and a value of the DA Present field is 1, which indicates that there is no DA field for indicating a DA in the Address Element field, and a value of the DA e Present field is 0, which indicates that there is a DA field for indicating a DA in the Address Element field; or a value of the DA Present field is 0, which indicates that there is no DA field for indicating a DA in the Address Element field, and a value of the DA e Present field is 1, which indicates that there is a DA field for indicating a DA in the Address Element field. For the first frame, the value of the DA Present field is used to indicate that there is a DA field for indicating a DA in the Address Element field, and the DA is the permanent MAC address of the second STA.

In addition, as shown in FIG. 9, the CCMP header or GCMP header (CCMP Header/GCMP Header) of the frame body of the first frame further includes the following fields: a PN 0 field, a PN1 field, a reserved field, a PN2 field, a PN3 field, a PN4 field, and a PN5 field. And the key identification field of the CCMP header or GCMP header (CCMP Header/GCMP Header) of the frame body of the first frame also includes: a reserved field, an FTM field, an Ext IV field and a key identification field. And the first frame also includes: a data field, an MIC field and a frame check field.

In some embodiments, the first AP acquires the permanent MAC address of the second STA from the DA field in the Address Element field of the first frame; the first AP acquires a permanent MAC address of the first STA according to the first OTA MAC address, and the first AP acquires an OTA MAC address currently used by the second STA from the OTA MAC address list according to the permanent MAC address of the second STA; and the first AP transmits a fifth frame to the second STA; where a TA in the fifth frame is the MAC address of the first AP, a RA in the fifth frame is the OTA MAC address currently used by the second STA, and values of an Address3 field of the fifth frame are all zeros, or the values of the Address3 field of the fifth frame are random numbers; where a header of a frame body of the fifth frame includes an Address Element field, a control field in the Address Element field includes an SA Present field and a DA Present field, a value of the SA Present field is used to indicate that there is an SA field for indicating an SA in the Address Element field, and a value of the DA Present field is used to indicate that there is no DA field for indicating a DA in the Address Element field, and the SA is the permanent MAC address of the first STA. Correspondingly, when the second STA receives the fifth frame transmitted by the first AP, the second STA can know a category of the frame transmitted by the first AP and a meaning of an address field in the frame according to values of "To DS" and "From DS" in the "Frame Control" field in a frame header of the fifth frame. Specifically, when "To DS"=0 and "From DS"=1, it means that the fifth frame transmitted by the first AP and received by the second STA is a data frame. Furthermore, the second STA, after applying integrity verification and decryption for the fifth frame, extracts an SA (i.e., the permanent MAC address MAC1 of the first STA) from the frame body of the fifth frame. The second STA acquires a locally stored permanent MAC address MAC2 (i.e., the permanent MAC address of the second STA is MAC2), and the second STA sets values of the SA and DA in the frame header of the third frame as the MAC1 and MAC2, respectively, and delivers it to an upper layer for processing.

In some embodiments, a value of a first bit in a CCMP header or GCMP header of the frame body of the fifth frame is used to indicate the second STA to extract the permanent MAC address of the first STA from the Address Element field in the header of the frame body of the fifth frame.

In some embodiments, the permanent MAC address of the first STA is inserted into the Address Element field of the header of the frame body of the fifth frame by the first AP before applying encryption and integrity protection.

In some embodiments, the first AP extracts the permanent MAC address of the second STA from the Address Element field included in the header of the frame body of the first frame, and the first AP acquires permanent MAC address of the first STA according to the first OTA MAC address; and the first AP transmits a sixth frame to a second AP; where a TA in the sixth frame is the MAC address of the first AP, a RA in the sixth frame is a MAC address of the second AP, and values of an Address3 field and an Address4 field of the sixth frame are all zeros, or the values of the Address3 field and the Address4 field of the sixth frame are all random numbers; where a header of a frame body of the sixth frame includes an Address Element field, a control field in the Address Element field includes an SA Present field and a DA Present field, a value of the SA Present field is used to indicate that there is an SA field for indicating an SA in the Address Element field, and a value of the DA Present field is used to indicate that there is a DA field for indicating a DA in the Address Element field, the SA is the permanent MAC address of the first STA, and the DA is the permanent MAC address of the second STA. Correspondingly, the second AP acquires the permanent MAC address of the first STA and the permanent MAC address of the second STA from the Address Element field included in the header of the frame body of the sixth frame; the second AP acquires an over-the-air (OTA) MAC address currently used by the second STA from an OTA MAC address list maintained by the second AP according to the permanent MAC address of the second STA; and the second AP transmits an eighth frame to the second STA; where a transmission address (TA) in the eighth frame is the MAC address of the second AP, a receiving address (RA) in the eighth frame is the OTA MAC address currently used by the second STA, and values of an Address3 field of the eighth frame are all zeros, or the values of the Address3 field of the eighth frame are random numbers; where a header of a frame body of the eighth frame includes an Address Element field, a control field in the Address Element field includes an SA Present field and a DA Present field, a value of the SA Present field is used to indicate that there is an SA field for indicating an SA in the Address Element field, and a value of the DA Present field is used to indicate that there is no DA field for indicating a DA in the Address Element field, and the SA is the permanent MAC address of the first STA. Furthermore, the second STA, after applying integrity verification and decryption for the eighth frame, extracts an SA (i.e., the permanent MAC address MAC1 of the first STA) from the frame body of the eighth frame. The second STA acquires a locally stored permanent MAC address MAC2 (i.e., the permanent MAC address of the second STA is MAC2), and the second STA sets values of the SA and DA in the frame header of the eighth frame as MAC1 and MAC2, respectively, and delivers it to an upper layer for processing.

It should be noted that after the first AP inserts the permanent MAC address of the first STA and the permanent MAC address of the second STA into the Address Element field included in the header of the frame body of the sixth frame, the first AP performs the encryption and integrity protection on the sixth frame, and a key used for the encryption is a secret value shared between all APs in the ESS. And the second AP decrypts the sixth frame based on the secret value shared between all APs in the ESS.

In some embodiments, a value of a first bit in a CCMP header or GCMP header of the frame body of the sixth frame is used to indicate the second AP to extract the permanent MAC address of the first STA and the permanent MAC address of the second STA from the Address Element field in the header of the frame body of the sixth frame.

In some embodiments, the permanent MAC address of the first STA and the permanent MAC address of the second STA are inserted into the Address Element field of the header of the frame body of the sixth frame by the first AP before applying encryption and integrity protection.

In some embodiments, the first bit occupies any bit of a third octet of the CCMP header or GCMP header, or the first bit occupies any bit of first four bits of a fourth octet of the CCMP header or GCMP header.

In some embodiments, a value of a first bit in a CCMP header or GCMP header of the frame body of the eighth frame is used to indicate the second STA to extract the permanent MAC address of the first STA from the Address Element field of the header of the frame body of the eighth frame.

In some embodiments, the permanent MAC address of the first STA is inserted into the Address Element field of the header of the frame body of the eighth frame by the second AP before applying encryption and integrity protection.

In some embodiments, the first frame is the management frame or the control frame, values of a To distribution system field and a From distribution system filed in the first frame are both 0, and a TA in the first frame is the first OTA MAC address, and an RA in the first frame is a MAC address of the first AP. Optionally, furthermore, the first AP transmits a second frame to the first STA, where a TA of the second frame is the MAC address of the first AP, and an RA of the second frame is the first OTA MAC address. Correspondingly, the first STA acquires a permanent MAC address of the first STA stored locally, replacing the RA of the second frame with the permanent MAC address of the first STA, and delivering the second frame after replacing the RA to an upper layer for processing.

It should be noted that, in a case where the first frame is a management frame or a control frame, the first frame and the second frame may be frames with no associated relationship (i.e., the second frame is not a response to the first frame). Of course, the first frame and the second frame may also be frames with an associated relationship (i.e., the second frame is a response to the first frame).

Specifically, as shown in FIG. 10, the first STA obtains a locally stored OTA MAC address used currently, i.e., the first OTA MAC address; and the first STA transmits the first frame to the first AP, where the first frame is a management frame or a control frame, and values of the To distribution system field and the From distribution system field in the first frame are both 0, and the transmission address (TA) in the first frame is the first OTA MAC address, and the receiving address (RA) in the first frame is the MAC address of the first AP. After the first AP receives the first frame, the first AP checks the maintained OTA MAC address list, and determines whether the MAC address of the first AP is identifiable. Specifically, the first AP finds the first OTA MAC address in the n OTA MAC addresses of the first STA included in the OTA MAC address list maintained by the first AP. In a case where the first AP has found the first OTA MAC address in the OTA MAC address list, the first AP continues to process the first frame. In a case where the first AP has not found the first OTA MAC address in the OTA MAC address list, the first AP checks one or more maintained OTA MAC addresses that do not support the OTA MAC addresses, to determine whether the first OTA MAC address is identifiable. In a case where the first AP has found the first OTA MAC address in the one or more OTA MAC addresses, the first AP continues to process the first frame; otherwise, the first AP discards the first frame. After the first AP processes the first frame, the first AP transmits a second frame to the first STA, where a TA of the second frame is the MAC address of the first AP, and an RA of the second frame is the first OTA MAC address; and the first STA acquires the locally stored permanent MAC address of the first STA, and replaces the RA of the second frame with the permanent MAC address of the first STA, and delivers the second frame after replacing the RA to the upper layer for processing.

Therefore, in the embodiments of the present application, a first AP receives a first frame transmitted by a first station (STA) using a first over-the-air (OTA) media access control (MAC) address; the first AP finds the first OTA MAC address in n OTA MAC addresses of the first STA included in an OTA MAC address list maintained by the first AP; where the OTA MAC address list includes at least one OTA MAC address of at least one STA associated with the first AP, and the at least one STA includes the first STA, and n is a positive integer; in a case where the first AP has found the first OTA MAC address in the OTA MAC address list, the first AP continues to process the first frame; otherwise, discards the first frame. That is, the first STA can actively update the OTA MAC address at any time, thereby better protecting the privacy of the MAC address of the first STA. In addition, the OTA MAC address list maintained by the first AP includes the OTA MAC addresses that the first STA is allowed to use currently and the OTA MAC addresses that the first STA is allowed to use in a future period of time, and thus, the first AP can identify the OTA MAC address updated by the first STA based on the OTA MAC address list, and can efficiently complete an identity identification process after the OTA MAC address is changed.

The schemes in which the first STA (STA1) transmits a data frame to the second STA (STA2) by using the OTA MAC address in the present application, are described in detail below by Embodiment 1 to Embodiment 4.

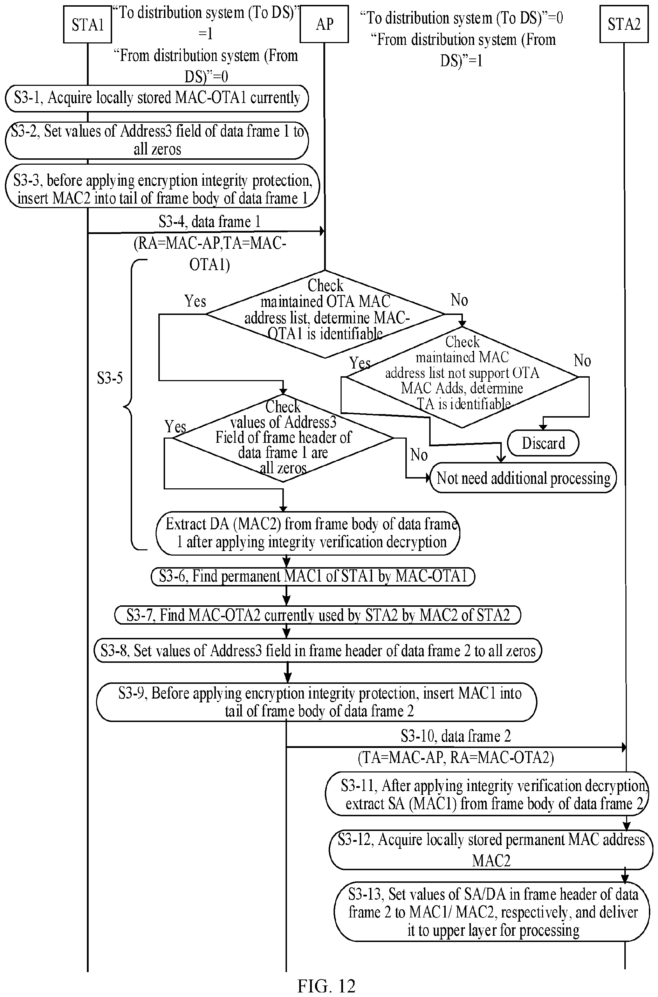

In Embodiment 1, as shown in FIG. 12, a process in which the STA1 transmits a data frame to the STA2 via an AP may be as the following S3-1 to S3-13.

S3-1, the STA1 acquires a locally stored OTA MAC address MAC-OTA1 used currently.

S3-2, the STA1 sets values of an Address3 field in a frame header of the data frame 1 to all zeros.

S3-3, the STA1, before applying encryption and integrity protection, inserts a MAC address MAC2 of the STA2 (i.e., a destination address) into a tail of a frame body of the data frame 1 (as shown in FIG. 8).

S3-4, the STA1 transmits the data frame 1 to the AP, where an RA of the data frame 1 = MAC-AP, and a TA of the data frame 1 = MAC-OTA1.

S3-5, the AP checks an OTA MAC address list maintained by the AP, to determine whether the MAC-OTA1 is identifiable; in a case where the MAC-OTA1 is identifiable, the AP checks whether the values of the Address3 field of the frame header of the data frame 1 are all zeros. When the values of the Address3 field of the frame header of the data frame 1 are all zeros, the AP, after applying integrity verification and decryption for the data frame 1, extracts a DA (i.e., a permanent MAC address MAC2 of the STA2) from an end of the frame body of the data frame 1. When the values of the Address3 field of the frame header of the data frame 1 are not all zeros, the AP does not need to perform additional processing on the data frame 1. In a case where the MAC-OTA1 is not identifiable, the AP checks the maintained MAC address list that does not support OTA MACs, to determine whether the TA is identifiable. When the TA is identifiable, the AP does not need to perform additional processing on the data frame 1; and when the TA is not identifiable, the AP discards the data frame 1.

S3-6, the AP finds the permanent MAC address MAC1 corresponding to the STA1 by the MAC-OTA1.

S3-7, the AP finds an OTA MAC address MAC-OTA2 currently used by the STA2 by the permanent MAC address MAC2 corresponding to the STA2.

S3-8, the AP sets values of an Address3 field in a frame header of a data frame 2 to all zeros.

S3-9, the AP, before applying encryption and integrity protection for the data frame 2, inserts the MAC1 into a tail of a frame body of the data frame 2 (as shown in FIG. 8).

S3-10, the AP transmits the data frame 2 to the STA2, where addresses of the data frame 2, i.e., a TA of the data frame 2 = MAC-AP, and an RA of the data frame 2= MAC-OTA2.

S3-11, the STA2, after applying integrity verification and decryption for the data frame 2, extracts an SA (i.e., the permanent MAC address MAC1 of STA1) from a tail of the frame body of data frame 2.

S3-12, the STA2 obtains a locally stored permanent MAC address MAC2.

S3-13, the STA2 sets values of an SA and a DA in the frame header of the data frame 2 to the MAC1 and MAC2, respectively, and delivers it to an upper layer for processing.

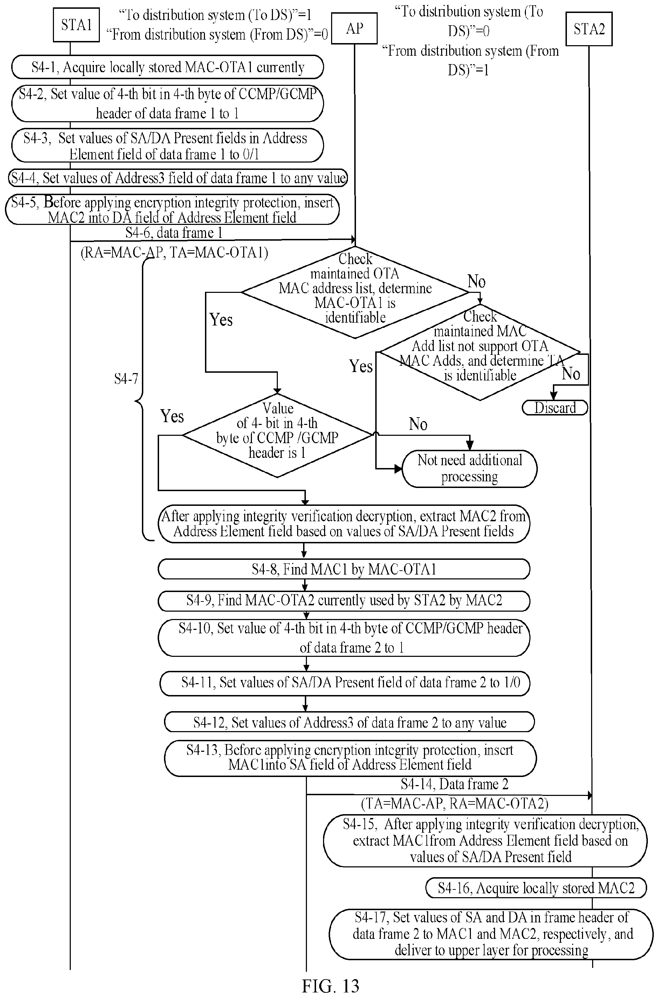

In Embodiment 2, as shown in FIG. 13, a process in which the STA1 transmits a data frame to the STA2 via an AP may be as the following S4-1 to S4-17.

S4-1, the STA1 acquires a locally stored OTA MAC address MAC-OTA1 used currently.

S4-2, the STA1 sets a value of a fourth bit in a fourth octet of a CCMP header or GCMP header of a data frame 1 to 1 (indicating the AP to extract a permanent MAC address from an Address Element field of a header of a frame body of the data frame 1).

S4-3, the SAT1 sets a value of a SA Present field in the Address Element field of the header of the frame body of the data frame 1 to 0 (indicating that there is no SA field in the Address Element field), and sets a value of a DA Present field to 1 (indicating that there is a DA field in the Address Element field).

S4-4, the STA1 sets values of Address3 of the data frame 1 to any value (e.g., random numbers, all zeros, etc.).

S4-5, the STA1, before applying encryption and integrity protection, inserts a MAC address MAC2 of the STA2 (i.e., a destination address) into the DA field in the Address Element field of the data frame 1 (as shown in FIG. 9).

S4-6, the STA1 transmits the data frame 1 to the AP, where an RA of the data frame 1 = MAC-AP, and a TA of the data frame 1 = MAC-OTA1.

S4-7, the AP checks an OTA MAC address list maintained by the AP, to determine whether the MAC-OTA1 is identifiable; in a case where the MAC-OTA1 is identifiable, the AP checks whether a value of the fourth bit in the fourth octet of the CCMP header or GCMP header of the data frame 1 is 1. When the value of the fourth bit in the fourth octet of the CCMP header or GCMP header of the data frame 1 is 1, the AP, after applying the integrity verification and decryption for the data frame 1, extracts the DA (i.e., the permanent MAC address MAC2 of the STA2) from the DA field in the Address Element field according to values of the SA Present field and the DA Present field. When the value of the fourth bit in the fourth octet of the CCMP header or GCMP header of the data frame 1 is not 1, the AP does not need to perform additional processing on the data frame 1. In a case where the MAC-OTA1 is not identifiable, the AP checks the maintained MAC address list that does not support OTA MACs, to determine whether the TA is identifiable. When the TA is identifiable, the AP does not need to perform additional processing on the data frame 1; and when the TA is not identifiable, the AP discards the data frame 1.

S4-8, the AP finds the permanent MAC address MAC1 corresponding to the STA1 by the MAC-OTA1.

S4-9, the AP finds an OTA MAC address MAC-OTA2 currently used by the STA2 by the permanent MAC address MAC2 corresponding to the STA2.

S4-10, the AP sets a value of a fourth bit in a fourth octet of a CCMP header or GCMP header of a data frame 2 to 1 (indicating the STA2 to extract the permanent MAC address from an Address Element field of a header of a frame body of the data frame 2).

S4-11, the AP sets a value of an SA Present field in the Address Element field of the header of the frame body of the data frame 2 to 1 (indicating that there is an SA field in the Address Element field), and sets a value of a DA Present field to 0 (indicating that there is no DA field in the Address Element field).

S4-12, the AP sets values of Address3 of the data frame 2 to any value (e.g., random numbers, all zeros, etc.).

S4-13, the AP, before applying encryption and integrity protection for the data frame 2, inserts the permanent MAC address MAC1 of the STA1 into the SA field in the Address Element field of the data frame 2 (as shown in FIG. 9).

S4-14, the AP transmits the data frame 2 to the STA2, where addresses of the data frame 2, i.e., a TA of the data frame 2 = MAC-AP, and an RA of the data frame 2 = MAC-OTA2.

S4-15, the STA2, after applying integrity verification and decryption for the data frame 2, extracts an SA (i.e., the permanent MAC address MAC1 of the STA1) from the SA field in the Address Element field according to values of the SA Present field and the DA Present field.

S4-16, the STA2 acquires a locally stored permanent MAC address MAC2.

S4-17, the STA2 sets values of the SA and DA in a frame header of the data frame 2 to the MAC1 and MAC2, respectively, and delivers it to an upper layer for processing.

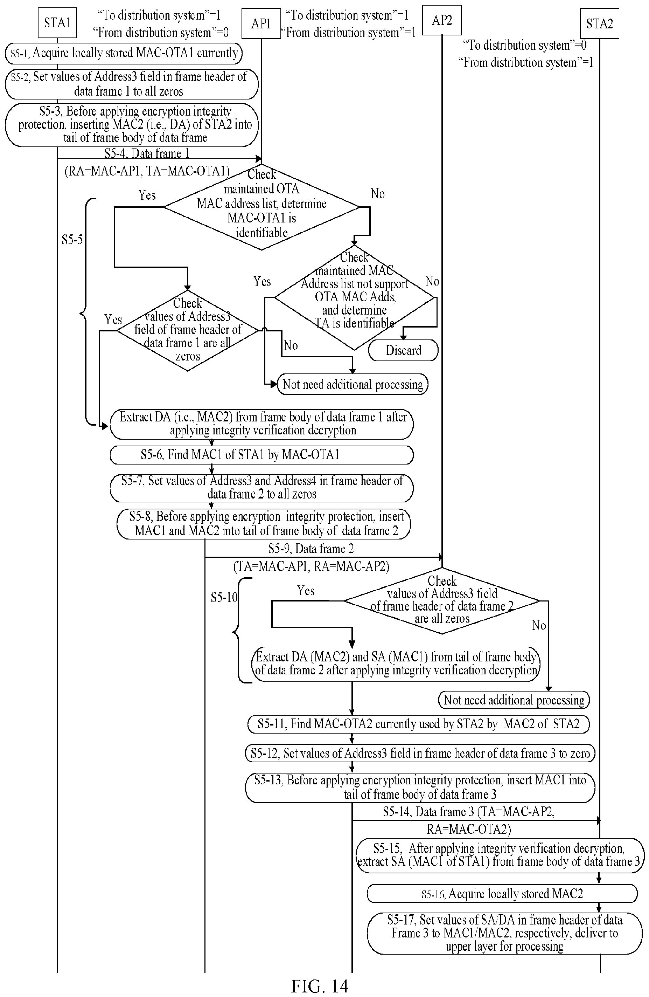

In Embodiment 3, as shown in FIG. 14, a process in which the STA1 transmits a data frame to the STA2 via an AP1 and an AP2 may be as the following S5-1 to S5-17.

S5-1, the STA1 acquires a locally stored OTA MAC address MAC-OTA1 used currently.

S5-2, the STA1 sets values of an Address3 field in a frame header of the data frame 1 to all zeros.

S5-3, the STA1, before applying encryption and integrity protection, inserts a MAC address MAC2 of the STA2 (i.e., a destination address) into a tail of a frame body of the data frame 1 (as shown in FIG. 8).

S5-4, the STA1 transmits the data frame 1 to the AP1, where an RA of the data frame 1 = MAC-AP1, and a TA of the data frame 1 = MAC-OTA1.

S5-5, the AP1 checks an OTA MAC address list maintained by the AP1, to determine whether the MAC-OTA1 is identifiable; in a case where the MAC-OTA1 is identifiable, the AP1 checks whether the values of the Address3 field of the frame header of the data frame 1 are all zeros. When the values of the Address3 field of the frame header of the data frame 1 are all zeros, the AP1, after applying integrity verification and decryption for the data frame 1, extracts a DA (i.e., a permanent MAC address MAC2 of the STA2) from an end of the frame body of the data frame 1. When the values of the Address3 field of the frame header of the data frame 1 are not all zeros, the AP1 does not need to perform additional processing on the data frame 1. In a case where the MAC-OTA1 is not identifiable, the AP1 checks the maintained MAC address list that does not support OTA MACs, to determine whether the TA is identifiable. When the TA is identifiable, the AP1 does not need to perform additional processing on the data frame 1; and when the TA is not identifiable, the AP1 discards the data frame 1.

S5-6, the AP1 finds the permanent MAC address MAC1 of the STA1 by the MAC-OTA1.

S5-7, the AP1 sets values of an Address3 field and an Address4 field in a frame header of a data frame 2 to all zeros.

S5-8, the AP1, before applying encryption and integrity protection for the data frame 2, inserts the permanent MAC address MAC1 of the STA1 and the permanent MAC address MAC2 of the STA2 into a tail of a frame body of the data frame 2 (as shown in FIG. 8 ), where the AP1 encrypts the data frame 2 by using a secret value shared between all APs in the ESS.

S5-9, the AP1 transmits the data frame 2 to the AP2, where addresses of the data frame 2, i.e., a TA of the data frame 2 = MAC-AP 1, and an RA of the data frame 2 = MAC-AP2.

S5-10, the AP2 checks whether values of the Address3 field of the frame header of the data frame 2 are all zeros; when the values of the Address3 field of the frame header of the data frame 2 are all zeros, the AP2, after applying integrity verification and decryption for the data frame 2, extracts a DA (MAC2) and an SA (MAC1) from a tail of the frame body of the data frame 2; when the values of the Address3 field of the frame header of data frame 2 are not all zeros, the AP2 does not need to perform additional processing on the data frame 2.

S5-11, the AP2 finds the OTA MAC address MAC-OTA2 currently used by the STA2 by the permanent MAC address MAC2 of the STA2.

S5-12, the AP2 sets values of an Address3 field in a frame header of a data frame 3 to all zeros.

S5-13, the AP2, before applying encryption and integrity protection for the data frame 3, inserts the MAC1 into a tail of a frame body of the data frame 3.

S5-14, the AP2 transmits the data frame 3 to the STA2, where addresses of the data frame 2, i.e., a TA of the data frame 3 = MAC-AP2, and a RA of the data frame 3= MAC-OTA2.

S5-15, the STA2, after applying integrity verification and decryption for the data frame 3, extracts an SA (i.e., the permanent MAC address MAC1 of STA1) from a tail of the frame body of data frame 3.

S5-16, the STA2 obtains a locally stored permanent MAC address MAC2.

S5-17, the STA2 sets values of an SA and a DA in the frame header of the data frame 3 to the MAC1 and MAC2, respectively, and delivers it to an upper layer for processing.

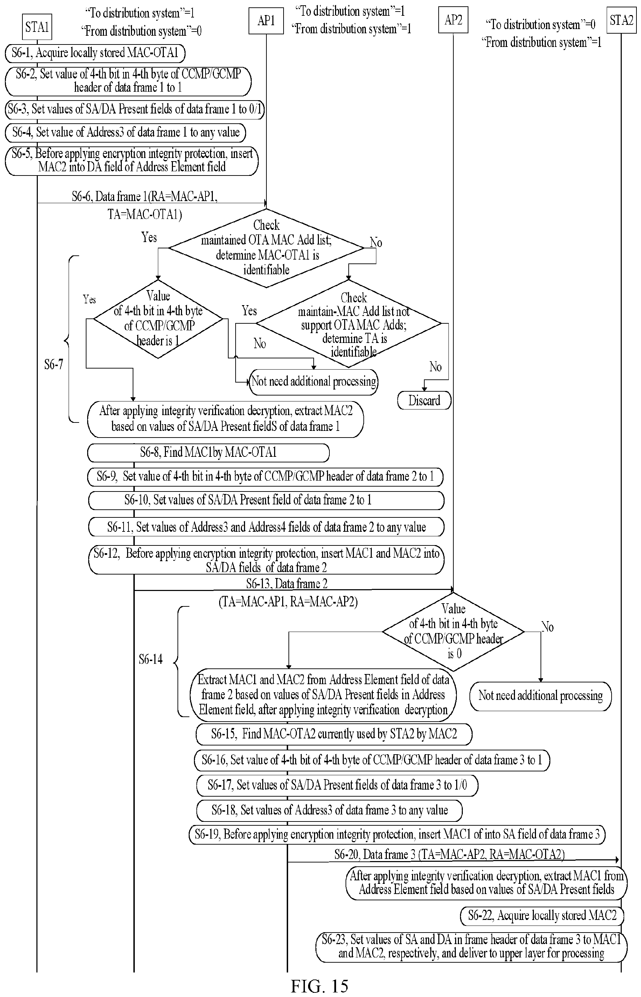

In Embodiment 4, as shown in FIG. 15, a process in which the STA1 transmits a data frame to the STA2 via an AP1 and an AP2 may be as the following S6-1 to S6-23.

S6-1, the STA1 acquires a locally stored OTA MAC address MAC-OTA1 used currently.

S6-2, the STA1 sets a value of a fourth bit in a fourth octet of a CCMP header or GCMP header of a data frame 1 to 1 (indicating the AP to extract a permanent MAC address from an Address Element field of a header of a frame body of the data frame 1).

S6-3, the SAT1 sets a value of a SA Present field in the Address Element field of the header of the frame body of the data frame 1 to 0 (indicating that there is no SA field in the Address Element field), and sets a value of a DA Present field to 1 (indicating that there is a DA field in the Address Element field).

S6-4, the STA1 sets values of Address3 of the data frame 1 to any value (e.g., random numbers, all zeros, etc.).

S4-5, the STA1, before applying encryption and integrity protection for the data frame 1, inserts a MAC address MAC2 of the STA2 (i.e., a destination address) into the DA field in the Address Element field of the data frame 1 (as shown in FIG. 9).

S6-6, the STA1 transmits the data frame 1 to the AP1, where an RA of the data frame 1 = MAC-AP1, and a TA of the data frame 1 = MAC-OTA1.

S6-7, the AP1 checks an OTA MAC address list maintained by the AP1, to determine whether the MAC-OTA1 is identifiable; in a case where the MAC-OTA1 is identifiable, the AP1 checks whether a value of the fourth bit in the fourth octet of the CCMP header or GCMP header of the data frame 1 is 1. When the value of the fourth bit in the fourth octet of the CCMP header or GCMP header of the data frame 1 is 1, the AP1, after applying the integrity verification and decryption for the data frame 1, extracts the DA (i.e., the permanent MAC address MAC2 of the STA2) from the DA field in the Address Element field according to values of the SA Present field and the DA Present field. When the value of the fourth bit in the fourth octet of the CCMP header or GCMP header of the data frame 1 is not 1, the AP1 does not need to perform additional processing on the data frame 1. In a case where the MAC-OTA1 is not identifiable, the AP1 checks the maintained MAC address list that does not support OTA MACs, to determine whether the TA is identifiable. When the TA is identifiable, the AP1 does not need to perform additional processing on the data frame 1; and when the TA is not identifiable, the AP1 discards the data frame 1.

S6-8, the AP1 finds the permanent MAC address MAC1 corresponding to the STA1 by the MAC-OTA1.

S6-9, the AP1 sets a value of a fourth bit in a fourth octet of a CCMP header or GCMP header of a data frame 2 to 1 (indicating the AP2 to extract the permanent MAC address from an Address Element field of a header of a frame body of the data frame 2).

S6-10, the AP1 sets a value of an SA Present field in an Address Element field of the header of the frame body of the data frame 2 to 1 (indicating that there is an SA field in the Address Element field), and sets a value of a DA Present field to 1 (indicating that there is a DA field in the Address Element field).

S6-11, the AP1 sets values of Address3 and Address4 of the frame body of data frame 2 to any value (e.g., random numbers, all zeros, etc.).

S6-12, the AP1, before applying encryption and integrity protection for the data frame 2, inserts the MAC1 and the MAC2 into the SA field and the DA field in the Address Element field, respectively, where the AP1 encrypts the data frame 2 by using a secret value shared between all APs in the ESS.

S6-13, the AP1 transmits the data frame 2 to the AP2, where a TA of the data frame 2 = MAC-AP1, and an RA of the data frame 2 = MAC-AP2.

S6-14, the AP2 checks whether a value of a fourth bit in a fourth octet of a CCMP header or GCMP header of the data frame 2 is 1. When the value of the fourth bit in the fourth octet of the CCMP header or GCMP header of the data frame 2 is 1, the AP2, after applying integrity verification and decryption for the data frame 2, extracts an SA (i.e., the permanent MAC address MAC1 of the STA1) from the SA field in the Address Element field and extracts a DA (i.e., the permanent MAC address MAC2 of the STA2) from the DA field in the Address Element field, according to values of the SA Present field and the DA Present field. When the value of the fourth bit in the fourth octet of the CCMP header or GCMP header of the data frame 2 is not 1, AP2 does not need to perform additional processing on the data frame 2.

S6-15, the AP2 finds an OTA MAC address MAC-OTA2 currently used by the STA2 by the permanent MAC address MAC2 corresponding to the STA2.

S6-16, the AP2 sets a value of a fourth bit in a fourth octet of a CCMP header or GCMP header of a data frame 3 to 1 (indicating the STA2 to extract the permanent MAC address from an Address Element field of a header of a frame body of the data frame 3).

S6-17, the AP2 sets a value of an SA Present field in the Address Element field of the header of the frame body of the data frame 3 to 1 (indicating that there is an SA field in the Address Element field), and sets a value of a DA Present field to 0 (indicating that there is no DA field in the Address Element field).

S6-18, the AP2 sets values of Address3 of the data frame 3 to any value (e.g., random numbers, all zeros, etc.).

S6-19, the AP2, before applying encryption and integrity protection for the data frame 3, inserts the permanent MAC address MAC1 of the STA1 (source address) into the SA field in the Address Element field of the data frame 3 (as shown in FIG. 9).

S6-20, the AP2 transmits the data frame 3 to the STA2, where addresses of the data frame 3, i.e., a TA of the data frame 2 = MAC-AP2, and an RA of the data frame 3 = MAC-OTA2.

S6-21, the STA2, after applying integrity verification and decryption for the data frame 3, extracts an SA (i.e., the permanent MAC address MAC1 of the STA1) from the SA field in the Address Element field according to values of the SA Present field and the DA Present field.

S6-22, the STA2 acquires a locally stored permanent MAC address MAC2.

S6-23, the STA2 sets values of the SA and DA in a frame header of the data frame 3 to the MAC1 and MAC2, respectively, and delivers it to an upper layer for processing.

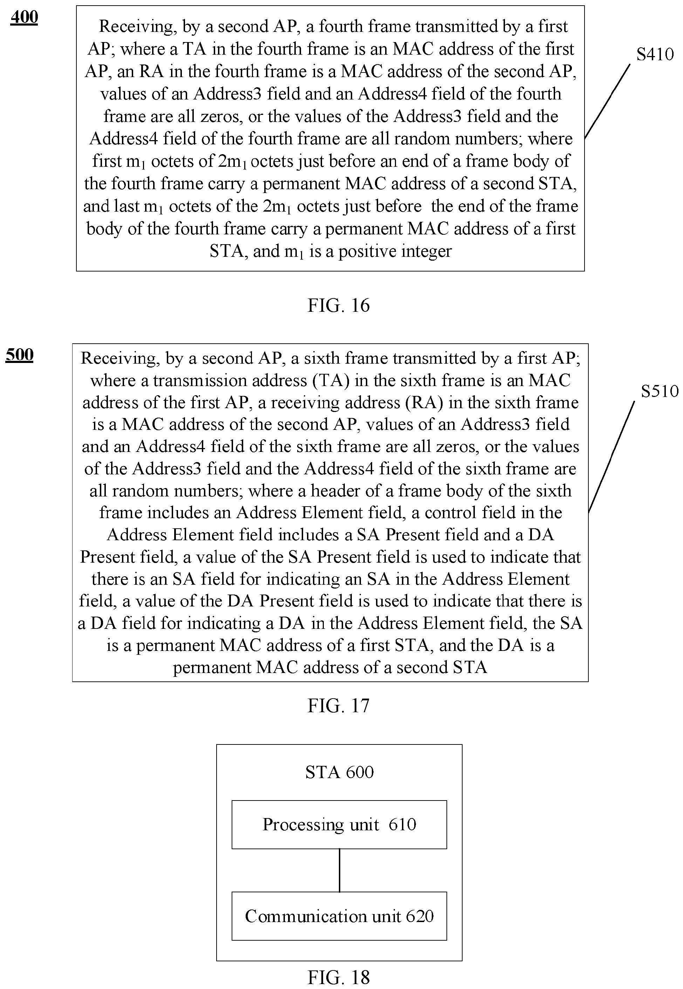

The embodiments of the first AP side of the present application are described in detail above in combination with FIG. 11 to FIG. 15. Embodiments of the second AP side of the present application are described in detail below in combination with FIG. 16. It should be understood that the embodiments of the second AP side correspond to the embodiments of the first AP side, and similar descriptions may refer to the embodiments of the first AP side.

FIG. 16 is a schematic flowchart of a method 400 for wireless communication according to the embodiments of the present application. As shown in FIG. 16, the method 400 for wireless communication may include at least a portion of the following contents:
S410, receiving, by a second AP, a fourth frame transmitted by a first AP; where a TA in the fourth frame is an MAC address of the first AP, an RA in the fourth frame is a MAC address of the second AP, values of an Address3 field and an Address4 field of the fourth frame are all zeros, or the values of the Address3 field and the Address4 field of the fourth frame are all random numbers; where first m₁ octets of 2m₁ octets just before the end of the frame body of the fourth frame carry a permanent MAC address of a second STA, and last m₁ octets of the 2m₁ octets just before the end of the frame body of the fourth frame carry a permanent MAC address of a first STA, and m₁ is a positive integer.

Optionally, m₁=6. Specifically, after the second AP receives the fourth frame, when the second AP receives a packet to parse a frame header, if "To DS" = 1, "From DS" = 1, and the values of the Address3 field and the Address4 field of the fourth frame are all zeros, or the values of the Address3 field and the Address4 field of the fourth frame are all random numbers, then the second AP, after performing integrity verification and decryption for the fourth frame, extracts a source address (SA) and a destination address (DA) from the frame body of the fourth frame. Specifically, the second AP extracts the DA (i.e., the permanent MAC address of the second STA) from first 6 octets of 12 octets just before the end of the frame body; and the second AP extracts the SA (i.e., the permanent MAC address of the first STA) from last 6 octets of the 12 octets just before the end of the frame body.

Specifically, for example, the fourth frame may be shown in FIG. 8, and the tail of the frame body of the fourth frame includes a MAC field, and the MAC field is used to indicate the permanent MAC address of the first STA and the permanent MAC address of the second STA.

In some embodiments, the second AP extracts the permanent MAC address of the first STA and the permanent MAC address of the second STA from the 2m₁ octets just before the end of the frame body of the fourth frame; the second AP acquires an over-the-air (OTA) MAC address currently used by the second STA from an OTA MAC address list maintained by the second AP according to the permanent MAC address of the second STA; and the second AP transmits a seventh frame to the second STA; where a transmission address (TA) in the seventh frame is the MAC address of the second AP, a receiving address (RA) in the seventh frame is the OTA MAC address currently used by the second STA, m₁ octets just before the end of the frame body of the seventh frame carry the permanent MAC address of the first STA, values of an Address3 field of the seventh frame are all zeros, or the values of the Address3 field of the seventh frame are random numbers. Furthermore, the second STA after applying integrity verification and decryption for the seventh frame, extracts an SA (i.e., the permanent MAC address MAC1 of the first STA) from the frame body of the seventh frame. The second STA acquires a locally stored permanent MAC address MAC2 (i.e., the permanent MAC address of the second STA is MAC2), and the second STA sets values of the SA and DA in the frame header of the seventh frame as MAC1 and MAC2, respectively, and delivers it to an upper layer for processing.

It should be noted that after the first AP inserts the permanent MAC address of the first STA and the permanent MAC address of the second STA into the tail of the frame body of the fourth frame, the first AP performs the encryption and integrity protection on the fourth frame, and a key used for the encryption is a secret value shared between all APs in an ESS. And the second AP decrypts the fourth frame based on the secret value shared between all APs in the ESS.

It should be noted that a frame structure of the seventh frame may refer to the first frame and the fourth frame shown in FIG. 8, and may not be repeated herein.

Therefore, in the embodiments of the present application, the second AP receives a fourth frame transmitted by a first AP; where a TA in the fourth frame is a media access control (MAC) address of the first AP, a receiving address (RA) in the fourth frame is a MAC address of the second AP, values of an Address3 field and an Address4 field of the fourth frame are all zeros, or the values of the Address3 field and the Address4 field of the fourth frame are all random numbers; where first m₁ octets of 2m₁ octets just before the end of the frame body of the fourth frame carry a permanent MAC address of a second STA, and last m₁ octets of the 2m₁ octets just before the end of the frame body of the fourth frame carry a permanent MAC address of a first STA, and m₁ is a positive integer. That is, the first AP may insert the permanent MAC address of a target STA (the second STA) into the first m₁ octets of the 2m₁ octets just before the end of the frame body of the frame transmitted by the first AP, and insert the permanent MAC address of a source STA (the first STA) into the last m₁ octets of the 2m₁ octets just before the end of the frame body, thereby protecting the privacy of the permanent MAC addresses.

The embodiments of the first AP side of the present application are described in detail above in combination with FIG. 11 to FIG. 15. Embodiments of the second AP side of the present application are described in detail below in combination with FIG. 16. It should be understood that the embodiments of the second AP side correspond to the embodiments of the first AP side, and similar descriptions may refer to the embodiments of the first AP side.

FIG. 17 is a schematic flowchart of a method 500 for wireless communication according to the embodiments of the present application. As shown in FIG. 17, the method 500 for wireless communication may include at least a portion of the following contents:

S510, receiving, by a second AP, a sixth frame transmitted by a first AP; where a transmission address (TA) in the sixth frame is an MAC address of the first AP, a receiving address (RA) in the sixth frame is a MAC address of the second AP, values of an Address3 field and an Address4 field of the sixth frame are all zeros, or the values of the Address3 field and the Address4 field of the sixth frame are all random numbers; where a header of a frame body of the sixth frame includes an Address Element field, a control field in the Address Element field includes a SA Present field and a DA Present field, a value of the SA Present field is used to indicate that there is an SA field for indicating an SA in the Address Element field, a value of the DA Present field is used to indicate that there is a DA field for indicating a DA in the Address Element field, the SA is a permanent MAC address of a first STA, and the DA is a permanent MAC address of a second STA.

In some embodiments, a value of a first bit in a CCMP header or GCMP header of the frame body of the sixth frame is used to indicate the second AP to extract the permanent MAC address of the first STA and the permanent MAC address of the second STA from the Address Element field in the header of the frame body of the sixth frame.

In some embodiments, the first bit occupies any bit of a third octet of the CCMP header or GCMP header, or the first bit occupies any bit of first four bits of a fourth octet of the CCMP header or GCMP header.

It should be noted that the third octet and the first 4 bits of the fourth octet in the CCMP header or GCMP header are reserved. Therefore, the value of any bit of the third octet of the CCMP header or GCMP header, or any bit of the first 4 bits of the fourth octet (such as a fourth bit in the fourth octet, which is an Ext Header in FIG. 9) of the CCMP header or GCMP header may be set to 1, to indicate the AP or STA to extract the permanent MAC address (SA/DA) from the information element in the header of the frame body.

In some embodiments, the permanent MAC address of the first STA and the permanent MAC address of the second STA are inserted into the Address Element field of the header of the frame body of the sixth frame by the first AP before applying encryption and integrity protection.

Optionally, after the second AP receives the sixth frame, when the second AP receives a packet to parse a frame header, if "To DS" = 1, "From DS" = 1, and values of the Address3 field and the Address4 field of the sixth frame are all zeros, or the values of the Address3 field and the Address4 field of the sixth frame are all random numbers, then the second AP, after performing integrity verification and decryption for the sixth frame, extracts a source address (SA) and a destination address (DA) from the frame body of the sixth frame. Specifically, the second AP extracts the SA (i.e., the permanent MAC address MAC1 of the first STA) from the SA field in the Address Element field included in the header of the frame body; and the second AP extracts the DA (i.e., the permanent MAC address MAC2 of the second STA) from the DA field in the Address Element field included in the header of the frame body.

Specifically, for example, the sixth frame may be shown in FIG. 9, a key identification field of the CCMP header or GCMP header (CCMP Header/GCMP Header) of the frame body of the sixth frame includes an Ext Header field (i.e., the first bit), the Ext Header field occupies 1 bit, and a value of the Ext Header field is 1 or 0, which is used to indicate the first AP extracts the permanent MAC address of the first STA and the permanent MAC address of the second STA from the Address Element field in the header of the frame body of the sixth frame. As shown in FIG. 9, the header of the frame body of the sixth frame includes the Address Element field, and a control field in the Address Element field includes a source address (SA) Present field and a destination address (DA) Present field.

Specifically, as shown in FIG. 9, the SA Present field occupies 1 bit, and a value of the SA Present field is 1, which indicates that there is no SA field for indicating an SA in the Address Element field, and a value of the SA Present field is 0, which indicates that there is an SA field for indicating an SA in the Address Element field; or a value of the SA Present field is 0, which indicates that there is no SA field for indicating an SA in the Address Element field, and a value of the SA Present field is 1, which indicates that there is an SA field for indicating an SA in the Address Element field. For the sixth frame, the value of the SA Present field is used to indicate that there is an SA field for indicating an SA in the Address Element field, and the SA is the permanent MAC address of the first STA.

Specifically, as shown in FIG. 9, the DA Present field occupies 1 bit, and a value of the DA Present field is 1, which indicates that there is no DA field for indicating a DA in the Address Element field, and a value of the DA e Present field is 0, which indicates that there is a DA field for indicating a DA in the Address Element field; or a value of the DA Present field is 0, which indicates that there is no DA field for indicating a DA in the Address Element field, and a value of the DA e Present field is 1, which indicates that there is a DA field for indicating a DA in the Address Element field. For the sixth frame, the value of the DA Present field is used to indicate that there is a DA field for indicating a DA in the Address Element field, and the DA is the permanent MAC address of the second STA.

In addition, as shown in FIG. 9, the CCMP header or GCMP header (CCMP Header/GCMP Header) of the frame body of the sixth frame further includes the following fields: a PN 0 field, a PN1 field, a reserved field, a PN2 field, a PN3 field, a PN4 field, and a PN5 field. And the key identification field of the CCMP header or GCMP header (CCMP Header/GCMP Header) of the frame body of the sixth frame also includes: a reserved field, an FTM field, an Ext IV field and a key identification field. And the sixth frame also includes: a data field, an MIC field and a frame check field.

In some embodiments, the second AP acquires the permanent MAC address of the first STA and the permanent MAC address of the second STA from the Address Element field included in the header of the frame body of the sixth frame; the second AP acquires an over-the-air (OTA) MAC address currently used by the second STA from an OTA MAC address list maintained by the second AP according to the permanent MAC address of the second STA; and the second AP transmits an eighth frame to the second STA; where a transmission address (TA) in the eighth frame is the MAC address of the second AP, a receiving address (RA) in the eighth frame is the OTA MAC address currently used by the second STA, and values of an Address3 field of the eighth frame are all zeros, or the values of the Address3 field of the eighth frame are random numbers; where a header of a frame body of the eighth frame includes an Address Element field, a control field in the Address Element field includes an SA Present field and a DA Present field, a value of the SA Present field is used to indicate that there is an SA field for indicating an SA in the Address Element field, and a value of the DA Present field is used to indicate that there is no DA field for indicating a DA in the Address Element field, and the SA is the permanent MAC address of the first STA. Furthermore, the second STA, after applying integrity verification and decryption for the eighth frame, extracts an SA (i.e., the permanent MAC address MAC1 of the first STA) from the frame body of the eighth frame. The second STA acquires a locally stored permanent MAC address MAC2 (i.e., the permanent MAC address of the second STA is MAC2), and the second STA sets values of the SA and DA in the frame header of the eighth frame as MAC1 and MAC2, respectively, and delivers it to an upper layer for processing.

It should be noted that after the first AP inserts the permanent MAC address of the first STA and the permanent MAC address of the second STA into the Address Element field included in the header of the frame body of the sixth frame, the first AP performs the encryption and integrity protection on the sixth frame, and a key used for the encryption is a secret value shared between all APs in the ESS. And the second AP decrypts the sixth frame based on the secret value shared between all APs in the ESS.

In some embodiments, a value of a first bit in a CCMP header or GCMP header of the frame body of the eighth frame is used to indicate the second STA to extract the permanent MAC address of the first STA from the Address Element field of the header of the frame body of the eighth frame.

In some embodiments, the permanent MAC address of the first STA is inserted into the Address Element field of the header of the frame body of the eighth frame by the second AP before applying encryption and integrity protection.

It should be noted that a frame structure of the eighth frame may refer to the first frame and the sixth frame shown in FIG. 9, and may not be repeated herein.

Therefore, in the embodiments of the present application, the second AP receives a sixth frame transmitted by the first AP; where a TA in the sixth frame is the MAC address of the first AP, an RA in the sixth frame is the MAC address of the second AP, values of an Address3 field and an Address4 field of the sixth frame are all zeros, or the values of the Address3 field and the Address4 field of the sixth frame are all random numbers; where a header of a frame body of the sixth frame includes an Address Element field, a control field in the Address Element field includes an SA Present field and a DA Present field, a value of the SA Present field is used to indicate that there is an SA field for indicating an SA in the Address Element field, a value of the DA Present field is used to indicate that there is a DA field for indicating a DA in the Address Element field, the SA is the permanent MAC address of the first STA, and the DA is the permanent MAC address of the second STA. That is, the first AP may insert the permanent MAC address of the source STA (the first STA) and the permanent MAC address of the target STA (the second STA) into the Address Element field included in the header of the frame body of the frame transmitted by the first AP, thereby protecting the privacy of the permanent MAC addresses.

The method embodiments of the present application are described in detail above in combination with FIG. 2 to FIG. 17, and apparatus embodiments of the present application are described in detail below in combination with FIG. 18 to FIG. 21. It should be understood that the apparatus embodiments correspond to the method embodiments, and similar descriptions may refer to the method embodiments.

FIG. 18 shows a schematic block diagram of a STA 600 according to the embodiments of the present application. As shown in FIG. 18, the STA 600 includes:
a processing unit 610, configured to generate a first OTA MAC address according to a first secret value and a current OTA MAC address, where the first OTA MAC address does not belong to M OTA MAC addresses indicated by a first AP, the M OTA MAC addresses are OTA MAC addresses that conflict with an OTA MAC address in an OTA MAC address list maintained by the first AP, and the first secret value is derived based on secret information shared between the first STA and the first AP, M is an integer, and M≥0;
a communication unit 620, configured to transmit a first frame to the first AP by using the first OTA MAC address, where the first frame is a management frame or a control frame, or the first frame is a data frame.

In some embodiments, the processing unit 610 is specifically configured to:
generate a new OTA MAC address according to the first secret value and the current OTA MAC address;
in a case where the new OTA MAC address does not belong to the MOTA MAC addresses, determine the new OTA MAC address as the first OTA MAC address;
in a case where the new OTA MAC address belongs to the M OTA MAC addresses, generate a next OTA MAC address according to the new OTA MAC address and the first secret value, until a generated OTA MAC address does not belong to the M OTA MAC addresses, and determine the generated OTA MAC address that does not belong to the MOTA MAC addresses as the first OTA MAC address.

In some embodiments, the processing unit 610 is further configured to generate an initial OTA MAC address according to the first secret value and a permanent MAC address of the first STA;
in a case where the initial OTA MAC address does not belong to the M OTA MAC addresses, the processing unit 610 is further configured to determine the initial OTA MAC address as a first OTA MAC address;
in a case where the initial OTA MAC address belongs to the M OTA MAC addresses, the processing unit 610 is further configured to generate a next OTA MAC address according to the initial OTA MAC address and the first secret value, until a generated OTA MAC address does not belong to the M OTA MAC addresses, and the processing unit 610 is further configured to determine the generated OTA MAC address that does not belong to the MOTA MAC addresses as a first OTA MAC address.

In some embodiments, the communication unit 620 is further configured to receive a first management frame transmitted by the first AP;
where the first management frame is used to indicate the first STA to enable an OTA MAC address, or the first management frame is used to indicate that the first STA is allowed to change an OTA MAC address for communication.

In some embodiments, the first management frame carries the M OTA MAC addresses indicated by the first AP.

In some embodiments, the first management frame includes an OTA MAC Present field, the OTA MAC Present field is used to indicate whether there is an OTA MAC address list field in the first management frame, and the OTA MAC address list field is used to indicate the MOTA MAC addresses.

In some embodiments, in a case where a value of the OTA MAC Present field indicates that there is the OTA MAC address list field in the first management frame, M≥1;
in a case where the value of the OTA MAC Present field indicates that there is no OTA MAC address list field in the first management frame, M=0.

In some embodiments, the communication unit 620 is further configured to use temporarily a permanent MAC address of the first STA for communication, before receiving the first management frame.

In some embodiments, the communication unit 620 is further configured to receive a second management frame transmitted by the first AP;
where a frame format of the second management frame is the same as a frame format of the first management frame, and the second management frame is used to indicate updating an OTA MAC address indicated by the first AP that conflicts with an OTA MAC address in the OTA MAC address list maintained by the first AP.

In some embodiments, in a case where the first frame is the data frame, a receiving address (RA) in the first frame is a MAC address of the first AP, a transmission address (TA) in the first frame is the first OTA MAC address, and a header or a tail of a frame body of the first frame carries a permanent MAC address of a second STA, where the second STA is a target STA of the first frame.

In some embodiments, in a case where the tail of the frame body of the first frame carries the permanent MAC address of the second STA, the permanent MAC address of the second STA occupies m₁ octets just before the end of the frame body of the first frame, and m₁ is a positive integer.

In some embodiments, the permanent MAC address of the second STA is inserted into the tail of the frame body of the first frame by the first STA before applying encryption and integrity protection.

In some embodiments, in a case where the header of the frame body of the first frame carries the permanent MAC address of the second STA, the header of the frame body of the first frame includes an Address Element field, and a control field in the Address Element field includes an SA Present field and a destination address (DA) Present field, where a value of the SA Present field is used to indicate that there is no SA field for indicating an SA in the Address Element field, and a value of the DA Present field is used to indicate that there is a DA field for indicating a DA in the Address Element field, and the DA is the permanent MAC address of the second STA.

In some embodiments, a value of a first bit in a CCMP header or GCMP header of the frame body of the first frame is used to indicate the first AP to extract the permanent MAC address of the second STA from the Address Element field of the header of the frame body of the first frame.

In some embodiments, the first bit occupies any bit of a third octet of the CCMP header or GCMP header, or the first bit occupies any bit of first four bits of a fourth octet of the CCMP header or GCMP header.

In some embodiments, the permanent MAC address of the second STA is inserted into the Address Element field of the header of the frame body of the first frame by the first STA before applying encryption and integrity protection.

In some embodiments, a value of a To distribution system field of the first frame is 1, a value of a From distribution system field of the first frame is 0, and values of an Address3 field of the first frame are all zeros, or the values of the Address3 field of the first frame are random numbers.

In some embodiments, in a case where the first frame is the management frame or the control frame, values of a To distribution system field and a From distribution system filed in the first frame are both 0, and a transmission address (TA) in the first frame is the first OTA MAC address, and a receiving address (RA) in the first frame is a MAC address of the first AP.

In some embodiments, the communication unit 620 is further configured to receive a second frame transmitted by the first AP, where a TA of the second frame is the MAC address of the first AP, and an RA of the second frame is the first OTA MAC address;
the processing unit 610 is further configured to acquire a permanent MAC address of the first STA stored locally, replace the RA of the second frame with the permanent MAC address of the first STA, and deliver the second frame after replacing the RA to an upper layer for processing.

In some embodiments, the secret information shared between the first STA and the first AP includes one of: a pairwise transient key (PTK), or partial information of the PTK.

In some embodiments, the above-mentioned communication unit may be a communication interface or a transceiver, or an input/output interface of a communication chip or a system on chip. The above-mentioned processing unit may be one or more processors.

It should be understood that the STA 600 according to the embodiments of the present application may correspond to the first STA in the method embodiments of the present application, and the above-mentioned and other operations and/or functions of various units in the STA 600 are respectively for implementing the corresponding processes of the first STA in the method 200 shown in FIG. 2, which are not repeated herein for the sake of brevity.

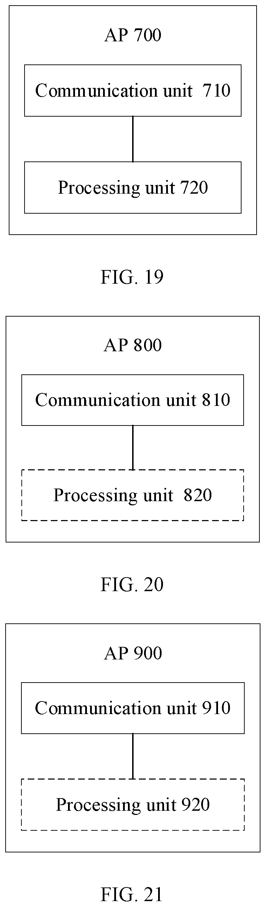

FIG. 19 shows a schematic block diagram of an AP 700 according to the embodiments of the present application. The AP 700 is a first AP. As shown in FIG. 19, the AP 700 includes:
a communication unit 710, configured to receive a first frame transmitted by a first STA using a first OTA MAC address;
a processing unit 720, configured to find the first OTA MAC address in n OTA MAC addresses of the first STA included in an OTA MAC address list maintained by the first AP; where the OTA MAC address list includes at least one OTA MAC address of at least one STA associated with the first AP, and the at least one STA includes the first STA, and n is a positive integer;
in a case where the first AP has found the first OTA MAC address in the OTA MAC address list, the processing unit 720 is further configured to continue to process the first frame; otherwise, discard the first frame.

In some embodiments, the processing unit 720 is further configured to delete from the OTA MAC address list, OTA MAC addresses located before the first OTA MAC address among the n OTA MAC addresses of the first STA;
the processing unit 720 is further configured to generate an OTA MAC address i according to an OTA MAC address of the first STA at the end of the OTA MAC address list and a first secret value;
in a case where the OTA MAC address i does not conflict with any OTA MAC address in the OTA MAC address list, the processing unit 720 is further configured to add the OTA MAC address i into the OTA MAC address list;
in a case where the OTA MAC address i conflicts with an OTA MAC address in the OTA MAC address list, the processing unit 720 is further configured to generate a next OTA MAC address according to the OTA MAC address i and the first secret value, until a generated OTA MAC address does not conflict with any OTA MAC address in the OTA MAC address list, and the processing unit 720 is further configured to add the generated OTA MAC address that does not conflict with any OTA MAC address in the OTA MAC address list into the OTA MAC address list; and
the processing unit 720 is further configured to maintain a number of OTA MAC addresses of the first STA in the OTA MAC address list as n.

In some embodiments, the processing unit 720 is further configured to generate an initial OTA MAC address according to a first secret value and a permanent MAC address of the first STA;
in a case where the initial OTA MAC address does not conflict with any OTA MAC address in the OTA MAC address list, the processing unit 720 is further configured to add the initial OTA MAC address into the OTA MAC address list, and the initial OTA MAC address being a first OTA MAC address of the first STA in the OTA MAC address list; and
in a case where the initial OTA MAC address conflicts with an OTA MAC address in the OTA MAC address list, the processing unit 720 is further configured to generate a next OTA MAC address according to the initial OTA MAC address and the first secret value, until a generated OTA MAC address does not conflict with any OTA MAC address in the OTA MAC address list, and the processing unit 720 is further configured to add the generated OTA MAC address that does not conflict with any OTA MAC address in the OTA MAC address list into the OTA MAC address list, and the newly generated OTA MAC address being a first OTA MAC address of the first STA in the OTA MAC address list.

In some embodiments, the processing unit 720 is further configured to generate an OTA MAC address j according to the first secret value and the first OTA MAC address;
in a case where the OTA MAC address j does not conflict with any OTA MAC address in the OTA MAC address list, the processing unit 720 is further configured to add the OTA MAC address j into the OTA MAC address list;
in a case where the OTA MAC address j conflicts with an OTA MAC address in the OTA MAC address list, the processing unit 720 is further configured to generate a next OTA MAC address according to the OTA MAC address j and the first secret value, until a generated OTA MAC address does not conflict with any OTA MAC address in the OTA MAC address list, and the processing unit 720 is further configured to add the generated OTA MAC address that does not conflict with any OTA MAC address in the OTA MAC address list into the OTA MAC address list; and
in a case where a number of OTA MAC addresses of the first STA in the OTA MAC address list is n, the processing unit 720 is further configured to complete creation for OTA MAC addresses of the first STA.

In some embodiments, the communication unit 710 is further configured to transmit a first management frame to the first STA;
where the first management frame is used to indicate the first STA to enable an OTA MAC address, or the first management frame is used to indicate that the first STA is allowed to change an OTA MAC address for communication.

In some embodiments, the first management frame carries M OTA MAC addresses indicated by the first AP that conflict with an OTA MAC address in the OTA MAC address list maintained by the first AP, M is an integer, and M≥0.

In some embodiments, the first management frame includes an OTA MAC Present field, the OTA MAC Present field is used to indicate whether there is an OTA MAC address list field in the first management frame, and the OTA MAC address list field is used to indicate the MOTA MAC addresses.

In some embodiments, in a case where a value of the OTA MAC Present field indicates that there is the OTA MAC address list field in the first management frame, M≥1;
in a case where the value of the OTA MAC Present field indicates that there is no OTA MAC address list field in the first management frame, M=0.

In some embodiments, the first STA, before receiving the first management frame, temporarily uses a permanent MAC address of the first STA for communication.

In some embodiments, the communication unit 710 is further configured to transmit a second management frame to the first STA;
where a frame format of the second management frame is the same as a frame format of the first management frame, and the second management frame is used to indicate updating an OTA MAC address indicated by the first AP that conflicts with an OTA MAC address in the OTA MAC address list maintained by the first AP.

In some embodiments, the first secret value is derived based on secret information shared between the first STA and the first AP.

In some embodiments, the secret information shared between the first STA and the first AP includes one of: a pairwise transient key (PTK), or partial information of the PTK.

In some embodiments, the first frame is a data frame, a receiving address (RA) in the first frame is a MAC address of the first AP, a transmission address (TA) in the first frame is the first OTA MAC address, and a header or a tail of a frame body of the first frame carries a permanent MAC address of a second STA; where the second STA is a target STA of the first frame, and values of an Address3 field of the first frame are all zeros, or the values of the Address3 field of the first frame are random numbers.

In some embodiments, in a case where the tail of the frame body of the first frame carries the permanent MAC address of the second STA, the permanent MAC address of the second STA occupies m₁ octets just before the end of the frame body of the first frame, and m₁ is a positive integer.

In some embodiments, the permanent MAC address of the second STA is inserted into the end of the frame body of the first frame by the first STA before applying encryption and integrity protection.

In some embodiments, the processing unit 720 is further configured to extract the permanent MAC address of the second STA from the m₁ octets just before the end of the frame body of the first frame;
the processing unit 720 is further configured to acquire a permanent MAC address of the first STA according to the first OTA MAC address, and the processing unit 720 is further configured to acquire an OTA MAC address currently used by the second STA from the OTA MAC address list according to the permanent MAC address of the second STA
the communication unit 710 is also used to transmit a third frame to the second STA; where a transmission address (TA) in the third frame is the MAC address of the first AP, a receiving address (RA) in the third frame is the OTA MAC address currently used by the second STA, m₁ octets just before the end of the frame body of the third frame carry the permanent MAC address of the first STA, values of an Address3 field of the third frame are all zeros, or the values of the Address3 field of the third frame are random numbers.

In some embodiments, the processing unit 720 is further configured to extract the permanent MAC address of the second STA from the m₁ octets just before the end of the frame body of the first frame, and the processing unit 720 is further configured to acquire a permanent MAC address of the first STA according to the first OTA MAC address; and
the communication unit 710 is further configured to transmit a fourth frame to a second AP; where a TA in the fourth frame is the MAC address of the first AP, an RA in the fourth frame is an MAC address of the second AP, and values of an Address3 field and an Address4 field of the fourth frame are all zeros, or the values of the Address3 field and the Address4 field of the fourth frame are all random numbers;
where first m₁ octets of 2m₁ octets just before the end of the frame body of the fourth frame carry the permanent MAC address of the second STA, and last m₁ octets of the 2m₁ octets just before the end of the frame body of the fourth frame carry the permanent MAC address of the first STA.

In some embodiments, in a case where the header of the frame body of the first frame carries the permanent MAC address of the second STA, the header of the frame body of the first frame includes an Address Element field, and a control field in the Address Element field includes a SA Present field and a destination address (DA) Present field, where a value of the SA Present field is used to indicate that there is no SA field for indicating an SA in the Address Element field, and a value of the DA Present field is used to indicate that there is a DA field for indicating a DA in the Address Element field, and the DA is the permanent MAC address of the second STA.

In some embodiments, a value of a first bit in a CCMP header or GCMP header of the frame body of the first frame is used to indicate the first AP to extract the permanent MAC address of the second STA from the Address Element field of the header of the frame body of the first frame.

In some embodiments, the permanent MAC address of the second STA is inserted into the Address Element field of the header of the frame body of the first frame by the first STA before applying encryption and integrity protection.

In some embodiments, the processing unit 720 is further configured to acquire the permanent MAC address of the second STA from the DA field in the Address Element field of the first frame;
the processing unit 720 is further configured to acquire a permanent MAC address of the first STA according to the first OTA MAC address, and the processing unit 720 is further configured to acquire an OTA MAC address currently used by the second STA from the OTA MAC address list according to the permanent MAC address of the second STA; and
the communication unit 710 is further configured to transmit a fifth frame to the second STA; where a TA in the fifth frame is the MAC address of the first AP, an RA in the fifth frame is the OTA MAC address currently used by the second STA, and values of an Address3 field of the fifth frame are all zeros, or the values of the Address3 field of the fifth frame are random numbers;
where a header of a frame body of the fifth frame includes an Address Element field, a control field in the Address Element field includes an SA Present field and a DA Present field, a value of the SA Present field is used to indicate that there is an SA field for indicating an SA in the Address Element field, and a value of the DA Present field is used to indicate that there is no DA field for indicating a DA in the Address Element field, and the SA is the permanent MAC address of the first STA.

In some embodiments, a value of a first bit in a CCMP header or GCMP header of the frame body of the fifth frame is used to indicate the second STA to extract the permanent MAC address of the first STA from the Address Element field in the header of the frame body of the fifth frame.

In some embodiments, the permanent MAC address of the first STA is inserted into the Address Element field of the header of the frame body of the fifth frame by the first AP before applying encryption and integrity protection.

In some embodiments, the processing unit 720 is further configured to extract the permanent MAC address of the second STA from the Address Element field included in the header of the frame body of the first frame, and the processing unit 720 is further configured to acquire permanent MAC address of the first STA according to the first OTA MAC address; and
the communication unit 710 is further configured to transmit a sixth frame to a second AP; where a TA in the sixth frame is the MAC address of the first AP, an RA in the sixth frame is an MAC address of the second AP, and values of an Address3 field and an Address4 field of the sixth frame are all zeros, or the values of the Address3 field and the Address4 field of the sixth frame are all random numbers;
where a header of a frame body of the sixth frame includes an Address Element field, a control field in the Address Element field includes an SA Present field and a DA Present field, a value of the SA Present field is used to indicate that there is an SA field for indicating an SA in the Address Element field, and a value of the DA Present field is used to indicate that there is a DA field for indicating a DA in the Address Element field, the SA is the permanent MAC address of the first STA, and the DA is the permanent MAC address of the second STA.

In some embodiments, a value of a first bit in a CCMP header or GCMP header of the frame body of the sixth frame is used to indicate the second AP to extract the permanent MAC address of the first STA and the permanent MAC address of the second STA from the Address Element field in the header of the frame body of the sixth frame.

In some embodiments, the permanent MAC address of the first STA and the permanent MAC address of the second STA are inserted into the Address Element field of the header of the frame body of the sixth frame by the first AP before applying encryption and integrity protection.

In some embodiments, the first bit occupies any bit of a third octet of the CCMP header or GCMP header, or the first bit occupies any bit of first four bits of a fourth octet of the CCMP header or GCMP header.

In some embodiments, the first frame is a management frame or a control frame, values of a To distribution system field and a From distribution system filed in the first frame are both 0, and a TA in the first frame is the first OTA MAC address, and a RA in the first frame is a MAC address of the first AP.

In some embodiments, the communication unit 710 is further configured to transmit a second frame to the first STA, where a TA of the second frame is the MAC address of the first AP, and an RA of the second frame is the first OTA MAC address.

In some embodiments, the above-mentioned communication unit may be a communication interface or a transceiver, or an input/output interface of a communication chip or a system on chip. The above-mentioned processing unit may be one or more processors.

It should be understood that the AP 700 according to the embodiments of the present application may correspond to the first AP in the method embodiments of the present application, and the above-mentioned and other operations and/or functions of various units in the AP 700 are respectively for implementing the corresponding processes of the first AP in the method 300 shown in FIG. 11, which are not repeated herein for the sake of brevity.

FIG. 20 shows a schematic block diagram of an AP 800 according to the embodiments of the present application. The AP 800 is a second AP. As shown in FIG. 20, the AP 800 includes:
a communication unit 810, configured to receive a fourth frame transmitted by a first AP;
where a TA in the fourth frame is a media access control (MAC) address of the first AP, a receiving address (RA) in the fourth frame is a MAC address of the second AP, values of an Address3 field and an Address4 field of the fourth frame are all zeros, or the values of the Address3 field and the Address4 field of the fourth frame are all random numbers;
where first m₁ octets of 2m₁ octets just before the end of the frame body of the fourth frame carry a permanent MAC address of a second STA, and last m₁ octets of the 2m₁ octets just before the end of the frame body of the fourth frame carry a permanent MAC address of a first STA, and m₁ is a positive integer.

In some embodiments, the AP 800 further includes: a processing unit 820;
the processing unit 820 is configured to extract the permanent MAC address of the first STA and the permanent MAC address of the second STA from the 2m₁ octets just before the end of the frame body of the fourth frame;
the processing unit 820 is configured to acquire an over-the-air (OTA) MAC address currently used by the second STA from an OTA MAC address list maintained by the second AP according to the permanent MAC address of the second STA; and
the communication unit 810 is further configured to transmit a seventh frame to the second STA; where a transmission address (TA) in the seventh frame is the MAC address of the second AP, a receiving address (RA) in the seventh frame is the OTA MAC address currently used by the second STA, m₁ octets just before the end of the frame body of the seventh frame carry the permanent MAC address of the first STA, values of an Address3 field of the seventh frame are all zeros, or the values of the Address3 field of the seventh frame are random numbers.

In some embodiments, the above-mentioned communication unit may be a communication interface or a transceiver, or an input/output interface of a communication chip or a system on chip. The above-mentioned processing unit may be one or more processors.

It should be understood that the AP 800 according to the embodiments of the present application may correspond to the second AP in the method embodiments of the present application, and the above-mentioned and other operations and/or functions of various units in the AP 800 are respectively for implementing the corresponding processes of the second AP in the method 400 shown in FIG. 16, which are not repeated herein for the sake of brevity.

FIG. 21 shows a schematic block diagram of an AP 900 according to the embodiments of the present application. The AP 900 is a second AP. As shown in FIG. 21, the AP 900 includes:
a communication unit 910, configured to receive a sixth frame transmitted by a first AP;
where a transmission address (TA) in the sixth frame is a media access control (MAC) address of the first AP, a receiving address (RA) in the sixth frame is a MAC address of the second AP, values of an Address3 field and an Address4 field of the sixth frame are all zeros, or the values of the Address3 field and the Address4 field of the sixth frame are all random numbers;
where a header of a frame body of the sixth frame includes an Address Element field, a control field in the Address Element field includes a source address (SA) Present field and a Present destination address (DA) field, a value of the SA Present field is used to indicate that there is an SA field for indicating an SA in the Address Element field, a value of the DA Present field is used to indicate that there is a DA field for indicating a DA in the Address Element field, the SA is a permanent MAC address of a first STA, and the DA is a permanent MAC address of a second STA.

In some embodiments, a value of a first bit in a CCMP header or GCMP header of the frame body of the sixth frame is used to indicate the second AP to extract the permanent MAC address of the first STA and the permanent MAC address of the second STA from the Address Element field in the header of the frame body of the sixth frame_{∘}

In some embodiments, the permanent MAC address of the first STA and the permanent MAC address of the second STA are inserted into the Address Element field of the header of the frame body of the sixth frame by the first AP before applying encryption and integrity protection.

In some embodiments, the AP 900 further includes: a processing unit 920;
the processing unit 920 is configured to acquire the permanent MAC address of the first STA and the permanent MAC address of the second STA from the Address Element field included in the header of the frame body of the sixth frame;
the processing unit 920 is further configured to acquire an over-the-air (OTA) MAC address currently used by the second STA from an OTA MAC address list maintained by the second AP according to the permanent MAC address of the second STA; and
the communication unit 910 is further configured to transmit an eighth frame to the second STA; where a transmission address (TA) in the eighth frame is the MAC address of the second AP, a receiving address (RA) in the eighth frame is the OTA MAC address currently used by the second STA, and values of an Address3 field of the eighth frame are all zeros, or the values of the Address3 field of the eighth frame are random numbers;
where a header of a frame body of the eighth frame includes an Address Element field, a control field in the Address Element field includes an SA Present field and a DA Present field, a value of the SA Present field is used to indicate that there is an SA field for indicating an SA in the Address Element field, and a value of the DA Present field is used to indicate that there is no DA field for indicating a DA in the Address Element field, and the SA is the permanent MAC address of the first STA.

In some embodiments, a value of a first bit in a CCMP header or GCMP header of the frame body of the eighth frame is used to indicate the second STA to extract the permanent MAC address of the first STA from the Address Element field of the header of the frame body of the eighth frame.

In some embodiments, the permanent MAC address of the first STA is inserted into the Address Element field of the header of the frame body of the eighth frame by the second AP before applying encryption and integrity protection.

In some embodiments, the first bit occupies any bit of a third octet of the CCMP header or GCMP header, or the first bit occupies any bit of first four bits of a fourth octet of the CCMP header or GCMP header.

In some embodiments, the above-mentioned communication unit may be a communication interface or a transceiver, or an input/output interface of a communication chip or a system on chip. The above-mentioned processing unit may be one or more processors.

It should be understood that the AP 900 according to the embodiments of the present application may correspond to the second AP in the method embodiments of the present application, and the above-mentioned and other operations and/or functions of various units in the AP 900 are respectively for implementing the corresponding processes of the second AP in the method 500 shown in FIG. 17, which are not repeated herein for the sake of brevity.

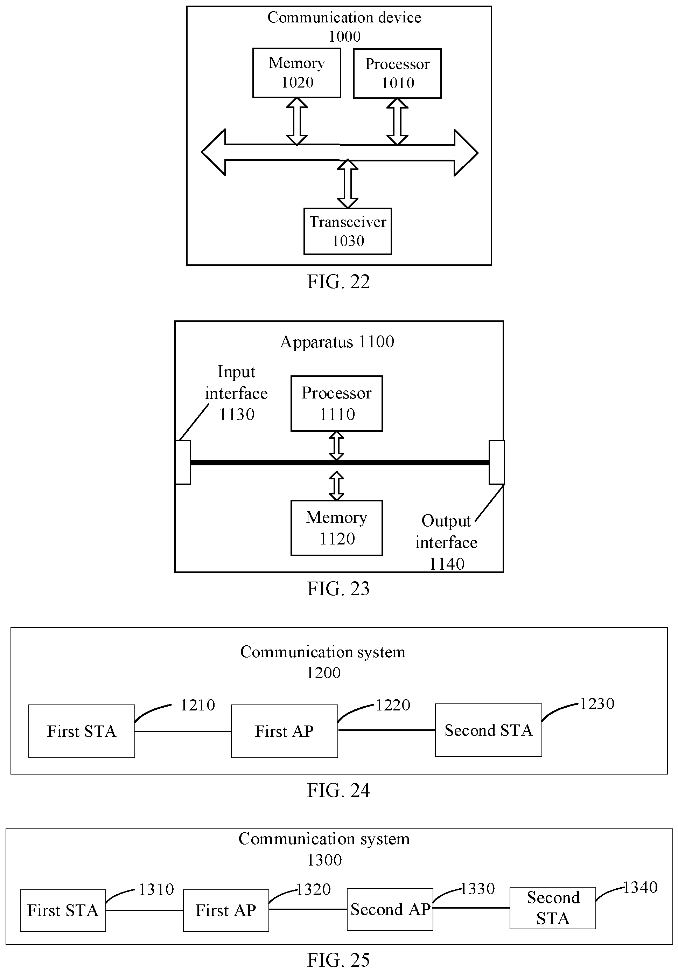

FIG. 22 is a schematic structural diagram of a communication device 1000 provided in the embodiments of the present application. The communication device 1000 shown in FIG. 22 includes a processor 1010, and the processor 1010 may invoke and execute a computer program from a memory to implement the methods in the embodiments of the present application.

In some embodiments, as shown in FIG. 22, the communication device 1000 may further include a memory 1020. Herein, the processor 1010 may invoke and execute a computer program from the memory 1020 to implement the method in the embodiments of the present application.

Herein, the memory 1020 may be a separate device independent from the processor 1010, or may also be integrated into the processor 1010.

In some embodiments, as shown in FIG. 22, the communication device 1000 may also include a transceiver 1030, and the processor 1010 may control the transceiver 1030 to communicate with other devices, and specifically, the transceiver 1030 may send information or data to other devices, or receive information or data sent by other devices.

Herein, the transceiver 1030 may include a transmitter and a receiver. The transceiver 1030 may further include antennas, and the number of antennas may be one or more.

In some embodiments, the communication device 1000 may specifically be the first STA of the embodiments of the present application, and the communication device 1000 may implement the corresponding procedure implemented by the first STA in the various methods of the embodiments of the present application, which will not be repeated here for the sake of brevity.

In some embodiments, the communication device 1000 may specifically be the first AP of the embodiments of the present application, and the communication device 1000 may implement the corresponding procedures implemented by the first AP in the various methods of the embodiments of the present application, which will not be repeated here for the sake of brevity.

In some embodiments, the communication device 1000 may specifically be the second AP of the embodiments of the present application, and the communication device 1000 may implement the corresponding procedures implemented by the second AP in the various methods of the embodiments of the present application, which will not be repeated here for the sake of brevity.

FIG. 23 is a schematic structural diagram of an apparatus of the embodiments of the present application. The apparatus 1100 shown in FIG. 23 includes a processor 1110, the processor 1110 may invoke and execute a computer program from a memory to implement the method in the embodiments of the present application.

In some embodiments, as shown in FIG. 23, the apparatus 1100 may further include a memory 1120. Herein, the processor 1110 may invoke and execute a computer program from the memory 1120 to implement the method in the embodiments of the present application.

Herein, the memory 1120 may be a separate device independent from the processor 1110, or may also be integrated into the processor 1110.

In some embodiments, the apparatus 1100 may further include an input interface 1130. Herein, the processor 1110 may control the input interface 1130 to communicate with other devices or chips, and specifically, the input interface 1130 may acquire information or data sent by other devices or chips.

In some embodiments, the apparatus 1100 may further include an output interface 1140. Herein, the processor 1110 may control the output interface 1140 to communicate with other devices or chips, and specifically, the output interface 1140 may output information or data to other devices or chips.

In some embodiments, the apparatus may be applied to the first STA in the embodiments of the present application, and the apparatus may implement the corresponding procedure implemented by the first STA in the various methods of the embodiments of the present application, which will not be repeated here for the sake of brevity.

In some embodiments, the apparatus may be applied to the first AP in the embodiments of the present application, and the apparatus may implement the corresponding procedure implemented by the first AP in the various methods of the embodiments of the present application, which will not be repeated here for the sake of brevity.

In some embodiments, the apparatus may be applied to the second AP in the embodiments of the present application, and the apparatus may implement the corresponding procedure implemented by the second AP in the various methods of the embodiments of the present application, which will not be repeated here for the sake of brevity.

In some embodiments, the apparatus mentioned in the embodiments of the present application may also be a chip. For example, it may be a system on chip, a system chip, a chip system or a system-on-chip chip, etc.

FIG. 24 is a schematic block diagram of a communication system 1200 provided in the embodiments of the present application. As shown in FIG. 24, the communication system 1200 includes a first STA 1210, a first AP 1220, and a second STA 1230.

Herein, the first STA 1210 may be used to implement the corresponding functions implemented by the first STA in the above methods, the first AP 1220 may be used to implement the corresponding functions implemented by the first AP in the above methods, and the second STA 1230 may be used to implement the corresponding functions implemented by the second STA in the above methods, which will not be repeated herein for the sake of brevity.

FIG. 25 is a schematic block diagram of a communication system 1300 provided in the embodiments of the present application. As shown in FIG. 25, the communication system 1300 includes a first STA 1310, a first AP 1320, a second AP 1330, and a second STA 1340.

Herein, the first STA 1310 may be used to implement the corresponding functions implemented by the first STA in the above methods, the first AP 1320 may be used to implement the corresponding functions implemented by the first AP in the above methods, the second AP 1330 may be used to implement the corresponding functions implemented by the second AP in the above methods, and the second STA 1340 may be used to implement the corresponding functions implemented by the second STA in the above methods, which will not be repeated herein for the sake of brevity.

It should be understood that the processor in the embodiments of the present application may be an integrated circuit chip and have a processing capability of signals. In the implementation process, various steps of the above method embodiments may be completed by an integrated logic circuit of hardware in the processor or an instruction in a software form. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present application may be implemented or performed. A general-purpose processor may be a microprocessor, or the processor may also be any conventional processor, etc. The steps of the method disclosed in combination with the embodiments of the present application may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that the memory in the embodiments of the present application may be a volatile memory or a non-volatile memory, or may include both volatile and non-volatile memories. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memory of the system and the method described herein is intended to include, but not limited to, these and any other suitable types of memories.

It should be understood that the above memory is exemplary but not limiting illustration, e.g., the memory in embodiments of the present application may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present application is intended to include, but not limited to, these and any other suitable types of memories.

The embodiments of the present application further provide a computer readable storage medium for storing a computer program.

In some embodiments, the computer readable storage medium may be applied to the first STA in the embodiments of the present application, and the computer program causes a computer to perform the corresponding procedure implemented by the first STA in the various methods of the embodiments of the present application, which will not be repeated herein for the sake of brevity.

In some embodiments, the computer readable storage medium may be applied to the first AP in the embodiments of the present application, and the computer program causes a computer to perform the corresponding procedure implemented by the first AP in the various methods of the embodiments of the present application, which will not be repeated herein for the sake of brevity.

In some embodiments, the computer readable storage medium may be applied to the second AP in the embodiments of the present application, and the computer program causes a computer to perform the corresponding procedure implemented by the second AP in the various methods of the embodiments of the present application, which will not be repeated herein for the sake of brevity.

The embodiments of the present application provide a computer program product, including computer program instructions.

In some embodiments, the computer program product may be applied to the first STA in the embodiments of the present application, and the computer program instruction causes a computer to perform the corresponding procedure implemented by the first STA in the various methods of the embodiments of the present application, which will not be repeated here for the sake of brevity.

In some embodiments, the computer program product may be applied to the first AP in the embodiments of the present application, and the computer program instruction causes a computer to perform the corresponding procedure implemented by the first AP in the various methods of the embodiments of the present application, which will not be repeated here for the sake of brevity.

In some embodiments, the computer program product may be applied to the second AP in the embodiments of the present application, and the computer program instruction causes a computer to perform the corresponding procedure implemented by the second AP in the various methods of the embodiments of the present application, which will not be repeated here for the sake of brevity.

The embodiments of the present application provide a computer program.

In some embodiments, the computer program may be applied to the first STA in the embodiments of the present application, the computer program when being executed on a computer, causes the computer to perform the corresponding procedure implemented by the first STA in various methods of the embodiments of the present application, which will not be repeated here for the sake of brevity.

In some embodiments, the computer program may be applied to the first AP in the embodiments of the present application, the computer program when being executed on a computer, causes the computer to perform the corresponding procedure implemented by the first AP in various methods of the embodiments of the present application, which will not be repeated here for the sake of brevity.

In some embodiments, the computer program may be applied to the second AP in the embodiments of the present application, the computer program when being executed on a computer, causes the computer to perform the corresponding procedure implemented by the second AP in various methods of the embodiments of the present application, which will not be repeated here for the sake of brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present application.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the application, it should be understood that the disclosed systems, apparatus, and method may be implemented in other ways. For example, the apparatus embodiments described above are only schematic, for example, division of the units is only the division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present application may be integrated into one processing unit, or the various units may exist physically separately, or two or more units may be integrated into one unit.

If the described functions are implemented in the form of a software functional unit and sold or used as an independent product, they may be stored in a computer readable storage medium. For this understanding, the technical solution of the present application essentially, or a part of the technical solution that contributes to the prior art, or a part of the technical solution, may be embodied in the form of a software product, and the computer software product is stored in a storage medium, and includes a plurality of instructions for enabling a computer device (which may be a personal computer, a server, or a network device, etc.) to perform all or some of steps of the methods described in the various embodiments of the present application. And, the storage medium mentioned above includes a USB flash drive (U disk), a mobile hard disk, a Read-Only Memory (ROM), a Random Access Memory (RAM), a diskette, or an optical disk, and various mediums that may store program codes.

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of the claims.

## Claims

1. A method for wireless communication, comprising:
generating, by a first station (STA), a first over-the-air (OTA) media access control (MAC) address according to a first secret value and a current OTA MAC address, wherein the first OTA MAC address does not belong to M OTA MAC addresses indicated by a first access point (AP), the M OTA MAC addresses are OTA MAC addresses that conflict with an OTA MAC address in an OTA MAC address list maintained by the first AP, and the first secret value is derived based on secret information shared between the first STA and the first AP, M is an integer, and M≥0; and
transmitting, by the first STA, a first frame to the first AP by using the first OTA MAC address, wherein the first frame is a management frame or a control frame, or the first frame is a data frame.

2. The method of claim 1, wherein generating, by the first STA, the first OTA MAC address according to the first secret value and the current OTA MAC address, comprises:
generating, by the first STA, a new OTA MAC address according to the first secret value and the current OTA MAC address;
in a case where the new OTA MAC address does not belong to the M OTA MAC addresses, determining, by the first STA, the new OTA MAC address as the first OTA MAC address;
in a case where the new OTA MAC address belongs to the M OTA MAC addresses, generating, by the first STA, a next OTA MAC address according to the new OTA MAC address and the first secret value, until a generated OTA MAC address does not belong to the MOTA MAC addresses, and determining, by the first STA, the generated OTA MAC address that does not belong to the MOTA MAC addresses as the first OTA MAC address.

3. The method of claim 1 or 2, further comprising:
generating, by the first STA, an initial OTA MAC address according to the first secret value and a permanent MAC address of the first STA;
in a case where the initial OTA MAC address does not belong to the M OTA MAC addresses, determining, by the first STA, the initial OTA MAC address as a first OTA MAC address;
in a case where the initial OTA MAC address belongs to the M OTA MAC addresses, generating, by the first STA, a next OTA MAC address according to the initial OTA MAC address and the first secret value, until a generated OTA MAC address does not belong to the MOTA MAC addresses, and determining, by the first STA, the generated OTA MAC address that does not belong to the MOTA MAC addresses as a first OTA MAC address.

4. The method of any one of claims 1 to 3, further comprising:
receiving, by the first STA, a first management frame transmitted by the first AP;
wherein the first management frame is used to indicate the first STA to enable an OTA MAC address, or the first management frame is used to indicate that the first STA is allowed to change an OTA MAC address for communication.

5. The method of claim 4, wherein the first management frame carries the MOTA MAC addresses indicated by the first AP.

6. The method of claim 4 or 5, wherein the first management frame comprises an OTA MAC Present field, the OTA MAC Present field is used to indicate whether there is an OTA MAC address list field in the first management frame, and the OTA MAC address list field is used to indicate the MOTA MAC addresses.

7. The method of claim 5 or 6, wherein
in a case where a value of the OTA MAC Present field indicates that there is the OTA MAC address list field in the first management frame, M≥1;
in a case where the value of the OTA MAC Present field indicates that there is no OTA MAC address list field in the first management frame, M=0.

8. The method of any one of claims 4 to 7, further comprising:
using temporarily, by the first STA, a permanent MAC address of the first STA for communication, before receiving the first management frame.

9. The method of any one of claims 4 to 7, further comprising:
receiving, by the first STA, a second management frame transmitted by the first AP;
wherein a frame format of the second management frame is the same as a frame format of the first management frame, and the second management frame is used to indicate updating an OTA MAC address indicated by the first AP that conflicts with an OTA MAC address in the OTA MAC address list maintained by the first AP.

10. The method of any one of claims 1 to 9, wherein
in a case where the first frame is the data frame, a receiving address (RA) in the first frame is a MAC address of the first AP, a transmission address (TA) in the first frame is the first OTA MAC address, and a header or a tail of a frame body of the first frame carries a permanent MAC address of a second STA, wherein the second STA is a target STA of the first frame.

11. The method of claim 10, wherein
in a case where the tail of the frame body of the first frame carries the permanent MAC address of the second STA, the permanent MAC address of the second STA occupies last m₁ octets of the frame body of the first frame, and m₁ is a positive integer.

12. The method of claim 11, wherein the permanent MAC address of the second STA is inserted into the end of the frame body of the first frame by the first STA before applying encryption and integrity protection.

13. The method of claim 10, wherein
in a case where the header of the frame body of the first frame carries the permanent MAC address of the second STA, the header of the frame body of the first frame comprises an Address Element field, and a control field in the Address Element field comprises a source address (SA) Present field and a destination address (DA) Present field, wherein a value of the SA Present field is used to indicate that there is no SA field for indicating an SA in the Address Element field, and a value of the DA Present field is used to indicate that there is a DA field for indicating a DA in the Address Element field, and the DA is the permanent MAC address of the second STA.

14. The method of claim 13, wherein
a value of a first bit in a CCMP header or GCMP header of the frame body of the first frame is used to indicate the first AP to extract the permanent MAC address of the second STA from the Address Element field of the header of the frame body of the first frame.

15. The method of claim 14, wherein the first bit occupies any bit of a third octet of the CCMP header or GCMP header, or the first bit occupies any bit of first four bits of a fourth octet of the CCMP header or GCMP header.

16. The method of any one of claims 13 to 15, wherein the permanent MAC address of the second STA is inserted into the Address Element field of the header of the frame body of the first frame by the first STA before applying encryption and integrity protection.

17. The method of any one of claims 10 to 16, wherein a value of a To distribution system field of the first frame is 1, a value of a From distribution system field of the first frame is 0, and values of an Address3 field of the first frame are all zeros, or the values of the Address3 field of the first frame are random numbers.

18. The method of any one of claims 1 to 9, wherein
in a case where the first frame is the management frame or the control frame, values of a To distribution system field and a From distribution system filed in the first frame are both 0, and a transmission address (TA) in the first frame is the first OTA MAC address, and a receiving address (RA) in the first frame is a MAC address of the first AP.

19. The method of claim 18, further comprising:
receiving, by the first STA, a second frame transmitted by the first AP, wherein a TA of the second frame is the MAC address of the first AP, and an RA of the second frame is the first OTA MAC address;
acquiring, by the first STA, a permanent MAC address of the first STA stored locally, replacing the RA of the second frame with the permanent MAC address of the first STA, and delivering the second frame after replacing the RA to an upper layer for processing.

20. The method of any one of claims 1 to 19, wherein the secret information shared between the first STA and the first AP comprises one of: a pairwise transient key (PTK), or partial information of the PTK.

21. A method for wireless communication, comprising:
receiving, by a first access point (AP), a first frame transmitted by a first station (STA) using a first over-the-air (OTA) media access control (MAC) address; and
finding, by the first AP, the first OTA MAC address in n OTA MAC addresses of the first STA comprised in an OTA MAC address list maintained by the first AP; wherein the OTA MAC address list comprises at least one OTA MAC address of at least one STA associated with the first AP, and the at least one STA comprises the first STA, and n is a positive integer;
in a case where the first AP has found the first OTA MAC address in the OTA MAC address list, continuing to process, by the first AP, the first frame; otherwise, discarding the first frame.

22. The method of claim 21, further comprising:
deleting, by the first AP from the OTA MAC address list, OTA MAC addresses located before the first OTA MAC address among the n OTA MAC addresses of the first STA;
generating, by the first AP, an OTA MAC address i according to an OTA MAC address of the first STA at the end of the OTA MAC address list and a first secret value;
in a case where the OTA MAC address i does not conflict with any OTA MAC address in the OTA MAC address list, adding, by the first AP, the OTA MAC address i into the OTA MAC address list;
in a case where the OTA MAC address i conflicts with an OTA MAC address in the OTA MAC address list, generating, by the first AP, a next OTA MAC address according to the OTA MAC address i and the first secret value, until a generated OTA MAC address does not conflict with any OTA MAC address in the OTA MAC address list, and adding, by the first AP, the generated OTA MAC address that does not conflict with any OTA MAC address in the OTA MAC address list into the OTA MAC address list; and
maintaining, by the first AP, a number of OTA MAC addresses of the first STA in the OTA MAC address list as n.

23. The method of claim 21 or 22, further comprising:
generating, by the first AP, an initial OTA MAC address according to a first secret value and a permanent MAC address of the first STA;
in a case where the initial OTA MAC address does not conflict with any OTA MAC address in the OTA MAC address list, adding, by the first AP, the initial OTA MAC address into the OTA MAC address list, and the initial OTA MAC address being a first OTA MAC address of the first STA in the OTA MAC address list; and
in a case where the initial OTA MAC address conflicts with an OTA MAC address in the OTA MAC address list, generating, by the first AP, a next OTA MAC address according to the initial OTA MAC address and the first secret value, until a generated OTA MAC address does not conflict with any OTA MAC address in the OTA MAC address list, and adding, by the first AP, the generated OTA MAC address that does not conflict with any OTA MAC address in the OTA MAC address list into the OTA MAC address list, and the newly generated OTA MAC address being an first OTA MAC address of the first STA in the OTA MAC address list.

24. The method of claim 23, further comprising:
generating, by the first AP, an OTA MAC address j according to the first secret value and the first OTA MAC address;
in a case where the OTA MAC address j does not conflict with any OTA MAC address in the OTA MAC address list, adding, by the first AP, the OTA MAC address j into the OTA MAC address list;
in a case where the OTA MAC address j conflicts with an OTA MAC address in the OTA MAC address list, generating, by the first AP, a next OTA MAC address according to the OTA MAC address j and the first secret value, until a generated OTA MAC address does not conflict with any OTA MAC address in the OTA MAC address list, and adding, by the first AP, the generated OTA MAC address that does not conflict with any OTA MAC address in the OTA MAC address list into the OTA MAC address list; and
in a case where a number of OTA MAC addresses of the first STA in the OTA MAC address list is n, completing, by the first AP, creation for OTA MAC addresses of the first STA.

25. The method of claim 23 or 24, further comprising:
transmitting, by the first AP, a first management frame to the first STA;
wherein the first management frame is used to indicate the first STA to enable an OTA MAC address, or the first management frame is used to indicate that the first STA is allowed to change an OTA MAC address for communication.

26. The method of claim 25, wherein
the first management frame carries MOTA MAC addresses indicated by the first AP that conflict with an OTA MAC address in the OTA MAC address list maintained by the first AP, M is an integer, and M≥0.

27. The method of claim 26, wherein the first management frame comprises an OTA MAC Present field, the OTA MAC Present field is used to indicate whether there is an OTA MAC address list field in the first management frame, and the OTA MAC address list field is used to indicate the MOTA MAC addresses.

28. The method of claim 26 or 27, wherein
in a case where a value of the OTA MAC Present field indicates that there is the OTA MAC address list field in the first management frame, M≥1;
in a case where the value of the OTA MAC Present field indicates that there is no OTA MAC address list field in the first management frame, M=0.

29. The method of any one of claims 25 to 28, wherein the first STA, before receiving the first management frame, temporarily uses a permanent MAC address of the first STA for communication.

30. The method of any one of claims 25 to 29, further comprising:
transmitting, by the first AP, a second management frame to the first STA;
wherein a frame format of the second management frame is the same as a frame format of the first management frame, and the second management frame is used to indicate updating an OTA MAC address indicated by the first AP that conflicts with an OTA MAC address in the OTA MAC address list maintained by the first AP.

31. The method of any one of claims 22 to 30, wherein the first secret value is derived based on secret information shared between the first STA and the first AP.

32. The method of claim 31, wherein the secret information shared between the first STA and the first AP comprises one of: a pairwise transient key (PTK), or partial information of the PTK.

33. The method of any one of claims 21 to 32, wherein
the first frame is a data frame, a receiving address (RA) in the first frame is an MAC address of the first AP, a transmission address (TA) in the first frame is the first OTA MAC address, and a header or a tail of a frame body of the first frame carries a permanent MAC address of a second STA; wherein the second STA is a target STA of the first frame, and values of an Address3 field of the first frame are all zeros, or the values of the Address3 field of the first frame are random numbers.

34. The method of claim 33, wherein
in a case where the tail of the frame body of the first frame carries the permanent MAC address of the second STA, the permanent MAC address of the second STA occupies last m₁ octets of the frame body of the first frame, and m₁ is a positive integer.

35. The method of claim 34, wherein the permanent MAC address of the second STA is inserted into the end of the frame body of the first frame by the first STA before applying encryption and integrity protection.

36. The method of claim 34 or 35, further comprising:
extracting, by the first AP, the permanent MAC address of the second STA from the last m₁ octets of the frame body of the first frame;
acquiring, by the first AP, a permanent MAC address of the first STA according to the first OTA MAC address, and acquiring, by the first AP, an OTA MAC address currently used by the second STA from the OTA MAC address list according to the permanent MAC address of the second STA; and
transmitting, by the first AP, a third frame to the second STA; wherein a transmission address (TA) in the third frame is the MAC address of the first AP, a receiving address (RA) in the third frame is the OTA MAC address currently used by the second STA, last m₁ octets of a frame body of the third frame carry the permanent MAC address of the first STA, values of an Address3 field of the third frame are all zeros, or the values of the Address3 field of the third frame are random numbers.

37. The method of claim 34 or 35, further comprising:
extracting, by the first AP, the permanent MAC address of the second STA from the last m₁ octets of the frame body of the first frame, and acquiring, by the first AP, a permanent MAC address of the first STA according to the first OTA MAC address; and
transmitting, by the first AP, a fourth frame to a second AP; wherein a TA in the fourth frame is the MAC address of the first AP, an RA in the fourth frame is an MAC address of the second AP, and values of an Address3 field and an Address4 field of the fourth frame are all zeros, or the values of the Address3 field and the Address4 field of the fourth frame are all random numbers;
wherein first m₁ octets of last 2m₁ octets of a frame body of the fourth frame carry the permanent MAC address of the second STA, and last m₁ octets of the last 2m₁ octets of the frame body of the fourth frame carry the permanent MAC address of the first STA.

38. The method of claim 33, wherein
in a case where the header of the frame body of the first frame carries the permanent MAC address of the second STA, the header of the frame body of the first frame comprises an Address Element field, and a control field in the Address Element field comprises a source address (SA) Present field and a destination address (DA) Present field, wherein a value of the SA Present field is used to indicate that there is no SA field for indicating an SA in the Address Element field, and a value of the DA Present field is used to indicate that there is a DA field for indicating a DA in the Address Element field, and the DA is the permanent MAC address of the second STA.

39. The method of claim 38, wherein
a value of a first bit in a CCMP header or GCMP header of the frame body of the first frame is used to indicate the first AP to extract the permanent MAC address of the second STA from the Address Element field of the header of the frame body of the first frame.

40. The method of claim 38 or 39, wherein the permanent MAC address of the second STA is inserted into the Address Element field of the header of the frame body of the first frame by the first STA before applying encryption and integrity protection.

41. The method of any one of claims 38 to 40, further comprising:
acquiring, by the first AP, the permanent MAC address of the second STA from the DA field in the Address Element field of the first frame;
acquiring, by the first AP, a permanent MAC address of the first STA according to the first OTA MAC address, and acquiring, by the first AP, an OTA MAC address currently used by the second STA from the OTA MAC address list according to the permanent MAC address of the second STA; and
transmitting, by the first AP, a fifth frame to the second STA; wherein a TA in the fifth frame is the MAC address of the first AP, an RA in the fifth frame is the OTA MAC address currently used by the second STA, and values of an Address3 field of the fifth frame are all zeros, or the values of the Address3 field of the fifth frame are random numbers;
wherein a header of a frame body of the fifth frame comprises an Address Element field, a control field in the Address Element field comprises an SA Present field and a DA Present field, a value of the SA Present field is used to indicate that there is an SA field for indicating an SA in the Address Element field, and a value of the DA Present field is used to indicate that there is no DA field for indicating a DA in the Address Element field, and the SA is the permanent MAC address of the first STA.

42. The method of claim 41, wherein
a value of a first bit in a CCMP header or GCMP header of the frame body of the fifth frame is used to indicate the second STA to extract the permanent MAC address of the first STA from the Address Element field in the header of the frame body of the fifth frame.

43. The method of claim 41 or 42, wherein the permanent MAC address of the first STA is inserted into the Address Element field of the header of the frame body of the fifth frame by the first AP before applying encryption and integrity protection.

44. The method of any one of claims 38 to 40, further comprising:
extracting, by the first AP, the permanent MAC address of the second STA from the Address Element field comprised in the header of the frame body of the first frame, and acquiring, by the first AP, a permanent MAC address of the first STA according to the first OTA MAC address; and
transmitting, by the first AP, a sixth frame to a second AP; wherein a TA in the sixth frame is the MAC address of the first AP, an RA in the sixth frame is an MAC address of the second AP, and values of an Address3 field and an Address4 field of the sixth frame are all zeros, or the values of the Address3 field and the Address4 field of the sixth frame are all random numbers;
wherein a header of a frame body of the sixth frame comprises an Address Element field, a control field in the Address Element field comprises an SA Present field and a DA Present field, a value of the SA Present field is used to indicate that there is an SA field for indicating an SA in the Address Element field, and a value of the DA Present field is used to indicate that there is a DA field for indicating a DA in the Address Element field, the SA is the permanent MAC address of the first STA, and the DA is the permanent MAC address of the second STA.

45. The method of claim 44, wherein
a value of a first bit in a CCMP header or GCMP header of the frame body of the sixth frame is used to indicate the second AP to extract the permanent MAC address of the first STA and the permanent MAC address of the second STA from the Address Element field in the header of the frame body of the sixth frame.

46. The method of claim 44 or 45, wherein the permanent MAC address of the first STA and the permanent MAC address of the second STA are inserted into the Address Element field of the header of the frame body of the sixth frame by the first AP before applying encryption and integrity protection.

47. The method of claim 39, 42 or 45, wherein
the first bit occupies any bit of a third octet of the CCMP header or GCMP header, or the first bit occupies any bit of first four bits of a fourth octet of the CCMP header or GCMP header.

48. The method of any one of claims 21 to 32, wherein
the first frame is a management frame or a control frame, values of a To distribution system field and a From distribution system field in the first frame are both 0, and a TA in the first frame is the first OTA MAC address, and an RA in the first frame is a MAC address of the first AP.

49. The method of claim 48, further comprising:
transmitting, by the first AP, a second frame to the first STA, wherein a TA of the second frame is the MAC address of the first AP, and a RA of the second frame is the first OTA MAC address.

50. A method for wireless communication, comprising:
receiving, by a second access point (AP), a fourth frame transmitted by a first AP;
wherein a TA in the fourth frame is a media access control (MAC) address of the first AP, a receiving address (RA) in the fourth frame is a MAC address of the second AP, values of an Address3 field and an Address4 field of the fourth frame are all zeros, or the values of the Address3 field and the Address4 field of the fourth frame are all random numbers;
wherein first m₁ octets of last 2m₁ octets of a frame body of the fourth frame carry a permanent MAC address of a second STA, and last m₁ octets of the last 2m₁ octets of the frame body of the fourth frame carry a permanent MAC address of a first STA, and m₁ is a positive integer.

51. The method of claim 50, further comprising:
extracting, by the second AP, the permanent MAC address of the first STA and the permanent MAC address of the second STA from the last 2m₁ octets of the frame body of the fourth frame;
acquiring, by the second AP, an over-the-air (OTA) MAC address currently used by the second STA from an OTA MAC address list maintained by the second AP according to the permanent MAC address of the second STA; and
transmitting, by the second AP, a seventh frame to the second STA; wherein a transmission address (TA) in the seventh frame is the MAC address of the second AP, a receiving address (RA) in the seventh frame is the OTA MAC address currently used by the second STA, last m₁ octets of a frame body of the seventh frame carry the permanent MAC address of the first STA, values of an Address3 field of the seventh frame are all zeros, or the values of the Address3 field of the seventh frame are random numbers.

52. A method for wireless communication, comprising:
receiving, by a second access point (AP), a sixth frame transmitted by a first AP;
wherein a transmission address (TA) in the sixth frame is a media access control (MAC) address of the first AP, a receiving address (RA) in the sixth frame is a MAC address of the second AP, values of an Address3 field and an Address4 field of the sixth frame are all zeros, or the values of the Address3 field and the Address4 field of the sixth frame are all random numbers;
wherein a header of a frame body of the sixth frame comprises an Address Element field, a control field in the Address Element field comprises a source address (SA) Present field and a destination address (DA) Present field, a value of the SA Present field is used to indicate that there is an SA field for indicating an SA in the Address Element field, a value of the DA Present field is used to indicate that there is a DA field for indicating a DA in the Address Element field, the SA is a permanent MAC address of a first STA, and the DA is a permanent MAC address of a second STA.

53. The method of claim 52, wherein
a value of a first bit in a CCMP header or GCMP header of the frame body of the sixth frame is used to indicate the second AP to extract the permanent MAC address of the first STA and the permanent MAC address of the second STA from the Address Element field in the header of the frame body of the sixth frame.

54. The method of claim 52 or 53, wherein the permanent MAC address of the first STA and the permanent MAC address of the second STA are inserted into the Address Element field of the header of the frame body of the sixth frame by the first AP before applying encryption and integrity protection.

55. The method of any one of claims 52 to 54, further comprising:
acquiring, by the second AP, the permanent MAC address of the first STA and the permanent MAC address of the second STA from the Address Element field comprised in the header of the frame body of the sixth frame;
acquiring, by the second AP, an over-the-air (OTA) MAC address currently used by the second STA from an OTA MAC address list maintained by the second AP according to the permanent MAC address of the second STA; and
transmitting, by the second AP, an eighth frame to the second STA; wherein a transmission address (TA) in the eighth frame is the MAC address of the second AP, a receiving address (RA) in the eighth frame is the OTA MAC address currently used by the second STA, and values of an Address3 field of the eighth frame are all zeros, or the values of the Address3 field of the eighth frame are random numbers;
wherein a header of a frame body of the eighth frame comprises an Address Element field, a control field in the Address Element field comprises an SA Present field and a DA Present field, a value of the SA Present field is used to indicate that there is an SA field for indicating an SA in the Address Element field, and a value of the DA Present field is used to indicate that there is no DA field for indicating a DA in the Address Element field, and the SA is the permanent MAC address of the first STA.

56. The method of claim 55, wherein
a value of a first bit in a CCMP header or GCMP header of the frame body of the eighth frame is used to indicate the second STA to extract the permanent MAC address of the first STA from the Address Element field of the header of the frame body of the eighth frame.

57. The method of claim 55 or 56, wherein the permanent MAC address of the first STA is inserted into the Address Element field of the header of the frame body of the eighth frame by the second AP before applying encryption and integrity protection.

58. The method of claim 53 or 56, wherein the first bit occupies any bit of a third octet of the CCMP header or GCMP header, or the first bit occupies any bit of first four bits of a fourth octet of the CCMP header or GCMP header.

59. A station (STA), wherein the STA is a first STA, and the STA comprises:
a processing unit, configured to generate a first over-the-air (OTA) media access control (MAC) address according to a first secret value and a current OTA MAC address, wherein the first OTA MAC address does not belong to MOTA MAC addresses indicated by a first access point (AP), the MOTA MAC addresses are OTA MAC addresses that conflict with an OTA MAC address in an OTA MAC address list maintained by the first AP, and the first secret value is derived based on secret information shared between the first STA and the first AP, M is an integer, and M≥0; and
a communication unit, configured to transmit a first frame to the first AP by using the first OTA MAC address, wherein the first frame is a management frame or a control frame, or the first frame is a data frame.

60. An access point (AP), wherein the AP is a first AP, and the AP comprises:
a communication unit, configured to receive a first frame transmitted by a first station (STA) using a first over-the-air (OTA) media access control (MAC) address; and
a processing unit, configured to find the first OTA MAC address in n OTA MAC addresses of the first STA comprised in an OTA MAC address list maintained by the first AP; wherein the OTA MAC address list comprises at least one OTA MAC address of at least one STA associated with the first AP, and the at least one STA comprises the first STA, and n is a positive integer;
wherein in a case where the first AP has found the first OTA MAC address in the OTA MAC address list, the processing unit is further configured to continue to process the first frame; otherwise, the processing unit is further configured to discard the first frame.

61. An access point (AP), wherein the AP is a second AP, and the AP comprises:
a communication unit, configured to receive a fourth frame transmitted by a first AP;
wherein a TA in the fourth frame is a media access control (MAC) address of the first AP, a receiving address (RA) in the fourth frame is a MAC address of the second AP, values of an Address3 field and an Address4 field of the fourth frame are all zeros, or the values of the Address3 field and the Address4 field of the fourth frame are all random numbers;
wherein first m₁ octets of last 2m₁ octets of a frame body of the fourth frame carry a permanent MAC address of a second STA, and last m₁ octets of the last 2m₁ octets of the frame body of the fourth frame carry a permanent MAC address of a first STA, and m₁ is a positive integer.

62. An access point (AP), wherein the AP is a second AP, and the AP comprises:
a communication unit, configured to receive a sixth frame transmitted by a first AP;
wherein a transmission address (TA) in the sixth frame is a media access control (MAC) address of the first AP, a receiving address (RA) in the sixth frame is a MAC address of the second AP, values of an Address3 field and an Address4 field of the sixth frame are all zeros, or the values of the Address3 field and the Address4 field of the sixth frame are all random numbers;
wherein a header of a frame body of the sixth frame comprises an Address Element field, a control field in the Address Element field comprises a source address (SA) Present field and a destination address (DA) Present field, a value of the SA Present field is used to indicate that there is an SA field for indicating an SA in the Address Element field, a value of the DA Present field is used to indicate that there is a DA field for indicating a DA in the Address Element field, the SA is a permanent MAC address of a first STA, and the DA is a permanent MAC address of a second STA.

63. A STA, comprising: a processor and a memory, wherein the memory is configured to store a computer program, and the processor is configured to invoke and execute the computer program stored in the memory, to cause the STA to perform the method of any one of claims 1 to 20.

64. An AP, comprising: a processor and a memory, wherein the memory is configured to store a computer program, and the processor is configured to invoke and execute the computer program stored in the memory, to cause the AP to perform the method of any one of claims 21 to 49, or to cause the AP to perform the method of any one of claims 50 to 51, or to cause the AP to perform the method of any one of claims 52 to 58.

65. A chip, comprising: a processor, configured to invoke and execute a computer program from a memory, to cause a device equipped with the chip to perform the method of any one of claims 1 to 20, or the method of any one of claims 21 to 49, or the method of any one of claims 50 to 51, or the method of any one of claims 52 to 58.

66. A computer readable storage medium, configured to store a computer program, wherein the computer program causes a computer to perform the method of any one of claims 1 to 20, or the method of any one of claims 21 to 49, or the method of any one of claims 50 to 51, or the method of any one of claims 52 to 58.

67. A computer program product, comprising computer program instructions, wherein the computer program instructions cause a computer to perform the method of any one of claims 1 to 20, or the method of any one of claims 21 to 49, or the method of any one of claims 50 to 51, or the method of any one of claims 52 to 58.

68. A computer program, wherein the computer program causes a computer to perform the method of any one of claims 1 to 20, or the method of any one of claims 21 to 49, or the method of any one of claims 50 to 51, or the method of any one of claims 52 to 58.
